(19) **Europäisches Patentamt / European Patent Office / Office européen des brevets**

(11) **EP 4 502 042 A1**

(12) **EUROPEAN PATENT APPLICATION**
published in accordance with Art. 153(4) EPC

(43) Date of publication:
05.02.2025 Bulletin 2025/06

(21) Application number: 23780821.7

(22) Date of filing: 30.03.2023

(51) International Patent Classification (IPC):
$C08L\ 23/08^{(2025.01)}$    $B32B\ 27/28^{(2006.01)}$
$C08K\ 3/11^{(2018.01)}$    $C08L\ 29/04^{(2006.01)}$

(52) Cooperative Patent Classification (CPC):
B32B 27/28; C08K 3/11; C08L 23/08; C08L 29/04

(86) International application number:
PCT/JP2023/013062

(87) International publication number:
WO 2023/190813 (05.10.2023 Gazette 2023/40)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 30.03.2022 JP 2022057022
30.03.2022 JP 2022057023
30.03.2022 JP 2022057024
30.03.2022 JP 2022057025
30.03.2022 JP 2022057026
30.03.2022 JP 2022057028
30.03.2022 JP 2022057030
30.03.2022 JP 2022057032
30.03.2022 JP 2022057033

(71) Applicant: Mitsubishi Chemical Corporation
Tokyo 100-8251 (JP)

(72) Inventors:
• OMIYA Takayuki
Tokyo 100-8251 (JP)
• OURA Kohei
Tokyo 100-8251 (JP)
• NAKAI Yoshihiro
Tokyo 100-8251 (JP)
• MATSUI Satoshi
Tokyo 100-8251 (JP)
• IKUBO Eri
Tokyo 100-8251 (JP)
• KISHIMOTO Yukihiro
Tokyo 100-8251 (JP)

(74) Representative: Hoffmann Eitle
Patent- und Rechtsanwälte PartmbB
Arabellastraße 30
81925 München (DE)

(54) **ETHYLENE-VINYL ALCOHOL COPOLYMER COMPOSITION, METHOD FOR PRODUCING ETHYLENE-VINYL ALCOHOL COPOLYMER COMPOSITION, PELLETS, MULTILAYER STRUCTURE AND METHOD FOR PRODUCING MULTILAYER STRUCTURE**

(57) An ethylene-vinyl alcohol copolymer composition which suppresses coloring change due to thermal degradation during melt molding is provided. An ethylene-vinyl alcohol copolymer composition contains an ethylene-vinyl alcohol copolymer and a titanium compound, wherein the amount of the titanium compound on a metal basis is 0.001 ppm or more and less than 5 ppm per mass of the ethylene-vinyl alcohol copolymer composition.

EP 4 502 042 A1

## Description

TECHNICAL FIELD

The present disclosure relates to an ethylene-vinyl alcohol copolymer composition, a method for producing an ethylene-vinyl alcohol copolymer composition, pellets, a multilayer structure, and a method for producing a multilayer structure.

BACKGROUND ART

An ethylene-vinyl alcohol copolymer (which hereinafter may be referred to as "EVOH resin") is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, the EVOH resin has a hydroxyl group relatively active in a molecule and therefore tends to be easily degraded by heat, causing a problem of coloration during melt molding.

To address the above problem, for example, WO-A-2013-146961 discloses incorporation of a particular amount of unsaturated aldehyde into an EVOH resin to suppress oxidative degradation during melt molding, thereby suppressing coloring.

SUMMARY

PROBLEMS TO BE SOLVED BY THE DISCLOSURE

Molding apparatuses tend to have higher functionality in recent years, along with diversified feed block and die designs in the molding apparatuses and various demands for higher functionality such as thinner films and the increased number of layers in a multilayer structure in a final product. Meanwhile, a resin tends to be thermally degraded in a molding apparatus having a complicated structure due to the higher functionality, causing coloring and the like to reduce productivity of products.

While the unsaturated aldehyde is used for suppressing coloring during melt molding in WO-A-2013-146961, such aldehyde compound even in a very small amount may cause an offensive odor. Particularly, there is a concern that the aldehyde compound is exposed to high temperature during melt molding and evaporates, making a working environment worse. Therefore, there is a demand for an EVOH resin composition which suppresses coloring in a melt molding process without using such volatile compound and is therefore excellent in long-run workability.

An object of the present disclosure is to provide an EVOH resin composition suppressing coloring change due to thermal degradation during melt molding.

MEANS FOR SOLVING THE PROBLEMS

Meanwhile, in view of the circumstances, the inventors of the present disclosure have found that an EVOH resin composition suppressing coloring change due to thermal degradation during melt molding, i.e. an EVOH resin composition excellent in long-run workability, can be obtained by adding a particular minute amount of a titanium compound to the EVOH resin.

Additionally, the inventors of the present disclosure have found that excellent long-run workability can be achieved by using, in addition to the titanium compound, at least one selected from the group consisting of an alkaline earth metal compound, an alkali metal compound, a lubricant, and an antioxidant, and/or by adjusting a water content of the EVOH resin composition to a specific level or less.

Furthermore, the inventors of the present disclosure have found that excellent long-run workability can be achieved and further coloration of the EVOH resin composition itself can be suppressed by using, in addition to the titanium compound, at least one selected from the group consisting of a compound having a conjugated polyene structure, a boron compound, and a styrene derivative.

Specifically, the present disclosure has the following aspects.

[1] An EVOH resin composition comprising an EVOH resin and a titanium compound, wherein an ethylene structural unit content of the EVOH resin is 20 to 60 mol%, and the amount of the titanium compound on a metal basis is 0.001 ppm or more and less than 5 ppm per mass of the EVOH resin composition.

[2] The EVOH resin composition according to [1], further comprising at least one selected from the group consisting of an alkaline earth metal compound, an alkali metal compound, a lubricant, a compound having a conjugated polyene structure, a boron compound, an antioxidant, and a styrene derivative.

[3] The EVOH resin composition according to [1], wherein the EVOH resin composition has a water content of 1% by mass or less.

[4] The EVOH resin composition according to [2], wherein the amount of the alkaline earth metal compound on a metal basis is 0.1 to 500 ppm per mass of the EVOH resin composition.

[5] The EVOH resin composition according to [2], wherein the amount of the alkali metal compound on a metal basis is 1 to 1000 ppm per mass of the EVOH resin composition.

[6] The EVOH resin composition according to [2], wherein the lubricant content is 500 ppm or less per mass of the EVOH resin composition.

[7] The EVOH resin composition according to [2], wherein the amount of the compound having a conjugated polyene structure is 1 to 1000 ppm per mass of the EVOH resin composition.

[8] The EVOH resin composition according to [2], wherein the amount of the boron compound in terms of boron equivalents is 5 to 400 ppm per mass of the EVOH resin composition.

[9] The EVOH resin composition according to [2], wherein the antioxidant content is 1 to 30000 ppm per mass of the EVOH resin composition.

[10] The EVOH resin composition according to [2], wherein the amount of the styrene derivative is 1 to 1000 ppm per mass of the EVOH resin composition.

[11] A method for producing the EVOH resin composition according to any one of [1] to [10], comprising melt-mixing a raw material of the EVOH resin composition.

[12] Pellets comprising the EVOH resin composition according to any one of [1] to [10].

[13] A multilayer structure comprising at least one layer comprising the EVOH resin composition according to any one of [1] to [10].

[14] A method for producing the multilayer structure according to [13], comprising melt-molding a layer comprising the EVOH resin composition.

EFFECTS OF THE DISCLOSURE

The EVOH resin composition according to the present disclosure containing a particular amount of a titanium compound suppresses coloring change of an EVOH resin during melt molding and is excellent in long-run workability.

Additionally, the EVOH resin composition according to the present disclosure contains, in addition to the titanium compound, at least one selected from the group consisting of an alkaline earth metal compound, an alkali metal compound, a lubricant, and an antioxidant, and/or has a water content of a specific value or less, thereby achieving superior long-run workability.

Furthermore, the EVOH resin composition according to the present disclosure, which contains, in addition to the titanium compound, at least one selected from the group consisting of a compound having a conjugated polyene structure, a boron compound, and a styrene derivative, is excellent in long-run workability and further suppresses coloration of the EVOH resin composition itself.

EMBODIMENTS OF THE DISCLOSURE

Hereinafter the present disclosure will be described more specifically based on exemplary embodiments of the present disclosure. However, the present disclosure is not limited to these embodiments.

In the present disclosure, the expression "X to Y" (X and Y are given numbers) is intended to encompass "preferably greater than X" or "preferably less than Y" unless otherwise specified, in addition to the meaning of "X or more and Y or less".

Further, the expression "X or more" (X is a given number) or "Y or less" (Y is a given number) is intended to encompass the meaning "preferably more than X" or "preferably less than Y".

In the present disclosure, the expression "x and/or y" (x and y are each a given configuration or component) is intended to mean the following three meanings: only x; only y; and x and y.

The EVOH resin composition according to the present disclosure has a "first aspect" comprising an EVOH resin and a particular minute amount of a titanium compound, a "second aspect" further comprising an alkaline earth metal compound, a "third aspect" comprising an alkali metal compound, a "fourth aspect" comprising a lubricant, a "fifth aspect" comprising a compound having a conjugated polyene structure, a "sixth aspect" comprising a boron compound, a "seventh aspect" comprising an antioxidant, an "eighth aspect" comprising a styrene derivative, and a "ninth aspect" wherein the EVOH resin composition has a water content of 1% by mass or less. Hereinafter, each aspect will be described.

<<First Aspect>>

<EVOH Resin Composition>

An EVOH resin composition according to one embodiment of the present disclosure (hereinafter referred to as "the present EVOH resin composition") contains an EVOH resin as a main component and a particular minute amount of a titanium compound.

Specifically, the present disclosure has the following aspects.

[1-1] An EVOH resin composition comprising an EVOH resin and a titanium compound, wherein the amount of the titanium compound on a metal basis is 0.001 ppm or more and less than 5 ppm per mass of the EVOH resin composition.

[1-2] Pellets comprising the EVOH resin composition according to [1-1].

[1-3] A multilayer structure comprising at least one layer comprising the EVOH resin composition according to [1-1].

[1-4] A method for producing the EVOH resin composition according to [1-1], comprising melt-mixing a composition raw material containing the EVOH resin and a titanium compound.

[1-5] A method for producing the multilayer structure according to [1-3], comprising melt-molding a layer comprising the EVOH resin composition.

Furthermore, the present EVOH resin composition contains the EVOH resin as a base resin, where the amount of the EVOH resin in the present EVOH resin composition is typically 70% by mass or more, preferably 80% by mass or more, more preferably 90% by mass or more, and particularly preferably 95% by mass or more.

Each component will be described below.

[EVOH Resin]

The EVOH resin used in the present disclosure is a waterinsoluble thermoplastic resin typically obtained by saponifying an ethylene-vinyl ester copolymer which is a copolymer of ethylene and a vinyl ester monomer.

Vinyl acetate is typically used as the vinyl ester monomer in view of its good commercial availability and efficiency in treating impurities during production. Examples of the vinyl ester monomer other than vinyl acetate include: aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate; and aromatic vinyl esters such as vinyl benzoate. Generally used is an aliphatic vinyl ester having 3 to 20 carbon atoms, preferably 4 to 10 carbon atoms, and particularly preferably 4 to 7 carbon atoms. Although these are generally used alone, a plurality of kinds thereof may be simultaneously used as necessary.

Copolymerization of the ethylene and the vinyl ester monomer can be performed using any known polymerization method, for example, solution polymerization, suspension polymerization, emulsion polymerization, or the like. Generally used is the solution polymerization using methanol as a solvent. Saponification of the ethylene-vinyl ester copolymer to be obtained can also be performed using a known method.

The EVOH resin produced in this manner mainly contains an ethylene-derived structural unit and a vinyl alcohol structural unit, and contains a small amount of a vinyl ester structural unit that remains unsaponified.

An ethylene structural unit content in the EVOH resin is 20 to 60 mol%, preferably 25 to 50 mol%, and particularly preferably 25 to 35 mol%. The ethylene structural unit content can be controlled by the pressure of ethylene in the copolymerization of the vinyl ester monomer and the ethylene. If the content is too low, gas barrier properties in high humidity and melt moldability tend to be reduced, whereas if the content is too high, the gas barrier properties tend to be reduced.

Note that the ethylene structural unit content can be measured in conformity with ISO14663.

A saponification degree in the EVOH resin is typically 90 to 100 mol%, preferably 95 to 100 mol%, and particularly preferably 99 to 100 mol%. The saponification degree can be controlled by the amount of a saponification catalyst (an alkaline catalyst such as sodium hydroxide is typically used), temperature, time, etc. when saponifying the ethylene-vinyl ester copolymer. If the saponification degree is too low, the gas barrier properties, thermal stability, moisture resistance, and the like tend to be decreased.

The saponification degree in the EVOH resin can be measured in conformity with JIS K6726 (where a solution for use is obtained by homogenously dissolving the EVOH resin in a water/methanol solvent).

A melt flow rate (MFR) (at 210°C with a load of 2160 g) in the EVOH resin is typically 0.5 to 100 g/10 min, preferably 1 to 50 g/10 min, and particularly preferably 3 to 35 g/10 min. If the MFR is too high, stability during film forming tends to be impaired, whereas if the MFR is too low, viscosity tends to become so high that melt extrusion becomes difficult.

The MFR is an index of a polymerization degree of the EVOH resin, and can be adjusted by the amount of a polymerization initiator and the amount of a solvent upon copolymerizing the ethylene and the vinyl ester monomer.

Additionally, the EVOH resin may further contain a structural unit derived from any of the following comonomers in a range that does not impair the effects of the present disclosure (for example, 10 mol% or less of the EVOH resin).

Examples of the comonomers include: olefins such as propylene, 1-butene, and isobutene; hydroxyl-containing $\alpha$-olefins such as 3-butene-1-ol, 3-butene-1,2-diol, 4-penten-1-ol, and 5-hexen-1,2-diol, and derivatives including esterification products and acylation products of these $\alpha$-olefins; hydroxyalkyl vinylidenes such as 2-methylenepropane-1,3-diol and 3-methylenepentane-1,5-diol; hydroxyalkyl vinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), or salts thereof, or mono- or di-alkyl esters thereof each including a C1 to C18 alkyl group; acrylamide and analogues thereof such as N-alkylacrylamide including a C1 to C18 alkyl group, N,N-dimethylacrylamide, 2-acrylamidopropanesulfonic acid or a salt thereof, and acrylamidopropyldimethylamine or an acid salt or a quaternary salt thereof; methacrylamide and analogues thereof such as N-alkylmethacrylamide including a C1 to C18 alkyl group, N,N-dimethyl methacrylamide, 2-methacrylamidopropanesulfonic acid or a salt thereof, and methacrylamidopropyldimethylamine or an acid salt or a quaternary salt thereof; N-vinylamides such as N-vinylpyrrolidone, N-vinylformamide, and N-vinylacetamide; vinyl cyanides such as acrylnitrile and methacrylnitrile; vinyl ethers such as alkyl vinyl ethers each including a C1 to C18 alkyl group, hydroxyalkyl vinyl ethers, and alkoxyalkyl vinyl ethers; vinyl halide compounds such as vinyl chloride, vinylidene chloride, vinyl fluoride, vinylidene fluoride, and vinyl bromide; vinylsilanes such as trimethoxy vinyl silane; allyl halide compounds such as allyl acetate and allyl chloride; allyl alcohols such as allyl alcohol and dimethoxyallyl alcohol; trimethyl-(3-acrylamido-3-dimethylpropyl)-ammonium chloride, and acrylamido-2-methylpropanesulfonic acid. These can be used alone or in combination of two or more.

Among these, hydroxyl-containing $\alpha$-olefins are preferred. Especially, 3-butene-1,2-diol and 5-hexene-1,2-diol are preferred. When the hydroxyl-containing $\alpha$-olefins are copolymerized, the EVOH resin to be obtained will have a primary hydroxyl group in its side chain. Such EVOH resin having a primary hydroxyl group in the side chain, especially an EVOH resin having a 1,2-diol structure in its side chain is preferred in view of favorable secondary formability with gas barrier properties maintained.

When the EVOH resin has a primary hydroxyl group in its side chain, the amount of a structural unit derived from a monomer having the primary hydroxyl group is typically 0.1 to 20 mol%, preferably 0.5 to 15 mol%, and particularly preferably 1 to 10 mol% of the EVOH resin.

Further, a "post-modified" EVOH resin such as an esterified, urethane-modified, acetalized, cyanoethylated, or oxyalkylenated EVOH resin can also be used as the EVOH resin.

When the post-modified EVOH resin is used, a modification rate thereof is typically 10 mol% or less, preferably 4 mol% or less. If the modification rate in the EVOH resin is too high, thermal degradation tends to be easily caused, resulting in reduced long-run workability.

Furthermore, the EVOH resin may be a mixture of EVOH resins each having a different ethylene structural unit content, saponification degree, polymerization degree, copolymer component, or the like from each other.


[Titanium Compound]

Examples of the titanium compound include inorganic titanium compounds and organic titanium compounds. Note that the titanium compound may be used alone or in combination of two or more. Among these, inorganic titanium compounds are preferred.

Examples of the inorganic titanium compounds include titanium oxides, titanium hydroxides, titanium chlorides, and inorganic salts of titanium.

Examples of the titanium oxides include titanium(II) oxide, titanium(III) oxide, titanium(IV) oxide, and titanium suboxide.

Examples of the titanium hydroxides include titanous hydroxide and titanic hydroxide.

Examples of the titanium chlorides include titanous chloride and titanic chloride.

Examples of the inorganic salts of titanium include titanium phosphate and titanium sulphate.

Among these, titanium oxides are preferred, titanium(IV) oxide is more preferred, and rutile titanium(IV) oxide is particularly preferred.

Examples of the organic titanium compounds include titanium carboxylates such as titanium acetate, titanium butyrate, and titanium stearate.

Note that the titanium compound may be present as a titanium compound, or in an ionized form or a complex interacting with the EVOH resin or other ligands, in the EVOH resin composition.

The titanium compound has an average particle diameter of typically 0.001 to 100 $\mu$m, preferably 0.01 to 50 $\mu$m, and more preferably 0.015 to 20 $\mu$m. When the average particle diameter of the titanium compound is within the above range, a suppression effect on coloring tends to be excellent.

The amount of the titanium compound on a metal basis is 0.001 ppm or more and less than 5 ppm per mass of the EVOH resin composition. It is preferably 0.01 to 3 ppm, more preferably 0.03 to 1 ppm, and particularly preferably 0.05 to 0.5 ppm. When the amount of the titanium compound on a metal basis is within the above range, coloring change due to thermal degradation during melt molding can be suppressed, thereby achieving excellent long-run workability. Additionally, if the amount of the titanium compound on a metal basis is too small, a suppression effect on coloring change is reduced, whereas if the amount on a metal basis is too large, thermal decomposition of the EVOH resin easily occurs to cause coloring.

The amount of the titanium compound on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

Generally, an EVOH resin is colored due to thermal degradation. This is presumably because the EVOH resin is degraded by heat to generate a radical, which dehydrates a hydroxyl group contained in the EVOH resin to generate a double bond in a main chain of the EVOH resin; then, this site serves as a reaction starting point to further promote dehydration to form a conjugated polyene structure in the main chain of the EVOH resin.

On the contrary, the present EVOH resin composition contains a particular minute amount of the titanium compound, such that coloring change due to thermal degradation of the EVOH resin is suppressed, achieving excellent long-run workability.

It is generally considered that when an EVOH resin composition contains a titanium compound, the EVOH resin composition is colored due to titanium ions; therefore, avoiding the use of a titanium compound is common general technical knowledge for a person skilled in the art. However, in the present disclosure, it has been found that when using a particular minute amount of the titanium compound, it is possible to produce an EVOH resin composition which suppresses coloring change due to thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents formation of the polyene structure.

[Other Thermoplastic Resins]

The present EVOH resin composition can contain a thermoplastic resin(s) other than the EVOH resin in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. Examples of the additives that may be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, and fatty acid esters and metal salts thereof, polyvalent phenols such as gallic acid and hydroxyl-containing phenolic aldehyde resins, terpene compounds, blends of tertiary hydrogen-containing resins and transition metals (e.g., combination of polypropylene and cobalt), blends of carbon-carbon unsaturated bond-containing resins and transition metals (e.g., combination of polybutadiene and cobalt), photo-oxidative degradable resins (e.g., polyketone), anthraquinone polymers (e.g., polyvinylanthraquinone), and polymer oxygen absorbers obtained by adding photoinitiators (e.g., benzophenone), other antioxidants, and deodorants (e.g., activated carbon) to these blends], heat stabilizers, photostabilizers, ultraviolet absorbers, colorants, antistatic agents, surfactants (except those used as lubricants), antimicrobial agents, antiblocking agents, and fillers (e.g., inorganic fillers). These compounds can be used alone or in combination of two or more.

[Method for Producing EVOH Resin Composition]

The present EVOH resin composition can be produced, for example, by mixing the EVOH resin and the titanium compound by any known method, for example, a dry blending method, melt mixing method, solution mixing method, or impregnation method. Among these, it is preferable that the present EVOH resin composition is produced by a method including melt-mixing a composition raw material containing the EVOH resin and the titanium compound. Furthermore, these production methods can optionally be combined.

An example of the dry blending method is a method (i) in which the pelletized EVOH resin and the titanium compound are dry-blended by using a tumbler or the like.

Examples of the melt mixing method include: a method (ii) in which the pelletized EVOH resin is dry-blended with the titanium compound and the resulting dry blend is melt-kneaded; and a method (iii) in which the titanium compound is added to and melt-kneaded with the molten EVOH resin.

Examples of the solution mixing method include: a method (iv) in which the titanium compound is added to a solution prepared by using a commercially available EVOH resin, the resultant is solidified and molded, and thereafter the solids are separated from liquid in a known manner and dried; and a method (v) in which the titanium compound is incorporated into an ethylene-vinyl ester copolymer solution or a homogeneous solution (water/alcohol solution or the like) of the EVOH resin before saponification in the production process of the EVOH resin, the resultant is solidified and molded, and thereafter the solids are separated from liquid in a known manner and dried.

An example of the impregnation method is a method (vi) in which the pelletized EVOH resin is brought into contact with an aqueous solution containing the titanium compound to incorporate the titanium compound into the EVOH resin, and then the resultant is dried.

Usable as the aqueous solution containing the titanium compound is an aqueous solution of the titanium compound or an elution of titanium ions obtained by immersing the titanium compound in water containing various chemicals.

Note that in the impregnation method, the amount (on a metal basis) of the titanium compound can be controlled by a concentration of the titanium compound in the aqueous solution in which the EVOH resin is immersed, immersion temperature, immersion time, and the like.

The immersion time is typically 0.5 to 48 hours, preferably 1 to 36 hours, and the immersion temperature is typically 10 to 40°C, preferably 20 to 35°C.

Various drying methods can be employed as the drying method in the respective production methods, that may be either a stationary drying method or a fluidized drying method. These can also be used in combination.

As described above, the above different methods can be combined in the present disclosure. Among these, the melt mixing method, particularly the method (ii) is preferred in view of productivity and ability to obtain a resin composition with more remarkable effects of the present disclosure. Additionally, when the other thermoplastic resin(s) or other additives are used, they may be blended in a usual manner in accordance with the production methods.

The present EVOH resin composition produced by the respective production methods is in any form, preferably in a form of pellets.

For example, the pellets each have spherical shape, oval shape, cylindrical shape, cubic shape, square prism shape, or the like, and typically have the oval shape or cylindrical shape. In view of convenience to subsequently use the pellets as a molding material, the oval shape has a minor diameter of typically 1 to 10 mm, preferably 2 to 6 mm, and even more preferably 2.5 to 5.5 mm; and a major diameter of typically 1.5 to 30 mm, preferably 3 to 20 mm, and even more preferably 3.5 to 10 mm. Additionally, the cylindrical shape has a bottom diameter of typically 1 to 6 mm, preferably 2 to 5 mm, and a length of typically 1 to 6 mm, preferably 2 to 5 mm.

Furthermore, the pelletized EVOH resin used in the respective production methods preferably has similar shape and size.

Even when the present EVOH resin composition is heated during melt molding, coloring change is suppressed and the long-run workability is excellent. A ratio of a YI (yellowness index) value after heating to a YI value before heating (YI value after heating/YI value before heating) is typically 4.5 or less, preferably 4.2 or less, and particularly preferably 3.9 or less. When the ratio of the YI value after heating to the YI value before heating is within the above range, coloring can be further suppressed. Incidentally, when the ratio of the YI value after heating to the YI value before heating is greater than 4.8, it is determined as heavily colored due to thermal degradation and not preferable. Note that the lower limit of the ratio of the YI value after heating to the YI value before heating is typically 1.

The YI value before heating can be determined by measuring the present EVOH resin composition pulverized into a 1 to 5 mm square and fully filled in a cylinder with an inner diameter of 32 mm and a height of 30 mm, by using a spectrocolorimeter SE6000 (available from Nippon Denshoku Industries Co., Ltd.).

Additionally, the YI value after heating can be determined by measuring the present EVOH resin composition pulverized into a 1 to 5 mm square and heated in an oven under the air atmosphere at 150°C for 5 hours in the same manner.

The present EVOH resin composition has a water content of typically 0.01 to 0.5% by mass, preferably 0.05 to 0.35% by mass, and particularly preferably 0.1 to 0.3% by mass.

Note that the water content of the present EVOH resin composition is measured and calculated by the following method.

The mass before drying ($W_1$) of the present EVOH resin composition is measured by an electronic balance. The mass ($W_2$)

$$\text{Water content (\% by mass)} = [(W_1 - W_2)/W_1] \times 100$$

after drying in a hot air dryer at 150°C for 5 hours and cooling in a desiccator for 30 minutes is measured, and the water content is calculated by the following expression.

Furthermore, when the present EVOH resin composition is in a form of pellets, a known lubricant is also preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene biserucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition obtained in this manner is prepared in various forms such as pellets, powder, and liquid, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic or aliphatic polyketones. These can be used alone or in combination of two or more.

Among these, polyamide resins, polyolefin resins, polyester resins, and polystyrene resins are preferred, which are hydrophobic resins. Polyethylene resins, polypropylene resins, polycycloolefin resins, and unsaturated carboxyl-modified polyolefin resins obtained by modifying these polyolefins are more preferred.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the present multilayer structure. The total number of layers in the present multilayer structure is typically 2 to 15, preferably 3 to 10. In the above layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these methods, preferred is a production method including a melt-molding the present EVOH resin composition layer, specifically the coextrusion method, in consideration of costs and environmental concerns.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40 to 170°C, preferably about 60 to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the above heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottleshaped multilayer container (laminate structure) is produced from a multilayer parison (a hollow tubular preform before blowing), a blow molding process is employed. Specific examples thereof include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging containers for general foods, condiments such as mayonnaise and dressing, fermented foods such as miso, oil and fat foods such as salad oil, beverages, cosmetics, and pharmaceutical products.

<<Second Aspect>>

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, the EVOH resin has a hydroxyl group relatively active in a molecule and therefore tends to be easily degraded by heat, causing a problem of coloration during melt molding.

To address the above problem, for example, JP-A-H11-106592 discloses a resin composition containing an EVOH resin (A), acetic acid (B), and magnesium acetate and/or calcium acetate (C), wherein the amount of (B) is 0.05 parts by weight or less relative to 100 parts by weight of (A), and the amount of (C) on a metal basis is 0.001 to 0.02 parts by weight relative to 100 parts by weight of (A). It discloses that using this resin composition can provide a molded article excellent in long-run workability in melt molding, hardly causing fish eyes, striation, or coloring, thus excellent in appearance; furthermore, even when the molded article is processed into a laminate, odor emanation is reduced and the laminate is excellent in interlayer adhesion even after a secondary process such as stretching and deep drawing.

The technique disclosed in JP-A-H11-106592 results in a molded article excellent in long-run workability in melt molding, hardly causing fish eyes, striation, or coloring, thus excellent in appearance. However, molding apparatuses tend to have higher functionality in recent years, along with diversified feed block and die designs in the molding apparatuses and various demands for higher functionality such as thinner films and the increased number of layers in a multilayer structure in a final product. Accordingly, a resin tends to be thermally degraded in a molding apparatus having a complicated structure due to the higher functionality, causing coloring and the like to reduce productivity (long-run workability) of products. This leads to a demand for further improvement.

The present disclosure provides an EVOH resin composition suppressing coloring change of an EVOH resin during heating in melt molding and the like.

[Means for Solving the Problems]

Meanwhile, in view of the circumstances, the inventors of the present disclosure have found that an EVOH resin composition suppressing coloring change of an EVOH resin during heating in melt molding and the like can be obtained by adding an alkaline earth metal compound and a particular minute amount of a titanium compound to the EVOH resin.

Specifically, the present disclosure has the following aspects.

[2-1] An EVOH resin composition comprising an EVOH resin, an alkaline earth metal compound, and a titanium compound, wherein the amount of the titanium compound on a metal basis is 0.001 ppm or more and less than 5 ppm per mass of the EVOH resin composition.

[2-2] The EVOH resin composition according to [2-1], wherein the amount of the alkaline earth metal compound on a metal basis is 0.1 to 500 ppm per mass of the EVOH resin composition.

[2-3] The EVOH resin composition according to [2-1] or [2-2], wherein a mass ratio of the amount of the alkaline earth metal compound on a metal basis to the amount of the titanium compound on a metal bass is 0.02 to 500000.

[2-4] Pellets comprising the EVOH resin composition according to any one of [2-1] to [2-3].

[2-5] A multilayer structure comprising at least one layer comprising the EVOH resin composition according to any one of [2-1] to [2-3].

[2-6] A method for producing the EVOH resin composition according to any one of [2-1] to [2-3], comprising melt-mixing a composition raw material containing the EVOH resin and a titanium compound.

[2-7] A method for producing the multilayer structure according to [2-5], comprising melt-molding a layer comprising the EVOH resin composition.

[Effects of the Disclosure]

The EVOH resin composition according to the present disclosure suppresses coloring change of an EVOH resin during melt molding, and is excellent in long-run workability.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin as a main component, an alkaline earth metal compound, and a particular minute amount of a titanium compound.

Specifically, the present EVOH resin composition contains the EVOH resin as a base resin, where the amount of the EVOH resin in the present EVOH resin composition is typically 70% by mass or more, preferably 80% by mass or more, more preferably 90% by mass or more, and particularly preferably 95% by mass or more.

Each component will be described below.

[EVOH Resin]

The EVOH resin used in the present disclosure is a resin typically obtained by saponifying an ethylene-vinyl ester copolymer which is a copolymer of ethylene and a vinyl ester monomer, and the same as those described in the first aspect can be used as the EVOH resin.

[Alkaline Earth Metal Compound]

Examples of the alkaline earth metal compound include alkaline earth metal salts, alkaline earth metal oxides, alkaline earth metal hydroxides, and the like. These may be used alone or in combination of two or more. Among these, alkaline earth metal salts and alkaline earth metal oxides are preferred in view of economic efficiency and dispersibility, and particularly the alkaline earth metal oxides are preferred.

Examples of the alkaline earth metal salts include alkaline earth metal inorganic salts, alkaline earth metal carboxylates, and the like.

Examples of the alkaline earth metal inorganic salts include carbonates, hydrogen carbonates, phosphates, borates, sulfates, chloride salts, and the like of alkaline earth metals.

Examples of the alkaline earth metal carboxylates include saturated or unsaturated carboxylates having 2 to 25 carbon atoms, preferably 2 to 22 carbon atoms, and particularly preferably 6 to 20 carbon atoms, specifically, monocarboxylates such as acetate, butyrate, propionate, enanthate, caprate, laurate, palmitate, stearate, 12-hydroxystearate, behenate, and montanate, and dicarboxylates such as oxalate, malonate, succinate, adipate, suberate, and sebacate. Among these, linear saturated carboxylates are preferred in view of commercial availability, and monocarboxylates are more preferred.

Examples of alkaline earth metal species for the alkaline earth metal compound include beryllium, magnesium, calcium, strontium, barium, and radium. Among these, magnesium and calcium are preferred in view of commercial availability and economic efficiency, and particularly the magnesium is preferred.

Particularly, magnesium oxides are preferable as the alkaline earth metal compound. Additionally, the alkaline earth metal compound preferably excludes layered inorganic compounds such as montmorillonite and double salts such as hydrotalcite in view of economic efficiency and dispersibility.

Furthermore, the alkaline earth metal compound can be used in any form, for example, solid (powder, fine powder, or flakes), semisolid, liquid, paste, solution, emulsion (aqueous dispersion), or the like. Among these, the powder form is preferred.

The amount of the alkaline earth metal compound is typically 0.1 to 1000 ppm, preferably 1 to 800 ppm, further preferably 5 to 500 ppm, and particularly preferably 10 to 200 ppm per mass of the EVOH resin composition.

If the amount of the alkaline earth metal compound is too large, thermal stability tends to be reduced, whereas if the amount is too small, formability of the EVOH resin composition tends to be reduced.

The amount of the alkaline earth metal compound on a metal basis is preferably 0.1 to 500 ppm, more preferably 0.5 to 300 ppm, further preferably 1 to 200 ppm, particularly preferably 2 to 150 ppm, especially preferably 3 to 80 ppm, and the most preferably 5 to 40 ppm per mass of the EVOH resin composition.

If the amount of the alkaline earth metal compound on a metal basis is too large, thermal stability tends to be reduced, whereas if the amount is too small, formability of the EVOH resin composition tends to be reduced.

Note that the amount of the alkaline earth metal compound on a metal basis can be measured, for example, by an atomic absorption photometer using a certain volume of a test liquid prepared by adding pure water to a solution of the present EVOH resin composition which is ashed by heating and treated with acid such as hydrochloric acid.

[Titanium Compound]

Examples of the titanium compound include inorganic titanium compounds and organic titanium compounds. Note that the same as those described in the first aspect can be used as the titanium compound.

The amount of the titanium compound on a metal basis is 0.001 ppm or more and less than 5 ppm per mass of the EVOH resin composition. It is preferably 0.01 to 3 ppm, more preferably 0.03 to 1 ppm, and particularly preferably 0.05 to 0.5 ppm. When the amount of the titanium compound on a metal basis is within the above range, coloring change due to thermal degradation during melt molding can be suppressed, thereby achieving excellent long-run workability. Additionally, if the amount of the titanium compound on a metal basis is too small, a suppression effect on coloring change is reduced, whereas if the amount on a metal basis is too large, thermal decomposition of the EVOH resin easily occurs to cause coloring.

The amount of the titanium compound on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

A mass ratio of the amount of the alkaline earth metal compound to the amount of the titanium compound on a metal basis is typically 0.06 to 180000, preferably 2 to 36000, particularly preferably 7 to 15000, especially preferably 15 to 1500, and the most preferably 100 to 800.

If the mass ratio is within the above range, coloring change due to thermal degradation can be further prevented.

A mass ratio of the amount of the alkaline earth metal compound on a metal basis to the amount of the titanium compound on a metal basis is preferably 0.02 to 500000, further preferably 0.03 to 50000, yet further preferably 0.5 to 10000, particularly preferably 2 to 4000, especially preferably 9 to 1000, and the most preferably 50 to 500.

If the mass ratio is within the above range, coloring change due to thermal degradation can be further prevented. Additionally, if the mass ratio is too high, thermal stability tends to be reduced, whereas if the mass ratio is too low, a molded article tends to be colored.

It is generally known that an EVOH resin blended with an alkaline earth metal compound exhibits a tendency to lower viscosity over time during heating. Although the mechanism thereof is not clear, this is presumably because the EVOH resin composition is made basic by blending the alkaline earth metal compound, and any anion serves as a nucleophile to remove hydrogen bonded to a main chain carbon of the EVOH resin, or the like, thereby causing decomposition reaction of the main chain to cut the main chain of the EVOH resin. Coloring change of the EVOH resin after heating is presumably because a double bond structure is created in the main chain of the EVOH resin during the above reaction, and such structure serves as a reaction starting point again to cause dehydration reaction and the like to form a polyene structure in the main chain of the EVOH resin.

On the contrary, the present EVOH resin composition contains the alkaline earth metal compound and a particular minute amount of the titanium compound, such that coloring change due to thermal degradation of the EVOH resin is suppressed.

It is generally considered that when an EVOH resin composition contains a titanium compound, the EVOH resin composition is colored due to titanium ions; therefore, avoiding the use of a titanium compound is common general technical knowledge for a person skilled in the art. However, in the present disclosure, it has been found that when using a particular minute amount of the titanium compound, it is possible to produce an EVOH resin composition which suppresses coloring change due to thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents formation of the polyene structure.

On the other hand, if the amount of the titanium compound is too large, the titanium is considered to cause thermal decomposition of the EVOH resin, resulting in coloring.

[Other Thermoplastic Resins]

The present EVOH resin composition can contain a thermoplastic resin(s) other than the EVOH resin in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. The same additives as described in the first aspect can be used as the above additives.

[Method for Producing EVOH Resin Composition]

The present EVOH resin composition can be produced by mixing the EVOH resin, the alkaline earth metal compound, and the titanium compound by any known method, for example, a dry blending method, melt mixing method, solution mixing method, or impregnation method. Among these, it is preferable that the present EVOH resin composition is produced by a method including melt-mixing a composition raw material containing the EVOH resin and the titanium compound. Furthermore, these production methods can optionally be combined.

An example of the dry blending method is a method (i) in which the pelletized EVOH resin is dry-blended with the alkaline earth metal compound and/or the titanium compound by using a tumbler or the like.

Examples of the melt mixing method include: a method (ii) in which the pelletized EVOH resin is dry-blended with the alkaline earth metal compound and/or the titanium compound and the resulting dry blend is melt-kneaded; and a method (iii) in which the alkaline earth metal compound and/or the titanium compound is added to and melt-kneaded with the molten EVOH resin.

Examples of the solution mixing method include: a method (iv) in which the alkaline earth metal compound and/or the titanium compound is added to a solution prepared by using a commercially available EVOH resin, the resultant is solidified and molded, and thereafter the solids are separated from liquid in a known manner and dried; and a method (v) in which the alkaline earth metal compound and/or the titanium compound is incorporated into an ethylene-vinyl ester copolymer solution or a homogeneous solution (water/alcohol solution or the like) of the EVOH resin before saponification in the production process of the EVOH resin, the resultant is solidified and molded, and thereafter the solids are separated from liquid in a known manner and dried.

An example of the impregnation method is a method (vi) in which the pelletized EVOH resin is brought into contact with an aqueous solution containing the alkaline earth metal compound and/or the titanium compound to incorporate the alkaline earth metal compound and/or the titanium compound into the EVOH resin, and then the resultant is dried.

Usable as the aqueous solution containing the titanium compound is an aqueous solution of the titanium compound or an elution of titanium ions obtained by immersing the titanium compound in water containing various chemicals.

Note that in the impregnation method, the amount (on a metal basis) of the alkaline earth metal compound or the titanium compound can be controlled by a concentration of the alkaline earth metal compound or the titanium compound in the aqueous solution in which the EVOH resin is immersed, immersion temperature, immersion time, and the like.

The immersion time is typically 0.5 to 48 hours, preferably 1 to 36 hours, and the immersion temperature is typically 10 to 40°C, preferably 20 to 35°C.

Various drying methods can be employed as the drying method in the respective production methods, that may be either a stationary drying method or a fluidized drying method. These can also be used in combination.

As described above, the above different methods can be combined in the present disclosure. Among these, the melt mixing method, particularly the method (ii) is preferred in view of productivity and ability to obtain a resin composition with more remarkable effects of the present disclosure. Additionally, when the other thermoplastic resin(s) or other additives are used, they may be blended in a usual manner in accordance with the above production methods.

The present EVOH resin composition produced by the respective production methods is in any form, preferably in a form of pellets.

For example, the pellets each have spherical shape, oval shape, cylindrical shape, cubic shape, square prism shape, or the like, and typically have the oval shape or cylindrical shape. In view of convenience to subsequently use the pellets as a molding material, the oval shape has a minor diameter of typically 1 to 10 mm, preferably 2 to 6 mm, and even more preferably 2.5 to 5.5 mm; and a major diameter of typically 1.5 to 30 mm, preferably 3 to 20 mm, and even more preferably 3.5 to 10 mm. Additionally, the cylindrical shape has a bottom diameter of typically 1 to 6 mm, preferably 2 to 5 mm, and a length of typically 1 to 6 mm, preferably 2 to 5 mm.

Furthermore, the pelletized EVOH resin used in the respective production methods preferably has similar shape and size.

Even when the present EVOH resin composition is heated during melt molding, coloring change is suppressed and the long-run workability is excellent. A ratio of a YI (yellowness index) value after heating to a YI value before heating (YI value after heating/YI value before heating) is typically less than 3.2, preferably 3.1 or less, and particularly preferably 2.7 or less. When the ratio of the YI value after heating to the YI value before heating is within the above range, coloring change can be further suppressed. Furthermore, the lower limit of the ratio of the YI value after heating to the YI value before heating is typically 1.

Note that the difference of 0.1 in the YI value ratio is very large because it appears as a huge difference in a yield of actual production.

The YI value before heating can be determined by measuring the present EVOH resin composition pulverized into a 1 to 5 mm square and fully filled in a cylinder with an inner diameter of 32 mm and a height of 30 mm, by using a spectrocolorimeter SE6000 (available from Nippon Denshoku Industries Co., Ltd.).

Additionally, the YI value after heating can be determined by measuring the present EVOH resin composition pulverized into a 1 to 5 mm square and heated in an oven under the air atmosphere at 150°C for 5 hours in the same manner.

The present EVOH resin composition has a water content of typically 0.01 to 0.5% by mass, preferably 0.05 to 0.35% by mass, and particularly preferably 0.1 to 0.3% by mass.

Note that the water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

$$\text{Water content (\% by mass)} = [(W_1 - W_2)/W_1] \times 100$$

Furthermore, when the present EVOH resin composition is in a form of pellets, a known lubricant is also preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene biserucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition obtained in this manner is prepared in various forms such as pellets, powder, and liquid, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic or aliphatic polyketones. These can be used alone or in combination of two or more.

Among these, polyamide resins, polyolefin resins, polyester resins, and polystyrene resins are preferred, which are hydrophobic resins. Polyethylene resins, polypropylene resins, polycycloolefin resins, and unsaturated carboxyl-modified polyolefin resins obtained by modifying these polyolefins are more preferred.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the present multilayer structure. The total number of layers in the present multilayer structure is typically 2 to 15, preferably 3 to 10. In the above layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these methods, preferred is a production method including melt-molding the present EVOH resin composition layer, specifically the coextrusion method, in consideration of costs and environmental concerns.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40 to 170°C, preferably about 60 to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a wellknown manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the above heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottle-shaped multilayer container (laminate structure) is produced from a multilayer parison (a hollow tubular preform before blowing), a blow molding process is employed. Specific examples thereof include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging containers for general foods, condiments such as mayonnaise and dressing, fermented foods such as miso, oil and fat foods such as salad oil, beverages, cosmetics, and pharmaceutical products.

<<Third Aspect>>

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, the EVOH resin has a hydroxyl group relatively active in a molecule and therefore tends to be easily degraded by heat, causing a problem of coloration during melt molding.

To address the above problem, for example, JP-A-H11-106592 discloses a resin composition containing an EVOH resin (A), acetic acid (B), and magnesium acetate and/or calcium acetate (C), wherein the amount of (B) is 0.05 parts by weight or less relative to 100 parts by weight of (A), and the amount of (C) on a metal basis is 0.001 to 0.02 parts by weight relative to 100 parts by weight of (A). It discloses that using this resin composition can provide a molded article excellent in long-run workability in melt molding, hardly causing fish eyes, striation, or coloring, thus excellent in appearance; furthermore, even when the molded article is processed into a laminate, odor emanation is reduced and the laminate is excellent in interlayer adhesion even after a secondary process such as stretching and deep drawing.

The technique disclosed in JP-A-H11-106592 results in a molded article excellent in long-run workability in melt molding, hardly causing fish eyes, striation, or coloring, thus excellent in appearance. However, molding apparatuses tend to have higher functionality in recent years, along with diversified feed block and die designs in the molding apparatuses and various demands for higher functionality such as thinner films and the increased number of layers in a multilayer structure in a final product. Accordingly, a resin tends to be thermally degraded in a molding apparatus having a complicated structure due to the higher functionality, causing coloring and the like to reduce productivity (long-run workability) of products. This leads to a demand for further improvement.

The present disclosure provides an EVOH resin composition suppressing coloring change of an EVOH resin during heating in melt molding and the like.

[Means for Solving the Problems]

Meanwhile, in view of the circumstances, the inventors of the present disclosure have found that an EVOH resin composition suppresses coloring change of an EVOH resin during heating in melt molding and the like can be obtained by adding an alkali metal compound and a particular minute amount of a titanium compound to the EVOH resin.

Specifically, the present disclosure has the following aspects.

[3-1] An EVOH resin composition comprising an EVOH resin, an alkali metal compound, and a titanium compound, wherein the amount of the titanium compound on a metal basis is 0.001 ppm or more and less than 5 ppm per mass of the EVOH resin composition.

[3-2] The EVOH resin composition according to [3-1], wherein the amount of the alkali metal compound on a metal basis is 1 to 1000 ppm per mass of the EVOH resin composition.

[3-3] The EVOH resin composition according to [3-1] or [3-2], wherein a mass ratio of a metal content of the alkali metal compound to the amount of the titanium compound on a metal basis is 0.2 to 1000000.

[3-4] The EVOH resin composition according to any one of [3-1] to [3-3], wherein the alkali metal compound is alkaline metal carboxylate.

[3-5] Pellets comprising the EVOH resin composition according to any one of [3-1] to [3-4].

[3-6] A multilayer structure comprising at least one layer comprising the EVOH resin composition according to any one of [3-1] to [3-4].

[3-7] A method for producing the EVOH resin composition according to any one of [3-1] to [3-4], comprising melt-mixing a composition raw material containing the EVOH resin and a titanium compound.

[3-8] A method for producing the multilayer structure according to [3-6], comprising melt-molding a layer comprising the EVOH resin composition.

[Effects of the Disclosure]

The EVOH resin composition according to the present disclosure suppresses coloring change of an EVOH resin during melt molding, and is excellent in long-run workability.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin as a main component, an alkali metal compound, and a particular minute amount of a titanium compound.

Specifically, the present EVOH resin composition contains the EVOH resin as a base resin, where the amount of the EVOH resin in the present EVOH resin composition is typically 70% by mass or more, preferably 80% by mass or more, more preferably 90% by mass or more, and particularly preferably 95% by mass or more.

Each component will be described below.

[EVOH Resin]

The EVOH resin used in the present disclosure is a resin typically obtained by saponifying an ethylene-vinyl ester copolymer which is a copolymer of ethylene and a vinyl ester monomer, and the same as those described in the first aspect can be used as the EVOH resin.

[Alkali Metal Compound]

Examples of the alkali metal compound include alkaline metal salts, alkaline metal hydroxides, and the like. These may be used alone or in combination of two or more. Among these, the alkali metal compound is preferably water-soluble, and alkaline metal salts are preferred in view of dispersibility.
Examples of the alkaline metal salts include alkaline metal inorganic salts, alkaline metal carboxylates, and the like. Among these, alkaline metal carboxylates are preferred.
Examples of the alkaline metal inorganic salts include carbonates, hydrogen carbonates, phosphates, borates, sulfates, chloride salts, and the like of alkali metals.
Examples of the alkaline metal carboxylates include: monocarboxylates having 2 to 11 carbon atoms such as acetate, butyrate, propionate, enanthate, and caprate; dicarboxylates having 2 to 11 carbon atoms such as oxalate, malonate, succinate, adipate, suberate, and sebacate; monocarboxylates having 12 or more carbon atoms such as laurate, palmitate, stearate, 12-hydroxystearate, behenate, and montanate; and other carboxylates such as carboxylate with a carboxy group at the end of polymerization of an EVOH resin.
Among these, monocarboxylates having 2 to 11 carbon atoms are preferred, and acetate is particularly preferred.
Examples of alkaline metal species for the alkali metal compound include lithium, sodium, potassium, rubidium, and cesium. Among these, sodium and potassium are preferred, and the sodium is particularly preferred.
The alkali metal compound has a molecular weight of typically 20 to 10000, preferably 20 to 1000, and particularly preferably 20 to 500.
Particularly, sodium acetate is preferable as the alkali metal compound. Additionally, the alkali metal compound preferably excludes layered inorganic compounds and double salts in view of economic efficiency and dispersibility.
The amount of the alkali metal compound on a metal basis is preferably 1 to 1000 ppm, more preferably 5 to 800 ppm, further preferably 10 to 700 ppm, particularly preferably 100 to 600 ppm, and especially preferably 150 to 400 ppm per mass of the EVOH resin composition.
If the amount of the alkali metal compound is too large, thermal stability tends to be reduced, whereas if the amount is too small, formability of the EVOH resin composition tends to be reduced.
Note that the amount of the alkali metal compound on a metal basis can be measured, for example, by an atomic absorption photometer using a certain volume of a test liquid prepared by adding pure water to a solution of the present EVOH resin composition which is ashed by heating and treated with acid such as hydrochloric acid.

[Titanium Compound]

Examples of the titanium compound include inorganic titanium compounds and organic titanium compounds. Note that the same as those described in the first aspect can be used as the titanium compound.
The amount of the titanium compound on a metal basis is 0.001 ppm or more and less than 5 ppm per mass of the EVOH resin composition. It is preferably 0.01 to 3 ppm, more preferably 0.03 to 1 ppm, and particularly preferably 0.05 to 0.5 ppm. When the amount of the titanium compound on a metal basis is within the above range, coloring change due to thermal degradation during melt molding can be suppressed, thereby achieving excellent long-run workability. Additionally, if the amount of the titanium compound on a metal basis is too small, a suppression effect on coloring change is reduced, whereas if the amount on a metal basis is too large, thermal decomposition of the EVOH resin easily occurs to cause coloring.
The amount of the titanium compound on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).
A mass ratio of the amount of the alkali metal compound to the amount of the titanium compound on a metal basis is typically 1 to 360000, preferably 18 to 100000, and particularly preferably 100 to 50000.
If the mass ratio is within the above range, coloring change due to thermal degradation can be further prevented.
A mass ratio of the amount of the alkali metal compound on a meta basis to the amount of the titanium compound on a metal basis is preferably 0.2 to 1000000, further preferably 0.3 to 100000, yet further preferably 5 to 27000, particularly preferably 20 to 14000, especially preferably 100 to 7000, and the most preferably 300 to 4000.

If the mass ratio is within the above range, coloring change due to thermal degradation can be further prevented. Additionally, if the mass ratio is too high, thermal stability tends to be reduced, whereas if the mass ratio is too low, a molded article tends to be colored.

It is generally known that an EVOH resin blended with an alkali metal compound exhibits a tendency to lower viscosity over time during heating. Although the mechanism thereof is not clear, this is presumably because the EVOH resin composition is made basic by blending the alkali metal compound, and any anion serves as a nucleophile to remove hydrogen bonded to a main chain carbon of the EVOH resin, or the like, thereby causing decomposition reaction of the main chain to cut the main chain of the EVOH resin. Coloring change of the EVOH resin after heating is presumably because a double bond structure is created in the main chain of the EVOH resin during the above reaction, and such structure serves as a reaction starting point again to cause dehydration reaction and the like to form a polyene structure in the main chain of the EVOH resin.

On the contrary, the present EVOH resin composition contains the alkali metal compound and a particular minute amount of the titanium compound, such that coloring change due to thermal degradation of the EVOH resin is suppressed.

It is generally considered that when an EVOH resin composition contains a titanium compound, the EVOH resin composition is colored due to titanium ions; therefore, avoiding the use of a titanium compound is common general technical knowledge for a person skilled in the art. However, in the present disclosure, it has been found that when using a particular minute amount of the titanium compound, it is possible to produce an EVOH resin composition which suppresses coloring change due to thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents formation of the polyene structure.

On the other hand, if the amount of the titanium compound is too large, the titanium is considered to cause thermal decomposition of the EVOH resin, resulting in coloring.

[Other Thermoplastic Resins]

The present EVOH resin composition can contain a thermoplastic resin(s) other than the EVOH resin in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. The same additives as described in the first aspect can be used as the above additives.

[Method for Producing EVOH Resin Composition]

The present EVOH resin composition can be produced, for example, by mixing the EVOH resin, the alkali metal compound, and the titanium compound by any known method, for example, a dry blending method, melt mixing method, solution mixing method, or impregnation method. Among these, it is preferable that the present EVOH resin composition is produced by a method including melt-mixing a composition raw material containing the EVOH resin and the titanium compound. Furthermore, these production methods can optionally be combined.

An example of the dry blending method is a method (i) in which the pelletized EVOH resin is dry-blended with the alkali metal compound and/or the titanium compound by using a tumbler or the like.

Examples of the melt mixing method include: a method (ii) in which the pelletized EVOH resin is dry-blended with the alkali metal compound and/or the titanium compound and the resulting dry blend is melt-kneaded; and a method (iii) in which the alkali metal compound and/or the titanium compound is added to and melt-kneaded with the molten EVOH resin.

Examples of the solution mixing method include: a method (iv) in which the alkali metal compound and/or the titanium compound is added to a solution prepared by using a commercially available EVOH resin, the resultant is solidified and molded, and thereafter the solids are separated from liquid in a known manner and dried; and a method (v) in which the alkali metal compound and/or the titanium compound is incorporated into an ethylene-vinyl ester copolymer solution or a homogeneous solution (water/alcohol solution or the like) of the EVOH resin before saponification in the production process of the EVOH resin, the resultant is solidified and molded, and thereafter the solids are separated from liquid in a known manner and dried.

An example of the impregnation method is a method (vi) in which the pelletized EVOH resin is brought into contact with an aqueous solution containing the alkali metal compound and/or the titanium compound to incorporate the alkali metal compound and/or the titanium compound into the EVOH resin, and then the resultant is dried.

Usable as the aqueous solution containing the titanium compound is an aqueous solution of the titanium compound or an elution of titanium ions obtained by immersing the titanium compound in water containing various chemicals.

Note that in the impregnation method, the amount (on a metal basis) of the alkali metal compound or the titanium compound can be controlled by a concentration of the alkali metal compound or the titanium compound in the aqueous solution in which the EVOH resin is immersed, immersion temperature, immersion time, and the like.

The immersion time is typically 0.5 to 48 hours, preferably 1 to 36 hours, and the immersion temperature is typically 10 to 40°C, preferably 20 to 35°C.

Various drying methods can be employed as the drying method in the respective production methods, that may be either a stationary drying method or a fluidized drying method. These can also be used in combination.

As described above, the above different methods can be combined in the present disclosure. Among these, the melt mixing method, particularly the method (ii) is preferred in view of productivity and ability to obtain a resin composition with more remarkable effects of the present disclosure. Additionally, when the other thermoplastic resin(s) or other additives are used, they may be blended in a usual manner in accordance with the above production methods.

The present EVOH resin composition produced by the respective production methods is in any form, preferably in a form of pellets.

For example, the pellets each have spherical shape, oval shape, cylindrical shape, cubic shape, square prism shape, or the like, and typically have the oval shape or cylindrical shape. In view of convenience to subsequently use the pellets as a molding material, the oval shape has a minor diameter of typically 1 to 10 mm, preferably 2 to 6 mm, and even more preferably 2.5 to 5.5 mm; and a major diameter of typically 1.5 to 30 mm, preferably 3 to 20 mm, and even more preferably 3.5 to 10 mm. Additionally, the cylindrical shape has a bottom diameter of typically 1 to 6 mm, preferably 2 to 5 mm, and a length of typically 1 to 6 mm, preferably 2 to 5 mm.

Furthermore, the pelletized EVOH resin used in the respective production methods preferably has similar shape and size.

Even when the present EVOH resin composition is heated during melt molding, coloring change is suppressed and the long-run workability is excellent. A ratio of a YI (yellowness index) value after heating to a YI value before heating (YI value after heating/YI value before heating) is typically 3.9 or less, preferably 3.7 or less, and more preferably 3.2 or less. When the ratio of the YI value after heating to the YI value before heating is within the above range, coloring change can be further suppressed. Furthermore, the lower limit of the ratio of the YI value after heating to the YI value before heating is typically 1.

Note that the difference of 0.1 in the YI value ratio is very large because it appears as a huge difference in a yield of actual production.

The YI value before heating can be determined by measuring the present EVOH resin composition pulverized into a 1 to 5 mm square and fully filled in a cylinder with an inner diameter of 32 mm and a height of 30 mm, by using a spectrocolorimeter SE6000 (available from Nippon Denshoku Industries Co., Ltd.).

Additionally, the YI value after heating can be determined by measuring the present EVOH resin composition pulverized into a 1 to 5 mm square and heated in an oven under the air atmosphere at 150°C for 5 hours in the same manner.

The present EVOH resin composition has a water content of typically 0.01 to 0.5% by mass, preferably 0.05 to 0.35% by mass, and particularly preferably 0.1 to 0.3% by mass.

Note that the water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

$$\text{Water content (\% by mass)} = [(W_1 - W_2)/W_1] \times 100$$

Furthermore, when the present EVOH resin composition is in a form of pellets, a known lubricant is also preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene bis-erucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition obtained in this manner is prepared in various forms such as pellets, powder, and liquid, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-α-olefin (α-olefin having 4 to 20 carbon atoms) copolymers, polypropylene resins such as polypropylenes and propylene-α-olefin (α-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic or aliphatic polyketones. These may be used alone or in combination of two or more.

Among these, polyamide resins, polyolefin resins, polyester resins, and polystyrene resins are preferred, which are hydrophobic resins. Polyethylene resins, polypropylene resins, polycycloolefin resins, and unsaturated carboxyl-modified polyolefin resins obtained by modifying these polyolefins are more preferred.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the present multilayer structure. The total number of layers in the present multilayer structure is typically 2 to 15, preferably 3 to 10. In the above layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these methods, preferred is a production method including melt-molding the present EVOH resin composition layer, specifically the coextrusion method, in consideration of costs and environmental concerns.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40 to 170°C, preferably about 60 to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the above heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottle-shaped multilayer container (laminate structure) is produced from a multilayer parison (a hollow tubular preform before blowing), a blow molding process is employed. Specific examples thereof include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging containers for general foods, condiments such as mayonnaise and dressing, fermented foods such as miso, oil and fat foods such as salad oil, beverages, cosmetics, and pharmaceutical products.

<<Fourth Aspect>>

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, the EVOH resin has a hydroxyl group relatively active in a molecule and therefore tends to be easily degraded by heat, causing a problem of coloration during melt molding.

To address the above problem, for example, WO-A-2013-146961 discloses incorporation of a particular amount of unsaturated aldehyde into an EVOH resin to suppress oxidative degradation during melt molding, thereby suppressing coloring.

Molding apparatuses tend to have higher functionality in recent years, along with diversified feed block and die designs in the molding apparatuses and various demands for higher functionality such as thinner films and the increased number of layers in a multilayer structure in a final product. Meanwhile, a resin tends to be thermally degraded in a molding apparatus having a complicated structure due to the higher functionality, causing coloring and the like to reduce productivity of products.

While the unsaturated aldehyde is used for suppressing coloring during melt molding in WO-A-2013-146961, such aldehyde compound even in a very small amount may cause an offensive odor. Particularly, there is a concern that the aldehyde compound is exposed to high temperature during melt molding and evaporates, making working environment worse. Therefore, there is a demand for an EVOH resin composition which suppresses coloring in a melt molding process without using such volatile compound and is therefore excellent in long-run workability.

The present disclosure provides an EVOH resin composition suppressing coloring change due to thermal degradation during melt molding.

[Means for Solving the Problems]

Meanwhile, in view of the circumstances, the inventors of the present disclosure have found that an EVOH resin composition suppressing coloring change due to thermal degradation during melt molding can be obtained by adding a lubricant and a particular minute amount of a titanium compound to the EVOH resin.

Specifically, the present disclosure has the following aspects.

[4-1] An EVOH resin composition comprising an EVOH resin, a lubricant, and a titanium compound, wherein the amount of the titanium compound on a metal basis is 0.001 ppm or more and less than 5 ppm per mass of the EVOH resin composition.

[4-2] The EVOH resin composition according to [4-1], wherein the lubricant content is 500 ppm or less per mass of the EVOH resin composition.

[4-3] The EVOH resin composition according to [4-1] or [4-2], wherein a mass ratio of the lubricant content to the amount of the titanium compound on a metal basis is 0.2 to 500000.

[4-4] Pellets comprising the EVOH resin composition according to any one of [4-1] to [4-3].

[4-5] A multilayer structure comprising at least one layer comprising the ethylene-vinyl alcohol copolymer composition according to any one of [4-1] to [4-3].

[4-6] A method for producing the EVOH resin composition according to any one of [4-1] to [4-3], comprising melt-mixing a composition raw material containing the EVOH resin and a titanium compound.

[4-7] A method for producing the multilayer structure according to [4-5], comprising melt-molding a layer comprising the EVOH resin composition.

[Effects of the Disclosure]

The EVOH resin composition according to the present disclosure suppresses coloring change of an EVOH resin during melt molding, and is excellent in long-run workability.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin as a main component, a lubricant, and a particular minute amount of a titanium compound.
Specifically, the present EVOH resin composition contains the EVOH resin as a base resin, where the amount of the EVOH resin in the present EVOH resin composition is typically 70% by mass or more, preferably 80% by mass or more, more preferably 90% by mass or more, and particularly preferably 95% by mass or more.
Each component will be described below.

[EVOH Resin]

The EVOH resin used in the present disclosure is a resin typically obtained by saponifying an ethylene-vinyl ester copolymer which is a copolymer of ethylene and a vinyl ester monomer, and the same as those described in the first aspect can be used as the EVOH resin.

[Lubricant]

Examples of the lubricant include higher fatty acids having 12 to 25 carbon atoms, preferably 13 to 23 carbon atoms, and more preferably 15 to 20 carbon atoms.
Examples of the higher fatty acids include: higher fatty acids such as lauric acid, myristic acid, palmitic acid, stearic acid, behenic acid, and oleic acid; metal salts of higher fatty acids, such as aluminum salts, calcium salts, zinc salts, magnesium salts, and barium salts of these higher fatty acids; higher fatty acid esters, such as methyl esters, isopropyl esters, butyl esters, and octyl esters of the higher fatty acids; and higher fatty acid amides, including saturated higher fatty acid amides such as stearamide and behenamide, unsaturated higher fatty acid amides such as oleamide and erucamide, and bis-higher fatty acid amides such as ethylene bis-stearamide, ethylene bis-oleamide, ethylene bis-erucamide, and ethylene bis-lauramide.
Additionally, examples of the lubricant other than the higher fatty acids include: low-molecular-weight polyolefins such as low-molecular-weight polyethylene and low-molecular-weight polypropylene each having a molecular weight of about 500 to 10000, or acid modified products thereof; higher alcohols, ester oligomers, and fluoroethylene resins.
These lubricants can be used alone or in combination of two or more.
Furthermore, a valence of the higher fatty acids is typically 1 to 5, preferably 1 to 3, and particularly preferably 1 to 2 from the viewpoints of extrusion stability and commercial availability. The valence means the number of structures derived from higher fatty acid in one molecule of the compound to be used as the above lubricant. For example, when bis-stearamide is used as the lubricant, one molecule thereof contains two structures derived from a C18 higher fatty acid molecule, and thus it is regarded as C18 higher fatty acid amide having a valence of 2.
Among the lubricants, higher fatty acids, metal salts of higher fatty acids, higher fatty acid esters, and higher fatty acid amides are preferred; the metal salts of higher fatty acids and the higher fatty acid amides are particularly preferred; the higher fatty acid amides are further preferred from the viewpoint of extrusion stability; and ethylene bis-stearamide is particularly preferred.
The lubricant can be used in any form, for example, solid (powder, fine powder, or flakes), semisolid, liquid, paste, solution, emulsion (aqueous dispersion), or the like. Among these, the powder form is preferred. The powdered lubricant has a particle diameter of typically 0.1 to 100 $\mu$m, preferably 1 to 75 $\mu$m, and particularly preferably 5 to 50 $\mu$m.
The lubricant content is preferably 500 ppm or less, more preferably 300 ppm or less, and particularly preferably 200 ppm or less per mass of the present EVOH resin composition. If the lubricant content is greater than the above value, thermal stability tends to be reduced. Note that the lower limit of the lubricant content is typically 1 ppm, preferably 10 ppm, and particularly preferably 50 ppm. If the lubricant content is too low, formability of the EVOH resin composition tends to be reduced.
The lubricant content can be measured, for example, by the following method.
When the lubricant is widely added to the surface of the EVOH resin, an addition amount of the lubricant can be regarded as the content.

Furthermore, when the lubricant is incorporated into the present EVOH resin composition and the lubricant is higher fatty acid amide, for example, the lubricant content of the present EVOH resin composition can be determined by measuring the total nitrogen amount in the present EVOH resin composition using a total trace nitrogen analyzer, and converting the total nitrogen amount into the lubricant content.

[Titanium Compound]

Examples of the titanium compound include inorganic titanium compounds and organic titanium compounds. Note that the same as those described in the first aspect can be used as the titanium compound.

The amount of the titanium compound on a metal basis is 0.001 ppm or more and less than 5 ppm per mass of the EVOH resin composition. It is preferably 0.01 to 3 ppm, more preferably 0.03 to 1 ppm, and particularly preferably 0.05 to 0.5 ppm. When the amount of the titanium compound on a metal basis is within the above range, coloring change due to thermal degradation during melt molding can be suppressed, thereby achieving excellent long-run workability. Additionally, if the amount of the titanium compound on a metal basis is too small, a suppression effect on coloring change is reduced, whereas if the amount on a metal basis is too large, thermal decomposition of the EVOH resin easily occurs to cause coloring.

The amount of the titanium compound on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

Furthermore, a mass ratio of the lubricant content to the amount of the titanium compound on a metal basis [lubricant content/amount of the titanium compound on a metal basis] is typically 0.2 to 500000, preferably 0.3 to 50000, further preferably 10 to 10000, particularly preferably 100 to 4000, and especially preferably 900 to 3000. If the value is too large, thermal stability tends to be disturbed, whereas if the value is too small, a molded article tends to be colored.

Generally, an EVOH resin is colored due to thermal degradation. This is presumably because the EVOH resin is degraded by heat to generate a radical, which dehydrates a hydroxyl group contained in the EVOH resin to generate a double bond in a main chain of the EVOH resin, then, this site serves as a reaction starting point to further promote dehydration to form a conjugated polyene structure in the main chain of the EVOH resin.

On the contrary, the present EVOH resin composition contains a particular minute amount of the titanium compound, such that coloring change due to thermal degradation of the EVOH resin is suppressed, achieving excellent long-run workability.

It is generally considered that when an EVOH resin composition contains a titanium compound, the EVOH resin composition is colored due to titanium ions; therefore, avoiding the use of a titanium compound is common general technical knowledge for a person skilled in the art. However, in the present disclosure, it has been found that when using a particular minute amount of the titanium compound, it is possible to produce an EVOH resin composition which suppresses coloring change due to thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents formation of the polyene structure.

[Other Thermoplastic Resins]

The present EVOH resin composition can contain a thermoplastic resin(s) other than the EVOH resin in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. The same additives as described in the first aspect can be used as the above additives.

[Method for Producing EVOH Resin Composition]

The present EVOH resin composition can be produced, for example, by mixing the EVOH resin and the titanium compound by any known method, for example, a dry blending method, melt mixing method, solution mixing method, or impregnation method. Among these, it is preferable that the present EVOH resin composition is produced by a method including melt-mixing a composition raw material containing the EVOH resin and the titanium compound. Furthermore, these production methods can optionally be combined.

An example of the dry blending method is a method (i) in which the pelletized EVOH resin is dry-blended with the lubricant and/or the titanium compound by using a tumbler or the like.

Examples of the melt mixing method include: a method (ii) in which the pelletized EVOH resin is dry-blended with the lubricant and/or the titanium compound and the resulting dry blend is melt-kneaded; and a method (iii) in which the lubricant and/or the titanium compound is added to and melt-kneaded with the molten EVOH resin.

Examples of the solution mixing method include: a method (iv) in which the lubricant and/or the titanium compound is added to a solution prepared by using a commercially available EVOH resin, the resultant is solidified and molded, and thereafter the solids are separated from liquid in a known manner and dried; and a method (v) in which the lubricant and/or the titanium compound is incorporated into an ethylene-vinyl ester copolymer solution or a homogeneous solution (water/alcohol solution or the like) of the EVOH resin before saponification in the production process of the EVOH resin, the resultant is solidified and molded, and thereafter the solids are separated from liquid in a known manner and dried.

An example of the impregnation method is a method (vi) in which the pelletized EVOH resin is brought into contact with an aqueous solution containing the lubricant and/or the titanium compound to incorporate the lubricant and/or the titanium compound into the EVOH resin, and then the resultant is dried.

Usable as the aqueous solution containing the titanium compound is an aqueous solution of the lubricant and/or the titanium compound, or an elution of titanium ions obtained by immersing the lubricant and/or the titanium compound in water containing various chemicals.

Note that in the impregnation method, the amount (on a metal basis) of the titanium compound can be controlled by a concentration of the titanium compound in the aqueous solution in which the EVOH resin is immersed, immersion temperature, immersion time, and the like.

The immersion time is typically 0.5 to 48 hours, preferably 1 to 36 hours, and the immersion temperature is typically 10 to 40°C, preferably 20 to 35°C.

Various drying methods can be employed as the drying method in the respective production methods, that may be either a stationary drying method or a fluidized drying method. These can also be used in combination.

As described above, the above different methods can be combined in the present disclosure. Among these, the melt mixing method, particularly the method (ii) is preferred in view of productivity and ability to obtain a resin composition with more remarkable effects of the present disclosure. Additionally, when the other thermoplastic resin(s) or other additives are used, they may be blended in a usual manner in accordance with the above production methods.

The present EVOH resin composition produced by the respective production methods is in any form, preferably in a form of pellets.

For example, the pellets each have spherical shape, oval shape, cylindrical shape, cubic shape, square prism shape, or the like, and typically have the oval shape or cylindrical shape. In view of convenience to subsequently use the pellets as a molding material, the oval shape has a minor diameter of typically 1 to 10 mm, preferably 2 to 6 mm, and even more preferably 2.5 to 5.5 mm; and a major diameter of typically 1.5 to 30 mm, preferably 3 to 20 mm, and even more preferably 3.5 to 10 mm. Additionally, the cylindrical shape has a bottom diameter of typically 1 to 6 mm, preferably 2 to 5 mm, and a length of typically 1 to 6 mm, preferably 2 to 5 mm.

Furthermore, the pelletized EVOH resin used in the respective production methods preferably has similar shape and size.

Even when the present EVOH resin composition is heated during melt molding, coloring change is suppressed and the long-run workability is excellent. A ratio of a YI (yellowness index) value after heating to a YI value before heating (YI value after heating/YI value before heating) is typically 3.9 or less, preferably 3.6 or less, and more preferably 3.0 or less. When the ratio of the YI value after heating to the YI value before heating is within the above range, coloring change can be further suppressed. Note that the lower limit of the ratio of the YI value after heating to the YI value before heating is typically 1.

The YI value before heating can be determined by measuring the present EVOH resin composition pulverized into a 1 to 5 mm square and fully filled in a cylinder with an inner diameter of 32 mm and a height of 30 mm, by using a spectrocolorimeter SE6000 (available from Nippon Denshoku Industries Co., Ltd.).

Additionally, the YI value after heating can be determined by measuring the present EVOH resin composition pulverized into a 1 to 5 mm square and heated in an oven under the air atmosphere at 150°C for 5 hours in the same manner.

The present EVOH resin composition has a water content of typically 0.01 to 0.5% by mass, preferably 0.05 to 0.35% by mass, and particularly preferably 0.1 to 0.3% by mass.

Note that the water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

$$\text{Water content (\% by mass)} = [(W_1 - W_2)/W_1] \times 100$$

The present EVOH resin composition obtained in this manner is prepared in various forms such as pellets, powder, and liquid, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic or aliphatic polyketones. These can be used alone or in combination of two or more.

Among these, polyamide resins, polyolefin resins, polyester resins, and polystyrene resins are preferred, which are hydrophobic resins. Polyethylene resins, polypropylene resins, polycycloolefin resins, and unsaturated carboxyl-modified polyolefin resins obtained by modifying these polyolefins are more preferred.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the present multilayer structure. The total number of layers in the present multilayer structure is typically 2 to 15, preferably 3 to 10. In the above layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these methods, preferred is a production method including melt-molding the present EVOH resin composition layer, specifically the coextrusion method, in consideration of costs and environmental concerns.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40 to 170°C, preferably about 60 to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the above heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottle-shaped multilayer container (laminate structure) is produced from a multilayer parison (a hollow tubular preform before blowing), a blow molding process is employed. Specific examples thereof include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging containers for general foods, condiments such as mayonnaise and dressing, fermented foods such as miso, oil and fat foods such as salad oil, beverages, cosmetics, and pharmaceutical products.

<<Fifth Aspect>>

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, the EVOH resin has a hydroxyl group relatively active in a molecule and therefore tends to be easily degraded by heat, causing a problem of coloration during melt molding.

To address the above problem, for example, WO-A-2013-146961 discloses incorporation of a particular amount of unsaturated aldehyde into an EVOH resin to suppress oxidative degradation during melt molding, thereby suppressing coloring.

Molding apparatuses tend to have higher functionality in recent years, along with diversified feed block and die designs in the molding apparatuses and various demands for higher functionality such as thinner films and the increased number of layers in a multilayer structure in a final product. Meanwhile, a resin tends to be thermally degraded in a molding apparatus having a complicated structure due to the higher functionality, causing coloring and the like to reduce productivity of products.

While the unsaturated aldehyde is used for suppressing coloring during melt molding in WO-A-2013-146961, such aldehyde compound even in a very small amount may cause an offensive odor. Particularly, there is a concern that the aldehyde compound is exposed to high temperature during melt molding and evaporates, making working environment worse. Therefore, there is a demand for an EVOH resin composition which suppresses coloring in a melt molding process without using such volatile compound and is therefore excellent in long-run workability.

An object of the present disclosure is to provide an EVOH resin composition suppressing coloring change due to thermal degradation during melt molding.

[Means for Solving the Problems]

Meanwhile, in view of the circumstances, the inventors of the present disclosure have found that an EVOH resin composition suppressing coloring change due to thermal degradation during melt molding can be obtained by adding a compound having a conjugated polyene structure and a particular minute amount of a titanium compound to the EVOH resin.

Specifically, the present disclosure has the following aspects.

[5-1] An EVOH resin composition comprising an EVOH resin, a compound having a conjugated polyene structure, and a titanium compound, wherein the amount of the titanium compound on a metal basis is 0.001 ppm or more and less than 5 ppm per mass of the EVOH resin composition.

[5-2] The EVOH resin composition according to [5-1], wherein the amount of the compound having a conjugated polyene structure is 1 to 1000 ppm per mass of the EVOH resin composition.

[5-3] The EVOH resin composition according to [5-1] or [5-2], wherein a mass ratio of the amount of the compound having a conjugated polyene structure to the amount of the titanium compound on a metal basis is 0.2 to 1000000.

[5-4] The EVOH resin composition according to any one of [5-1] to [5-3], wherein the compound having a conjugated polyene structure is sorbic acid.

[5-5] Pellets comprising the EVOH resin composition according to any one of [5-1] to [5-4].

[5-6] A multilayer structure comprising at least one layer comprising the EVOH resin composition according to any one of [5-1] to [5-4].

[5-7] A method for producing the EVOH resin composition according to any one of [5-1] to [5-4], comprising melt-mixing a composition raw material containing the EVOH resin and a titanium compound.

[5-8] A method for producing the multilayer structure according to [5-6], comprising melt-molding a layer comprising the EVOH resin composition.

[Effects of the Disclosure]

The EVOH resin composition according to the present disclosure suppresses coloring change of an EVOH resin during melt molding, and is excellent in long-run workability.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin as a main component, a compound having a conjugated polyene structure, and a particular minute amount of a titanium compound.
Specifically, the present EVOH resin composition contains the EVOH resin as a base resin, where the amount of the EVOH resin in the present EVOH resin composition is typically 70% by mass or more, preferably 80% by mass or more, more preferably 90% by mass or more, and particularly preferably 95% by mass or more.
Each component will be described below.

[EVOH Resin]

The EVOH resin used in the present disclosure is a resin typically obtained by saponifying an ethylene-vinyl ester copolymer which is a copolymer of ethylene and a vinyl ester monomer, and the same as those described in the first aspect can be used as the EVOH resin.

[Compound Having Conjugated Polyene Structure]

The compound having a conjugated polyene structure refers to a compound having a so-called conjugated double bond, which is composed of a carbon-carbon double bond and a carbon-carbon single bond alternately connected to each other and includes two or more carbon-carbon double bonds.
The compound having a conjugated polyene structure may be a conjugated diene compound having a structure in which two carbon-carbon double bonds and one carbon-carbon single bond are alternately connected to each other, a conjugated triene compound having a structure in which three carbon-carbon double bonds and two carbon-carbon single bonds are alternately connected to each other, or a conjugated polyene compound having a structure in which more than three carbon-carbon double bonds and more than two carbon-carbon single bonds are alternately connected to each other. However, the compound having a conjugated polyene structure excludes aromatic carboxylic acids such as cinnamic acids and quinones such as hydroquinone and benzoquinone.
Additionally, for the compound having a conjugated polyene structure, there is concern that a molded article is colored by the color of the conjugated polyene compound itself if the number of the carbon-carbon double bonds to be conjugated is 8 or more. Therefore, the number of the carbon-carbon double bonds to be conjugated is preferably 7 or less. Furthermore, multiple pairs of conjugated double bonds consisting of two or more carbon-carbon double bonds may be present in one molecule of the compound having a conjugated polyene structure without being conjugated with each other. For example, the compound having a conjugated polyene structure also encompasses compounds having three conjugated trienes in the same molecule, such as tung oil.
The compound having a conjugated polyene structure has a molecular weight of typically 30 to 500, preferably 50 to 400, and particularly preferably 100 to 300 from the viewpoints of productivity and handleability.
Furthermore, the compound having a conjugated polyene structure has typically 4 to 30 carbon atoms, preferably 4 to 20 carbon atoms, and particularly preferably 4 to 10 carbon atoms in one molecule from the viewpoints of productivity and handleability.
Examples of such compound having a conjugated polyene structure include: isoprene, 2,3-dimethyl-1,3-butadiene, 2,3-diethyl-1,3-butadiene, 2-t-butyl-1,3-butadiene, 1,3-pentadiene, 2,3-dimethyl-1,3-pentadiene, 2,4-dimethyl-1,3-pentadiene, 3,4-dimethyl-1,3-pentadiene, 3-ethyl-1,3-pentadiene, 2-methyl-1,3-pentadiene, 3-methyl-1,3-pentadiene, 4-methyl-1,3-pentadiene, 1,3-hexadiene, 2,4-hexadiene, 2,5-dimethyl-2,4-hexadiene, 1,3-octadiene, 1,3-cyclopentadiene, 1,3-cyclohexadiene, 1-phenyl-1,3-butadiene, 1,4-diphenyl-1,3-butadiene, 1-methoxy-1,3-butadiene, 2-methoxy-1,3-butadiene, 1-ethoxy-1,3-butadiene, 2-ethoxy-1,3-butadiene, 2-nitro-1,3-butadiene, chloroprene, 1-chloro-1,3-butadiene, 1-bromo-1,3-butadiene, 2-bromo-1,3-butadiene, fulvene, tropone, ocimene, phellandrene, myrcene, farnesene, and cembrene; conjugated diene compounds composed of a conjugated structure having two carbon-carbon double bonds, including sorbic acid and analogues thereof such as sorbic acid ester and sorbate, and abietic acids; conjugated triene compounds composed of a conjugated structure having three carbon-carbon double bonds, such as 1,3,5-hexatriene, 2,4,6-octatriene-1-carboxylic acid, eleostearic acid, tung oil, and cholecalciferol; and compounds having a conjugated polyene structure composed of a conjugated structure having four or more carbon-carbon double bonds, such as cyclooctatetraene, 2,4,6,8-decatetraene-1-carboxylic acid, retinol, and retinoic acids. Note that any of those having a plurality of isomers such as 1,3-pentadiene, myrcene, and farnesene may be used. The compound having a conjugated polyene structure may be used alone or in combination of two or more.

Among these compounds having a conjugated polyene structure, a compound having a carboxyl group is preferred because of its high affinity with water, a chain compound having a carboxyl group is further preferred, and sorbic acid and analogues thereof, especially the sorbic acid is particularly preferred.

The amount of the compound having a conjugated polyene structure is preferably 1 to 1000 ppm, more preferably 10 to 700 ppm, particularly preferably 50 to 600 ppm, and especially preferably 70 to 300 ppm per mass of the EVOH resin composition. If the amount of the compound having a conjugated polyene structure is too large, productivity tends to be impaired, whereas if the amount is too small, thermal stability tends to be reduced.

The amount of the compound having a conjugated polyene structure can be measured using, for example, a liquid chromatograph-UV spectrophotometer in accordance with the following procedure. Note that while the following procedure is described by taking a case of using sorbic acid as an example, the amount of other compounds having a conjugated polyene structure can also be measured in accordance with a similar procedure by using an extraction solvent suitable for the compounds.

[Method for Measuring Amount of Compound Having Conjugated Polyene Structure]

(1) To 1 g of powder obtained by freezing and pulverizing the present EVOH resin composition, 8 mL of an extraction solvent (distilled water : methanol = 1:1, volume ratio) is added.

(2) This solution is allowed to stand at 20°C while being subjected to ultrasonic treatment for 1 hour to extract sorbic acid from the resin, cooled and then diluted with the extraction solvent to a certain volume of 10 mL. Additionally, the solution may be diluted at a desired ratio as necessary.

(3) The above solution is filtered through a filter having a pore size of 0.45 $\mu$m, and then sorbic acid in the extraction solution is measured by a liquid chromatograph-UV spectrophotometer.

(4) A calibration curve is prepared based on a standard solution of the sorbic acid prepared using the above extraction solvent, and the sorbic acid content is determined by an absolute calibration curve method.

[HPLC Measurement Conditions]

LC system: Agilent1260/1290 [available from Agilent Technologies, Inc.] Detector: Agilent1260 infinity diode array detector [available from Agilent Technologies, Inc.]
Column: Cadenza CD-C18 (100 $\times$ 3.0 mm, 3 $\mu$m) [available from Imtakt Corporation]
Column temperature: 40°C
Mobile phase A: Aqueous solution of 5% acetonitrile containing 0.05% formic acid
Mobile phase B: Aqueous solution of 95% acetonitrile containing 0.05% formic acid
Time program:

0.0 → 5.0 minutes B% = 30%
5.0 → 8.0 minutes B% = 30% → 50%
8.0 → 10.0 minutes B% = 50%
10.0 → 13.0 minutes B% = 50% → 30%
13.0 → 15.0 minutes B% = 30%

Flow rate: 0.2 mL/min
UV detection wavelength: 190 to 400 nm
Quantitative wavelength: 262 nm
Note that in the above HPLC measurement conditions, "%" means volume %.

[Titanium Compound]

Examples of the titanium compound include inorganic titanium compounds and organic titanium compounds. Note that the same as those described in the first aspect can be used as the titanium compound.

The amount of the titanium compound on a metal basis is 0.001 ppm or more and less than 5 ppm per mass of the EVOH resin composition. It is preferably 0.01 to 3 ppm, more preferably 0.03 to 1 ppm, and particularly preferably 0.05 to 0.5 ppm. When the amount of the titanium compound on a metal basis is within the above range, coloring change due to thermal degradation during melt molding can be suppressed, thereby achieving excellent long-run workability. Additionally, if the amount of the titanium compound on a metal basis is too small, a suppression effect on coloring change is reduced, whereas if the amount on a metal basis is too large, thermal decomposition of the EVOH resin easily occurs to cause coloring.

Furthermore, a mass ratio of the amount of the compound having a conjugated polyene structure to the amount of the titanium compound on a metal basis (amount of the compound having a conjugated polyene structure/amount of the titanium compound on a metal basis) is preferably 0.2 to 1000000, further preferably 0.3 to 100000, yet further preferably 10 to 23000, particularly preferably 50 to 12000, especially preferably 100 to 5000, and the most preferably 150 to 3000. If the mass ratio is too high, thermal stability tends to be disturbed, whereas if the mass ratio is too low, a molded article tends to be colored.

The amount of the titanium compound on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

Generally, an EVOH resin is colored due to thermal degradation. This is presumably because the EVOH resin is degraded by heat to generate a radical, which dehydrates a hydroxyl group contained in the EVOH resin to generate a double bond in a main chain of the EVOH resin; then, this site serves as a reaction starting point to further promote dehydration to form a conjugated polyene structure in the main chain of the EVOH resin.

On the contrary, the present EVOH resin composition contains the compound having a conjugated polyene structure and a particular minute amount of the titanium compound, such that coloring change due to thermal degradation of the EVOH resin is suppressed, achieving excellent long-run workability.

It is generally considered that when an EVOH resin composition contains a titanium compound, the EVOH resin composition is colored due to titanium ions; therefore, avoiding the use of a titanium compound is common general technical knowledge for a person skilled in the art. However, in the present disclosure, it has been found that when using a particular minute amount of the titanium compound, it is possible to produce an EVOH resin composition which suppresses coloring change due to thermal degradation, contrary to such common general technical knowledge.

The effects of the present disclosure can be obtained by the combined use of the compound having a conjugated polyene structure and a minute amount of the titanium compound, presumably because titanium can exist as a trivalent or tetravalent ion and a cycle occurs where the compound having a conjugated polyene structure reduces a tetravalent titanium ion to generate a trivalent titanium ion; then, this trivalent titanium ion reduces again the compound having a conjugated polyene structure, thereby allowing the compound having a conjugated polyene structure to regain its activity.

Furthermore, titanium is stable as a tetravalent ion and, even in a minute amount, coordinates to the double bond in the main chain of the EVOH resin as described above to be chelated and stabilized. Presumably, this prevents formation of the polyene structure.

On the other hand, if the amount of the titanium compound is too large, the titanium compound is considered to cause thermal decomposition of the EVOH resin, resulting in coloring.

[Other Thermoplastic Resins]

The present EVOH resin composition can contain a thermoplastic resin(s) other than the EVOH resin in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. The same additives as described in the first aspect can be used as the above additives.

[Method for Producing EVOH Resin Composition]

The present EVOH resin composition can be produced, for example, by mixing the EVOH resin, the compound having a conjugated polyene structure, and the titanium compound by any known method, for example, a dry blending method, melt mixing method, solution mixing method, or impregnation method. Among these, it is preferable that the present EVOH resin composition is produced by a method including melt-mixing a composition raw material containing the EVOH resin and the titanium compound. Furthermore, these production methods can optionally be combined.

An example of the dry blending method is a method (i) in which the pelletized EVOH resin is dry-blended with the compound having a conjugated polyene structure and/or the titanium compound by using a tumbler or the like.

Examples of the melt mixing method include: a method (ii) in which the pelletized EVOH resin is dry-blended with the compound having a conjugated polyene structure and/or the titanium compound and the resulting dry blend is melt-kneaded; and a method (iii) in which the compound having a conjugated polyene structure and/or the titanium compound is added to and melt-kneaded with the molten EVOH resin.

Examples of the solution mixing method include: a method (iv) in which the compound having a conjugated polyene structure and/or the titanium compound is added to a solution prepared by using a commercially available EVOH resin, the resultant is solidified and molded, and thereafter the solids are separated from liquid in a known manner and dried; and a method (v) in which the compound having a conjugated polyene structure and/or the titanium compound is incorporated into an ethylene-vinyl ester copolymer solution or a homogeneous solution (water/alcohol solution or the like) of the EVOH resin before saponification in the production process of the EVOH resin, the resultant is solidified and molded, and thereafter the solids are separated from liquid in a known manner and dried.

An example of the impregnation method is a method (vi) in which the pelletized EVOH resin is brought into contact with an aqueous solution containing the compound having a conjugated polyene structure and/or the titanium compound to incorporate the compound having a conjugated polyene structure and/or the titanium compound into the EVOH resin, and then the resultant is dried.

Usable as the aqueous solution containing the compound having a conjugated polyene structure and/or the titanium compound is an aqueous solution of the compound having a conjugated polyene structure and/or the titanium compound, or an elution of titanium ions obtained by immersing the compound having a conjugated polyene structure and/or the titanium compound in water containing various chemicals.

Note that in the impregnation method, the amount (on a metal basis) of the titanium compound can be controlled by a concentration of the titanium compound in the aqueous solution in which the EVOH resin is immersed, immersion temperature, immersion time, and the like.

The immersion time is typically 0.5 to 48 hours, preferably 1 to 36 hours, and the immersion temperature is typically 10 to 40°C, preferably 20 to 35°C.

Various drying methods can be employed as the drying method in the respective production methods, that may be either a stationary drying method or a fluidized drying method. These can also be used in combination.

As described above, the above different methods can be combined in the present disclosure. Among these, the melt mixing method, particularly the method (ii) is preferred in view of productivity and ability to obtain a resin composition with more remarkable effects of the present disclosure. Additionally, when the other thermoplastic resin(s) or other additives are used, they may be blended in a usual manner in accordance with the above production methods.

The present EVOH resin composition produced by the respective production methods is in any form, preferably in a form of pellets.

For example, the pellets each have spherical shape, oval shape, cylindrical shape, cubic shape, square prism shape, or the like, and typically have the oval shape or cylindrical shape. In view of convenience to subsequently use the pellets as a molding material, the oval shape has a minor diameter of typically 1 to 10 mm, preferably 2 to 6 mm, and even more preferably 2.5 to 5.5 mm; and a major diameter of typically 1.5 to 30 mm, preferably 3 to 20 mm, and even more preferably 3.5 to 10 mm. Additionally, the cylindrical shape has a bottom diameter of typically 1 to 6 mm, preferably 2 to 5 mm, and a length of typically 1 to 6 mm, preferably 2 to 5 mm.

Furthermore, the pelletized EVOH resin used in the respective production methods preferably has similar shape and size.

Even when the present EVOH resin composition is heated during melt molding, coloring change is suppressed and the long-run workability is excellent. A ratio of a YI (yellowness index) value after heating to a YI value before heating (YI value after heating/YI value before heating) is typically less than 5.0, preferably 4.9 or less, and more preferably 4.5 or less. When the ratio of the YI value after heating to the YI value before heating is within the above range, coloring change can be further suppressed. Note that the lower limit of the ratio of the YI value after heating to the YI value before heating is typically 1.

The difference of 0.1 in the YI value ratio is very large because it appears as a huge difference in a yield of actual production.

The YI value before heating can be determined by measuring the present EVOH resin composition pulverized into a 1 to 5 mm square and fully filled in a cylinder with an inner diameter of 32 mm and a height of 30 mm, by using a spectrocolorimeter SE6000 (available from Nippon Denshoku Industries Co., Ltd.).

Additionally, the YI value after heating can be determined by measuring the present EVOH resin composition pulverized into a 1 to 5 mm square and heated in an oven under the air atmosphere at 150°C for 5 hours in the same manner.

The present EVOH resin composition has a water content of typically 0.01 to 0.5% by mass, preferably 0.05 to 0.35% by mass, and particularly preferably 0.1 to 0.3% by mass.

Note that the water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

$$\text{Water content (\% by mass)} = [(W_1 - W_2)/W_1] \times 100$$

Furthermore, when the present EVOH resin composition is in a form of pellets, a known lubricant is also preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene bis-erucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition obtained in this manner is prepared in various forms such as pellets, powder, and liquid, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic or aliphatic polyketones. These can be used alone or in combination of two or more.

Among these, polyamide resins, polyolefin resins, polyester resins, and polystyrene resins are preferred, which are hydrophobic resins. Polyethylene resins, polypropylene resins, polycycloolefin resins, and unsaturated carboxyl-modified polyolefin resins obtained by modifying these polyolefins are more preferred.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the present multilayer structure. The total number of layers in the present multilayer structure is typically 2 to 15, preferably 3 to 10. In the above layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these methods, preferred is a production method including melt-molding the present EVOH resin composition layer, specifically the coextrusion method, in consideration of costs and environmental concerns.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40 to 170°C, preferably about 60 to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the above heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottle-shaped multilayer container (laminate structure) is produced from a multilayer parison (a hollow tubular preform before blowing), a blow molding process is employed. Specific examples thereof include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging containers for general foods, condiments such as mayonnaise and dressing, fermented foods such as miso, oil and fat foods such as salad oil, beverages, cosmetics, and pharmaceutical products.

<<Sixth Aspect>>

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, the EVOH resin has a hydroxyl group relatively active in a molecule and therefore tends to be easily degraded by heat, causing a problem of coloration during melt molding.

To address the above problem, for example, WO-A-2013-146961 discloses incorporation of a particular amount of unsaturated aldehyde into an EVOH resin to suppress oxidative degradation during melt molding, thereby suppressing coloring.

Molding apparatuses tend to have higher functionality in recent years, along with diversified feed block and die designs in the molding apparatuses and various demands for higher functionality such as thinner films and the increased number of layers in a multilayer structure in a final product. Meanwhile, a resin tends to be thermally degraded in a molding apparatus having a complicated structure due to the higher functionality, causing coloring and the like to reduce productivity of products.

While the unsaturated aldehyde is used for suppressing coloring during melt molding in WO-A-2013-146961, such aldehyde compound even in a very small amount may cause an offensive odor. Particularly, there is a concern that the aldehyde compound is exposed to high temperature during melt molding and evaporates, making working environment worse. Therefore, there is a demand for an EVOH resin composition which suppresses coloring in a melt molding process without using such volatile compound and is therefore excellent in long-run workability.

An object of the present disclosure is to provide an EVOH resin composition suppressing coloring change due to thermal degradation during melt molding.

[Means for Solving the Problems]

Meanwhile, in view of the circumstances, the inventors of the present disclosure have found that an EVOH resin composition suppresses coloring change due to thermal degradation during melt molding can be obtained by adding a boron compound and a particular minute amount of a titanium compound to the EVOH resin.

Specifically, the present disclosure has the following aspects.

[6-1] An EVOH resin composition comprising an EVOH resin, a boron compound, and a titanium compound, wherein the amount of the titanium compound on a metal basis is 0.001 ppm or more and less than 5 ppm per mass of the EVOH resin composition.

[6-2] The EVOH resin composition according to [6-1], wherein the amount of the boron compound in terms of boron equivalents is 5 to 400 ppm per mass of the EVOH resin composition.

[6-3] The EVOH resin composition according to [6-1] or [6-2], wherein a mass ratio of the amount of the boron compound in terms of boron equivalents to a metal content of the titanium compound is 1 to 400000.

[6-4] Pellets comprising the EVOH resin composition according to any one of [6-1] to [6-3].

[6-5] A multilayer structure comprising at least one layer comprising the EVOH resin composition according to any one of [6-1] to [6-3].

[6-6] A method for producing the EVOH resin composition according to any one of [6-1] to [6-3], comprising melt-mixing a composition raw material containing the EVOH resin and a titanium compound.

[6-7] A method for producing the multilayer structure according to [6-5], comprising melt-molding a layer comprising the EVOH resin composition.

[Effects of the Disclosure]

The EVOH resin composition according to the present disclosure suppresses coloring change of an EVOH resin during melt molding, and is excellent in long-run workability.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin as a main component, a boron compound, and a particular minute amount of a titanium compound.

Specifically, the present EVOH resin composition contains the EVOH resin as a base resin, where the amount of the EVOH resin in the present EVOH resin composition is typically 70% by mass or more, preferably 80% by mass or more, more preferably 90% by mass or more, and particularly preferably 95% by mass or more.

Each component will be described below.

[EVOH Resin]

The EVOH resin used in the present disclosure is a resin typically obtained by saponifying an ethylene-vinyl ester copolymer which is a copolymer of ethylene and a vinyl ester monomer, and the same as those described in the first aspect can be used as the EVOH resin.

[Boron Compound]

Examples of the boron compound include: boric acids or metal salts thereof, for example, sodium borates (sodium metaborate, sodium diborate, sodium tetraborate, sodium pentaborate, sodium hexaborate, sodium octaborate, etc.), potassium borates (potassium metaborate, potassium tetraborate, potassium pentaborate, potassium hexaborate, potassium octaborate, etc.), lithium borates (lithium metaborate, lithium tetraborate, lithium pentaborate, etc.), calcium borates, barium borates (barium orthoborate, barium metaborate, barium diborate, barium tetraborate, etc.), magnesium borates (magnesium orthoborate, magnesium diborate, magnesium metaborate, trimagnesium tetraborate, pentamagnesium tetraborate, etc.), manganese borates (manganese(I) borate, manganese metaborate, manganese tetraborate, etc.), cobalt borates, zinc borates (zinc tetraborate, zinc metaborate, etc.), cadmium borates (cadmium orthoborate, cadmium tetraborate, etc.), silver borates (silver metaborate, silver tetraborate, etc.), copper borates (copper(II) borate, copper metaborate, copper tetraborate, etc.), nickel borates (nickel orthoborate, nickel diborate, nickel tetraborate, nickel octaborate, etc.), aluminum potassium borates, ammonium borates (ammonium metaborate, ammonium tetraborate, ammonium pentaborate, ammonium octaborate, etc.), lead borates (lead metaborate, lead hexaborate, etc.), bismuth borates; and borate minerals such as borax, kernite, inyoite, kotoite, suanite, and szaibelyite. These can be used alone or in combination of two or more. Among these, borax and boric acid are preferred, and the boric acid is particularly preferred.

The boron compound can be used in any form, for example, solid (powder, fine powder, or flakes), semisolid, liquid, paste, solution, emulsion (aqueous dispersion), or the like. Among these, the powder form is preferred. The powdered boron compound has a particle diameter of typically 0.1 to 100 $\mu$m, preferably 1 to 75 $\mu$m, and particularly preferably 5 to 50 $\mu$m.

The amount of the boron compound in terms of boron equivalents is preferably 5 to 400 ppm, more preferably 10 to 300 ppm, and further preferably 50 to 200 ppm per mass of the EVOH resin composition. If the amount is too small, formability of the EVOH resin composition tends to be reduced.

Note that the amount of the boron compound in terms of boron equivalents can be measured, for example, by an atomic absorption photometer using a certain volume of a test liquid prepared by adding pure water to a solution of the present EVOH resin composition which is ashed by heating and treated with acid such as hydrochloric acid.

[Titanium Compound]

Examples of the titanium compound include inorganic titanium compounds and organic titanium compounds. Note that the same as those described in the first aspect can be used as the titanium compound.

The amount of the titanium compound on a metal basis is 0.001 ppm or more and less than 5 ppm per mass of the EVOH resin composition. It is preferably 0.01 to 3 ppm, more preferably 0.03 to 2 ppm, and particularly preferably 0.05 to 1 ppm. When the amount of the titanium compound on a metal basis is within the above range, coloring change due to thermal degradation during melt molding can be suppressed, thereby achieving excellent long-run workability. Additionally, if the amount of the titanium compound on a metal basis is too small, a suppression effect on coloring change is reduced, whereas if the amount on a metal basis is too large, thermal decomposition of the EVOH resin easily occurs to cause coloring.

The amount of the titanium compound on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

A mass ratio of the amount of the boron compound in terms of boron equivalents to the amount of the titanium compound on a metal basis (amount of the titanium compound on a metal basis/amount of the boron compound in terms of boron equivalents) is preferably 1 to 400000, further preferably 2 to 40000, yet further preferably 5 to 10000, particularly preferably 30 to 4000, especially preferably 50 to 2000, and the most preferably 70 to 900.

If the mass ratio is too high, a suppression effect on coloring tends to be reduced, whereas if the mass ratio is too low, a molded article tends to be colored.

Generally, an EVOH resin is colored due to thermal degradation. This is presumably because the EVOH resin is degraded by heat to generate a radical, which dehydrates a hydroxyl group contained in the EVOH resin to generate a double bond in a main chain of the EVOH resin; then, this site serves as a reaction starting point to further promote dehydration to form a conjugated polyene structure in the main chain of the EVOH resin.

On the contrary, the present EVOH resin composition contains the boron compound and a particular minute amount of the titanium compound, such that coloring change due to thermal degradation of the EVOH resin is suppressed, achieving excellent long-run workability.

It is generally considered that when an EVOH resin composition contains a titanium compound, the EVOH resin composition is colored due to titanium ions; therefore, avoiding the use of a titanium compound is common general technical knowledge for a person skilled in the art. However, in the present disclosure, it has been found that when using a particular minute amount of the titanium compound, it is possible to produce an EVOH resin composition which suppresses coloring change due to thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents formation of the polyene structure.

On the other hand, if the amount of the titanium compound is too large, the titanium compound is considered to cause thermal decomposition of the EVOH resin, resulting in coloring.

[Other Thermoplastic Resins]

The present EVOH resin composition can contain a thermoplastic resin(s) other than the EVOH resin in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. The same additives as described in the first aspect can be used as the above additives.

[Method for Producing EVOH Resin Composition]

The present EVOH resin composition can be produced, for example, by mixing the EVOH resin, the boron compound, and the titanium compound by any known method, for example, a dry blending method, melt mixing method, solution mixing method, or impregnation method. Among these, it is preferable that the present EVOH resin composition is produced by a method including melt-mixing a composition raw material containing the EVOH resin and the titanium compound. Furthermore, these production methods can optionally be combined.

An example of the dry blending method is a method (i) in which the pelletized EVOH resin is dry-blended with the boron compound and/or the titanium compound by using a tumbler or the like.

Examples of the melt mixing method include: a method (ii) in which the pelletized EVOH resin is dry-blended with the boron compound and/or the titanium compound and the resulting dry blend is melt-kneaded; and a method (iii) in which the boron compound and/or the titanium compound is added to and melt-kneaded with the molten **EVOH** resin.

Examples of the solution mixing method include: a method (iv) in which the boron compound and/or the titanium compound is added to a solution prepared by using a commercially available **EVOH** resin, the resultant is solidified and molded, and thereafter the solids are separated from liquid in a known manner and dried; and a method (v) in which the boron compound and/or the titanium compound is incorporated into an ethylene-vinyl ester copolymer solution or a homogeneous solution (water/alcohol solution or the like) of the EVOH resin before saponification in the production process of the EVOH resin, the resultant is solidified and molded, and thereafter the solids are separated from liquid in a known manner and dried.

An example of the impregnation method is a method (vi) in which the pelletized EVOH resin is brought into contact with an aqueous solution containing the boron compound and/or the titanium compound to incorporate the boron compound and/or the titanium compound into the EVOH resin, and then the resultant is dried.

Usable as the aqueous solution containing the boron compound and/or the titanium compound is an aqueous solution of the boron compound and/or the titanium compound or an elution of titanium ions obtained by immersing the boron compound and/or the titanium compound in water containing various chemicals.

Note that in the impregnation method, the amount of the boron compound (in terms of boron equivalents) or the amount (on a metal basis) of the titanium compound can be controlled by a concentration of the boron compound or the titanium compound in the aqueous solution in which the EVOH resin is immersed, immersion temperature, immersion time, and the like.

The immersion time is typically 0.5 to 48 hours, preferably 1 to 36 hours, and the immersion temperature is typically 10 to 40°C, preferably 20 to 35°C.

Various drying methods can be employed as the drying method in the respective production methods, that may be either a stationary drying method or a fluidized drying method. These can also be used in combination.

As described above, the above different methods can be combined in the present disclosure. Among these, the melt mixing method, particularly the method (ii) is preferred in view of productivity and ability to obtain a resin composition with more remarkable effects of the present disclosure. Additionally, when the other thermoplastic resin(s) or other additives are used, they may be blended in a usual manner in accordance with the above production methods.

The present EVOH resin composition produced by the respective production methods is in any form, preferably in a form of pellets.

For example, the pellets each have spherical shape, oval shape, cylindrical shape, cubic shape, square prism shape, or the like, and typically have the oval shape or cylindrical shape. In view of convenience to subsequently use the pellets as a molding material, the oval shape has a minor diameter of typically 1 to 10 mm, preferably 2 to 6 mm, and even more preferably 2.5 to 5.5 mm; and a major diameter of typically 1.5 to 30 mm, preferably 3 to 20 mm, and even more preferably 3.5 to 10 mm. Additionally, the cylindrical shape has a bottom diameter of typically 1 to 6 mm, preferably 2 to 5 mm, and a length of typically 1 to 6 mm, preferably 2 to 5 mm.

Furthermore, the pelletized EVOH resin used in the respective production methods preferably has similar shape and size.

Even when the present EVOH resin composition is heated during melt molding, coloring change is suppressed and the long-run workability is excellent. A ratio of a YI (yellowness index) value after heating to a YI value before heating (YI value after heating/YI value before heating) is typically 5.0 or less, preferably 4.9 or less. When the ratio of the YI value after heating to the YI value before heating is within the above range, coloring change can be further suppressed. Note that the lower limit of the ratio of the YI value after heating to the YI value before heating is typically 1.

Note that the difference of 0.1 in the YI value ratio is very large because it appears as a huge difference in a yield of actual production.

The YI value before heating can be determined by measuring the present EVOH resin composition pulverized into a 1 to 5 mm square and fully filled in a cylinder with an inner diameter of 32 mm and a height of 30 mm, by using a spectrocolorimeter SE6000 (available from Nippon Denshoku Industries Co., Ltd.).

Additionally, the YI value after heating can be determined by measuring the present EVOH resin composition pulverized into a 1 to 5 mm square and heated in an oven under the air atmosphere at 150°C for 5 hours in the same manner.

The present EVOH resin composition has a water content of typically 0.01 to 0.5% by mass, preferably 0.05 to 0.35% by mass, and particularly preferably 0.1 to 0.3% by mass.

Note that the water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

$$\text{Water content (\% by mass)} = [(W_1 - W_2)/W_1] \times 100$$

Furthermore, when the present EVOH resin composition is in a form of pellets, a known lubricant is also preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene bis-erucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition obtained in this manner is prepared in various forms such as pellets, powder, and liquid, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin

having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic or aliphatic polyketones. These can be used alone or in combination of two or more.

Among these, polyamide resins, polyolefin resins, polyester resins, and polystyrene resins are preferred, which are hydrophobic resins. Polyethylene resins, polypropylene resins, polycycloolefin resins, and unsaturated carboxyl-modified polyolefin resins obtained by modifying these polyolefins are more preferred.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the present multilayer structure. The total number of layers in the present multilayer structure is typically 2 to 15, preferably 3 to 10. In the above layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these methods, preferred is a production method including melt-molding the present EVOH resin composition layer, specifically the coextrusion method, in consideration of costs and environmental concerns.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40 to 170°C, preferably about 60 to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the above heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottle-shaped multilayer container (laminate structure) is produced from a multilayer parison (a hollow tubular preform before blowing), a blow molding process is employed. Specific examples thereof include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging containers for general foods, condiments such as mayonnaise and dressing, fermented foods such as miso, oil and fat foods such as salad oil, beverages, cosmetics, and pharmaceutical products.


<<Seventh Aspect>>

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

Furthermore, in a multilayer pipe used for a floor heating system with hot water circulation, an EVOH resin is also used as a molding material for forming one layer in the multilayer pipe to prevent it from corroding, etc.

However, the EVOH resin has a hydroxyl group relatively active in a molecule and therefore tends to be easily degraded by heat. Accordingly, problems such as coloring and gelling occur during melt molding and melt stability tends to be reduced. Methods for solving such problems by adding various thermal stabilizers have been known (for example, see JP-A-S63-286459).

Meanwhile, when an EVOH resin composition is used for a long period of time, the resin may be degraded depending on usage environment, causing an odor or a crack. For example, in the case of the multilayer pipe, exposure to high temperature for a long period of time tends to accelerate degradation due to oxygen in the air. To suppress such degradation, techniques using a particular amount of an antioxidant and a conjugated polyene compound in combination have been known (for example, see WO-A-2011-125736).

Furthermore, agricultural materials (such as silage films and multi-films) also tend to be easily degraded by oxygen in the air because they are used outdoors for a long period of time and exposed to sunlight, geothermal heat, wind and rain, etc. It has been known that a silage film with favorable weather resistance can be produced by blending a particular amount of a hindered amine compound to suppress such degradation (for example, see JP-A-2014-172928).

However, the respective methods in the above patent documents are still insufficient for suppressing degradation due to oxygen and the like as described above.

Furthermore, molding apparatuses tend to have higher functionality in recent years, along with diversified feed block and die designs in the molding apparatuses and various demands for higher functionality such as thinner films and the increased number of layers in a multilayer structure in a final product. Meanwhile, a resin tends to be thermally degraded in a molding apparatus having a complicated structure due to the higher functionality, causing coloring and the like to reduce productivity of products. This leads to a demand for further improvement.

An object of the present disclosure is to provide an EVOH resin composition suppressing coloring change of an EVOH resin during heating in melt molding and the like.

[Means for Solving the Problems]

Meanwhile, in view of the circumstances, the inventors of the present disclosure have found that an EVOH resin composition suppressing coloring change of an EVOH resin during heating in melt molding and the like can be obtained by adding an antioxidant and a particular minute amount of a titanium compound to the EVOH resin.

Specifically, the present disclosure has the following aspects.

[7-1] An EVOH resin composition comprising an EVOH resin, an antioxidant, and a titanium compound, wherein the amount of the titanium compound on a metal basis is 0.001 ppm or more and less than 5 ppm per mass of the EVOH resin composition.

[7-2] The EVOH resin composition according to [7-1], wherein the antioxidant content is 1 to 30000 ppm per mass of the EVOH resin composition.

[7-3] The EVOH resin composition according to [7-1] or [7-2], wherein a mass ratio of the antioxidant content to the amount of the titanium compound on a metal basis is 0.2 to 30000000.

[7-4] Pellets comprising the EVOH resin composition according to any one of [7-1] to [7-3].

[7-5] A multilayer structure comprising at least one layer comprising the EVOH resin composition according to any one of [7-1] to [7-3].

[7-6] A multilayer pipe comprising at least one layer comprising the EVOH resin composition according to any one of [7-1] to [7-3].

[7-7] A method for producing the EVOH resin composition according to any one of [7-1] to [7-3], comprising melt-mixing a composition raw material containing the EVOH resin and a titanium compound.

[7-8] A method for producing the multilayer structure according to [7-5], comprising melt-molding a layer comprising the EVOH resin composition.

[Effects of the Disclosure]

The EVOH resin composition according to the present disclosure suppresses coloring change of an EVOH resin during melt molding, and is excellent in long-run workability.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin as a main component, an antioxidant, and a particular minute amount of a titanium compound.

Specifically, the present EVOH resin composition contains the EVOH resin as a base resin, where the amount of the EVOH resin in the present EVOH resin composition is typically 70% by mass or more, preferably 80% by mass or more, more preferably 90% by mass or more, and particularly preferably 95% by mass or more.

Each component will be described below.

[EVOH Resin]

The EVOH resin used in the present disclosure is a resin typically obtained by saponifying an ethylene-vinyl ester copolymer which is a copolymer of ethylene and a vinyl ester monomer, and the same as those described in the first aspect can be used as the EVOH resin.

[Antioxidant]

The antioxidant is not particularly limited as long as it has an action of capturing a radical generated by degradation of a resin, except quinone compounds and compounds having a conjugated polyene structure. Various antioxidants for a resin are usable.

The antioxidant has a melting point of typically 200°C or lower, preferably 170°C or lower. Note that the lower limit of the melting point of the antioxidant is typically 30°C. If the melting point of the antioxidant is too high, the antioxidant does not melt in an extruder and thus the antioxidant tends to be localized in a molded article, resulting in reduction in quality.

Furthermore, the antioxidant has a molecular weight of typically 100 to 8000. The molecular weight is preferably 200 to 6000, particularly preferably 300 to 4000. If the molecular weight of the antioxidant is too low, the antioxidant tends to bleed out from a surface of a molded article to be obtained, whereas if the molecular weight is too high, the antioxidant tends to be localized in a molded article, resulting in reduction in quality.

Examples of the antioxidant include hindered phenol antioxidants, phosphite antioxidants, thioether antioxidants, hindered amine antioxidants, benzotriazole antioxidants, benzophenone antioxidants, and the like. These may be used alone or in combination of two or more. Among these, in view of excellent degradation resistance, hindered phenol antioxidants and hindered amine antioxidants are preferred, and the hindered phenol antioxidants are particularly preferred.

While the hindered phenol antioxidants themselves are excellent in thermal stability, they are capable of capturing an oxygen radical, which is the cause of oxidative degradation, and are highly effective in preventing oxidative degradation when blended with the EVOH resin composition as the antioxidant.

Furthermore, the hindered amine antioxidants not only prevent thermal degradation of an EVOH resin, but also have an effect of capturing aldehyde generated by thermal decomposition of the EVOH resin, thereby reducing generation of decomposition gas to prevent generation of air bubbles during molding. Then, when the present EVOH resin composition is used, for example, as a food packaging container material, a problem that an odor caused by aldehyde impairs the taste of the contents is also alleviated by capturing the aldehyde.

Examples of the hindered phenol antioxidants include pentaerythritol tetrakis[3-(3,5-di-tert-butyl-4-hydroxyphenyl)propionate] ("IRGANOX 1010" produced by BASF SE, melting point: 110 to 125°C, molecular weight: 1178), octadecyl-3-(3,5-di-tert-butyl-4-hydroxyphenyl)propionate ("IRGANOX 1076" produced by BASF SE, melting point: 50 to 55°C, molecular weight: 531), N,N'-hexane-1,6-diylbis[3-(3,5-di-tert-butyl-4-hydroxyphenyl)propionamide] ("IRGANOX 1098" produced by BASF SE, melting point: 156 to 161°C, molecular weight: 637), triethylene glycol-bis[3-(3-tert-butyl-5-methyl-4-hydroxyphenyl)propionate] ("IRGANOX 245" produced by BASF SE, melting point: 76 to 79°C, molecular weight: 587), 1,6-hexanediol-bis[3-(3,5-di-tert-butyl-4-hydroxyphenyl)propionate] ("IRGANOX 259" produced by BASF SE, melting point: 104 to 108°C, molecular weight: 639), 2,2'-methylene-bis(4-methyl-6-tert-buthylphenol) ("Sumilizer MDP-s" available from Sumitomo Chemical Co., Ltd., melting point: about 128°C, molecular weight: 341), 2-tert-butyl-6-(3-tert-buthyl-2-hydroxy-5-methylbenzyl)-4-methylphenylacrylate ("Sumilizer GM" available from Sumitomo Chemical Co., Ltd., melting point: about 128°C, molecular weight: 395), and 3,9-bis[2-{3-(3-tert-buthyl-4-hydroxy-5-methylphenyl)propionyloxy}-1,1-dimethylethyl]-2,4,8,10-tetraoxaspiro[5.5]undecane ("Sumilizer GA-80" available from Sumitomo Chemical Co., Ltd., melting point: about 110°C, molecular weight: 741). Among these, in view of the excellent degradation resistance effect, pentaerythritol tetrakis[3-(3,5-di-tert-butyl-4-hydroxyphenyl)propionate] is preferred.

Preferred examples of the hindered amine antioxidants include piperidine derivatives. Particularly, a 2,2,6,6-tetraalkyl piperidine derivative having a substituent at 4-position is preferably used. Examples of the substituent at 4-position include a carboxyl group, alkoxy group, and alkylamino group.

Furthermore, in the hindered amine antioxidant for use, a hindered amine group may have an alkyl group substituted at N-position, but more preferably has a hydrogen atom bonded to the N-position because of its excellent thermal stability effect.

Examples of the hindered amine antioxidants include bis(2,2,6,6-tetramethyl-4-piperidyl)sebacate ("TINUVIN 770" produced by BASF SE, melting point: 81 to 85°C, molecular weight: 481), bis(1,2,2,6,6-pentamethyl-4-piperidyl) sebacate and 1,2,2,6,6-pentamethyl-4-piperidyl sebacate (mixture) ("TINUVIN 765" produced by BASF SE, liquid compound, molecular weight: 509), polycondensate of dimethyl succinate and 1-(2-hydroxyethyl)-4-hydroxy-2,2,6,6-tetramethyl piperidine ("TINUVIN 622LD" produced by BASF SE, melting point: 55 to 70°C, molecular weight: 3100 to 4000), condensate of N,N'-bis(3-aminopropyl)ethylenediamine and 2,4-bis[N-butyl-N-(1,2,2,6,6-pentamethyl-4-piperidyl)amino]-6-chrolo-1,3,5-triazine ("CHIMASSORB 119FL" produced by BASF SE, melting point: 130 to 140°C, molecular weight: 2000 or more), poly[[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]] ("CHIMASSORB 944LD" produced by BASF SE, melting point: 100 to 135°C, molecular weight: 2000 to 3100), bis(1,2,2,6,6-pentamethyl-4-piperidyl)[[3,5-bis(1,1-dimethylethyl)-4-hydroxyphenyl]methyl]butylmalonate ("TINUVIN 144" produced by BASF SE, melting point: 146 to 150°C, molecular weight: 685), N,N'-1,6-hexanediylbis{N-(2,2,6,6-tetramethyl-4-piperidinyl)-formamide} ("UVINUL 4050H" produced by BASF SE, melting point: 157°C, molecular weight: 450), and "UVINUL 5050H" produced by BASF SE (melting point: 104 to 112°C, molecular weight: about 3500).

The antioxidant can be used in any form including powder, granule, liquid, paste, emulsion, and the like.

The antioxidant content is preferably 1 to 30000 ppm, more preferably 100 to 10000 ppm, particularly preferably 1000 to 5000 ppm, and especially preferably 2000 to 4000 ppm per mass of the EVOH resin composition. If the content is too small, degradation resistance tends to be reduced, whereas if the content is too large, the antioxidant tends to bleed out from a surface of a molded article.

Note that in a case of using two or more kinds of antioxidants having a different structure, composition, molecular weight, etc. from each other, the total mass thereof (total contents) may be within the above range.

The antioxidant content can be measured as follows. Firstly, 1 g of a sample obtained by freezing and pulverizing the present EVOH resin composition is extracted with an extraction solvent, and a certain volume of the resulting extraction solution is measured using a liquid chromatograph-UV spectrophotometer. Separately, a calibration curve is prepared based on a standard solution of the antioxidant, and the antioxidant content can be determined by an absolute calibration curve method.

[Titanium Compound]

Examples of the titanium compound include inorganic titanium compounds and organic titanium compounds. Note that the same as those described in the first aspect can be used as the titanium compound.

The amount of the titanium compound on a metal basis is 0.001 ppm or more and less than 5 ppm per mass of the EVOH resin composition. It is preferably 0.01 to 3 ppm, more preferably 0.03 to 1 ppm, and particularly preferably 0.05 to 0.5 ppm. When the amount of the titanium compound on a metal basis is within the above range, coloring change due to thermal degradation during melt molding can be suppressed, thereby achieving excellent long-run workability. Additionally, if the amount of the titanium compound on a metal basis is too small, a suppression effect on coloring change is reduced, whereas if the amount on a metal basis is too large, thermal decomposition of the EVOH resin easily occurs to cause coloring.

The amount of the titanium compound on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

A mass ratio of the antioxidant content to the amount of the titanium compound on a metal basis [antioxidant content/amount of the titanium compound on a metal basis] is preferably 0.2 to 30000000, further preferably 0.3 to 3000000, yet further preferably 100 to 300000, particularly preferably 500 to 100000, especially preferably 2000 to 80000, and the most preferably 5000 to 50000. If the mass ratio is too high, thermal stability tends to be reduced, whereas if the mass ratio is too low, a molded article tends to be colored.

Generally, an EVOH resin is colored due to thermal degradation. This is presumably because the EVOH resin is degraded by heat to generate a radical, which dehydrates a hydroxyl group contained in the EVOH resin to generate a double bond in a main chain of the EVOH resin; then, this site serves as a reaction starting point to further promote dehydration to form a conjugated polyene structure in the main chain of the EVOH resin.

On the contrary, the present EVOH resin composition contains the antioxidant and a particular minute amount of the titanium compound, such that coloring change due to thermal degradation of the EVOH resin is suppressed, achieving excellent long-run workability.

It is generally considered that when an EVOH resin composition contains a titanium compound, the EVOH resin composition is colored due to titanium ions; therefore, avoiding the use of a titanium compound is common general technical knowledge for a person skilled in the art. However, in the present disclosure, it has been found that when using a particular minute amount of the titanium compound, it is possible to produce an EVOH resin composition which suppresses coloring change due to thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents formation of the polyene structure.

On the other hand, if the amount of the titanium compound is too large, the titanium compound is considered to cause thermal decomposition of the EVOH resin, resulting in coloring.

[Other Thermoplastic Resins]

The present EVOH resin composition can contain a thermoplastic resin(s) other than the EVOH resin in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. The same additives as described in the first aspect can be used as the above additives.

[Method for Producing EVOH Resin Composition]

The present EVOH resin composition can be produced, for example, by mixing the EVOH resin, the antioxidant, and the titanium compound by any known method, for example, a dry blending method, melt mixing method, solution mixing method, or impregnation method. Among these, it is preferable that the present EVOH resin composition is produced by a method including melt-mixing a composition raw material containing the EVOH resin and the titanium compound. Furthermore, these production methods can optionally be combined.

An example of the dry blending method is a method (i) in which the pelletized EVOH resin is dry-blended with the antioxidant and/or the titanium compound by using a tumbler or the like.

Examples of the melt mixing method include: a method (ii) in which the pelletized EVOH resin is dry-blended with the antioxidant and/or the titanium compound and the resulting dry blend is melt-kneaded; and a method (iii) in which the antioxidant and/or the titanium compound is added to and melt-kneaded with the molten EVOH resin.

Examples of the solution mixing method include: a method (iv) in which the antioxidant and/or the titanium compound is added to a solution prepared by using a commercially available EVOH resin, the resultant is solidified and molded, and thereafter the solids are separated from liquid in a known manner and dried; and a method (v) in which the antioxidant and/or the titanium compound is incorporated into an ethylene-vinyl ester copolymer solution or a homogeneous solution (water/alcohol solution or the like) of the EVOH resin before saponification in the production process of the EVOH resin, the resultant is solidified and molded, and thereafter the solids are separated from liquid in a known manner and dried.

An example of the impregnation method is a method (vi) in which the pelletized EVOH resin is brought into contact with an aqueous solution containing the antioxidant and/or the titanium compound to incorporate the antioxidant and/or the titanium compound into the EVOH resin, and then the resultant is dried.

Usable as the aqueous solution containing the titanium compound is an aqueous solution of the titanium compound or an elution of titanium ions obtained by immersing the titanium compound in water containing various chemicals.

Note that in the impregnation method, the amount (on a metal basis) of the antioxidant or the titanium compound can be controlled by a concentration of the antioxidant or the titanium compound in the aqueous solution in which the EVOH resin is immersed, immersion temperature, immersion time, and the like.

The immersion time is typically 0.5 to 48 hours, preferably 1 to 36 hours, and the immersion temperature is typically 10 to 40°C, preferably 20 to 35°C.

Various drying methods can be employed as the drying method in the respective production methods, that may be either a stationary drying method or a fluidized drying method. These can also be used in combination.

As described above, the above different methods can be combined in the present disclosure. Among these, the melt mixing method, particularly the method (ii) is preferred in view of productivity and ability to obtain a resin composition with more remarkable effects of the present disclosure. Additionally, when the other thermoplastic resin(s) or other additives are used, they may be blended in a usual manner in accordance with the above production methods.

The present EVOH resin composition produced by the respective production methods is in any form, preferably in a form of pellets.

For example, the pellets each have spherical shape, oval shape, cylindrical shape, cubic shape, square prism shape, or the like, and typically have the oval shape or cylindrical shape. In view of convenience to subsequently use the pellets as a molding material, the oval shape has a minor diameter of typically 1 to 10 mm, preferably 2 to 6 mm, and even more preferably 2.5 to 5.5 mm; and a major diameter of typically 1.5 to 30 mm, preferably 3 to 20 mm, and even more preferably 3.5 to 10 mm. Additionally, the cylindrical shape has a bottom diameter of typically 1 to 6 mm, preferably 2 to 5 mm, and a length of typically 1 to 6 mm, preferably 2 to 5 mm.

Furthermore, the pelletized EVOH resin used in the respective production methods preferably has similar shape and size.

Even when the present EVOH resin composition is heated during melt molding, coloring is suppressed and the long-run workability is excellent. A ratio of a YI (yellowness index) value before heating to a YI value after heating (YI value before heating/YI value after heating) is typically 4.1 or less, preferably 4.0 or less, and more preferably 3.7 or less. When the ratio of the YI value before heating to the YI value after heating is within the above range, coloring can be further suppressed. Note that the lower limit of the ratio of the YI value before heating to the YI value after heating is typically 1.

Note that the difference of 0.1 in the YI value ratio is very large because it appears as a huge difference in a yield of actual production.

The YI value before heating can be determined by measuring the present EVOH resin composition pulverized into a 1 to 5 mm square and fully filled in a cylinder with an inner diameter of 32 mm and a height of 30 mm, by using a spectrocolorimeter SE6000 (available from Nippon Denshoku Industries Co., Ltd.).

Additionally, the YI value after heating can be determined by measuring the present EVOH resin composition pulverized into a 1 to 5 mm square and heated in an oven under the air atmosphere at 150°C for 5 hours in the same manner.

The present EVOH resin composition has a water content of typically 0.01 to 0.5% by mass, preferably 0.05 to 0.35% by mass, and particularly preferably 0.1 to 0.3% by mass.

Note that the water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

$$\text{Water content (\% by mass)} = [(W_1 - W_2)/W_1] \times 100$$

Furthermore, when the present EVOH resin composition is in a form of pellets, a known lubricant is also preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene biserucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition obtained in this manner is prepared in various forms such as pellets, powder, and liquid, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-α-olefin (α-olefin having 4 to 20 carbon atoms) copolymers, polypropylene resins such as polypropylenes and propylene-α-olefin (α-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic or aliphatic polyketones. These can be used alone or in combination of two or more.

Among these, polyamide resins, polyolefin resins, polyester resins, and polystyrene resins are preferred, which are hydrophobic resins. Polyethylene resins, polypropylene resins, polycycloolefin resins, and unsaturated carboxyl-modified polyolefin resins obtained by modifying these polyolefins are more preferred.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the present multilayer structure. The total number of layers in the present multilayer structure is typically 2 to 15, preferably 3 to 10. In the above layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these methods, preferred is a production method including melt-molding the present EVOH resin composition layer, specifically the coextrusion method, in consideration of costs and environmental concerns.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40 to 170°C, preferably about 60 to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the above heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 μm, preferably 30 to 3000 μm, and particularly preferably 50 to 2000 μm. The thickness of the present EVOH resin composition layer is typically 1 to 500 μm, preferably 3 to 300 μm, and particularly preferably 5 to 200 μm. The thickness of the base material resin layer is typically 5 to 3000 μm, preferably 10 to 2000 μm, and particularly preferably 20 to 1000 μm. The thickness of the adhesive resin layer is typically 0.5 to 250 μm, preferably 1 to 150 μm, and particularly preferably 3 to 100 μm.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottleshaped multilayer container (laminate structure) is produced from a multilayer parison (a hollow tubular preform before blowing), a blow molding process is employed. Specific examples thereof include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging containers for general foods, condiments such as mayonnaise and dressing, fermented foods such as miso, oil and fat foods such as salad oil, beverages, cosmetics, and pharmaceutical products. Further, a layer made of the present EVOH resin composition is excellent in degradation resistance, and therefore especially useful for agricultural materials such as silage films and multi-films.

[Multilayer Pipe]

A multilayer pipe according to one embodiment of the present disclosure (hereinafter referred to as "the present multilayer pipe") is a multi-layered pipe having the present EVOH resin composition layer. The present EVOH resin composition layer can be laminated with a layer made of other resin composition(s) mainly composed of a resin other than the present EVOH resin composition to further impart strength, protect the present EVOH resin composition layer from moisture or other effects, and impart other functions.

The present multilayer pipe is excellent in gas barrier properties, because the present EVOH resin composition layer constituting the present multilayer pipe contains the EVOH resin as a main component. Furthermore, in the present multilayer pipe, the present EVOH resin composition layer is excellent in degradation resistance even when exposed to high temperature for a prolonged period. Therefore, a crack in the present EVOH resin composition layer due to oxidative degradation will be prevented even after prolonged use at high temperature. With such properties, the present multilayer pipe can be suitably used, for example, as a hot water circulation pipe and a heat insulative multilayer pipe for district air conditioning.

The layered configuration of the multilayer structure can be employed as a layered configuration of the present multilayer pipe. Then, in a case where the present multilayer pipe is used as a hot water circulation pipe, for example, generally employed is a multilayer pipe having a three-layer structure of the present EVOH resin composition layer/-adhesive resin layer/thermoplastic resin layer, where the present EVOH resin composition layer is an outermost layer, a layer formed by using an adhesive resin is an intermediate layer, and a layer formed by using a thermoplastic resin is an innermost layer.

Examples of the thermoplastic resin include polyolefins such as polyethylene, polypropylene, poly-1-butene, and poly-4-methyl-1-pentene. Among these, polyethylene, especially high-density polyethylene is preferred.

Furthermore, examples of the adhesive resin include carboxyl-containing modified polyolefin polymers obtained by chemically bonding an unsaturated carboxylic acid or anhydride thereof to a polyolefin resin by addition reaction, graft reaction, or the like, similarly to the aforementioned adhesive resin used in the multilayer structure.

In a case where the present multilayer pipe is used as a hot water circulation pipe such as a floor heating pipe, the present EVOH resin composition layer is preferably arranged as the outermost layer, as described above, from the viewpoint of gas barrier properties. In other words, since the present EVOH resin composition layer excellent in the gas barrier properties as well as degradation resistance is arranged as the outermost layer, the present multilayer pipe can achieve advantageous barrier properties of a multilayer pipe.

Furthermore, since the present EVOH resin composition excellent in long-run workability is used as a molding material for the outermost layer which directly comes into contact with air, the present multilayer pipe can be provided with favorable barrier properties and less susceptible to cracking due to oxidative degradation.

Next, a method for producing the present multilayer pipe will be described.

The present multilayer pipe can be produced, for example, by coextrusion coating of an outer peripheral surface of a monolayer pipe formed of a thermoplastic resin such as crosslinked polyolefin with the present EVOH resin composition and the adhesive resin. For coextrusion coating of the outer peripheral surface of the monolayer pipe with the present EVOH resin composition and the adhesive resin, the outer peripheral surface of the monolayer pipe may simply be coated with a molten film of the present EVOH resin composition and the adhesive resin. However, the adhesion between the monolayer pipe and the coat layer may be insufficient, so that the coat layer may peel during prolonged use and the gas barrier properties may be lost. Accordingly, it is preferred to perform surface treatment on the outer peripheral surface of the monolayer pipe in advance by means of flame treatment and/or corona discharge treatment before the coextrusioncoating.

Another exemplary multilayer-forming method for producing the present multilayer pipe is a so-called coextrusion molding, where the number of extruders for use corresponds to the number of the kinds of layer-forming materials (the number of layers), and the layer-forming materials melted in the extruders are simultaneously extruded and formed into a laminated flow. Furthermore, other multilayer-forming methods such as dry lamination can also be employed.

The method for producing the present multilayer pipe preferably further includes cooling with water at 10 to 70°C immediately after the molding. Specifically, it is preferred to solidify the present EVOH resin composition layer by cooling with water at 10 to 70°C after the melt molding and before the present EVOH resin composition layer is solidified.

The temperature of the cooling water is preferably 15 to 60°C, particularly preferably 20 to 50°C. If the temperature of the cooling water is too low, bending the multilayer pipe in a subsequent secondary process tends to easily cause a crack in a bent portion due to deformation of the present EVOH resin composition layer. Furthermore, if the temperature of the cooling water is too high, the present EVOH resin composition layer tends to be easily cracked at the bent portion due to deformation during secondary processing.

The present multilayer pipe obtained by the aforementioned method can be subjected to secondary processing, whereby producing various molded articles. The secondary processing method is not particularly limited, and a known secondary processing method can be used as appropriate. An exemplary method thereof is a processing method including heating the present multilayer pipe to 80 to 160°C, and then fixing it in a desired deformed shape for 1 minute to 2 hours.

The present multilayer pipe has the present EVOH resin composition layer, and thus it is excellent in degradation resistance. Therefore, the present multilayer pipe is particularly useful as a hot water circulation pipe and the like.

<<Eighth Aspect>>

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, the EVOH resin has a hydroxyl group relatively active in a molecule and therefore tends to be easily degraded by heat, causing a problem of coloration during melt molding.

To address the above problem, for example, WO-A-2013-146961 discloses incorporation of unsaturated aldehyde into an EVOH resin to suppress oxidative degradation of the EVOH resin during melt molding, thereby suppressing coloring.

However, an aldehyde compound such as the unsaturated aldehyde even in a very small amount may cause an offensive odor, and there is a concern that the aldehyde compound is exposed to high temperature during a molding process and evaporates, making working environment worse. Furthermore, it can be deemed that an improvement effect on long-run formability, such as suppression of coloring during heating in melt kneading, melt molding, and the like, is still insufficient. Therefore, there is a strong demand for an EVOH resin composition that suppresses coloring change during heating without worsening the working environment and yield a high-quality molded article.

An object of the present disclosure is to provide an EVOH resin composition suppressing coloring change of an EVOH resin during heating in melt molding and the like.

[Means for Solving the Problems]

Meanwhile, in view of the circumstances, the inventors of the present disclosure have found that an EVOH resin composition suppressing coloring change of an EVOH resin during heating in melt molding and the like can be obtained by adding a styrene derivative and a particular minute amount of a titanium compound to the EVOH resin.

Specifically, the present disclosure has the following aspects.

[8-1] An EVOH resin composition comprising an EVOH resin, a styrene derivative, and a titanium compound, wherein the amount of the titanium compound on a metal basis is 0.001 ppm or more and less than 5 ppm per mass of the EVOH resin composition.

[8-2] The EVOH resin composition according to [8-1], wherein the amount of the styrene derivative is 1 to 1000 ppm per mass of the EVOH resin composition.

[8-3] The EVOH resin composition according to [8-1] or [8-2], wherein a mass ratio of the amount of the styrene derivative to the amount of the titanium compound on a metal basis is 0.3 to 100000.

[8-4] The EVOH resin composition according to any one of [8-1] to [8-3], wherein the styrene derivative is a cinnamic acid derivative.

[8-5] Pellets comprising the EVOH resin composition according to any one of [8-1] to [8-4].

[8-6] A multilayer structure comprising at least one layer comprising the EVOH resin composition according to any one of [8-1] to [8-4].

[8-7] A method for producing the EVOH resin composition according to any one of [8-1] to [8-4], comprising melt-mixing a composition raw material containing the EVOH resin and a titanium compound.

[8-8] A method for producing the multilayer structure according to [8-6], comprising melt-molding a layer comprising the EVOH resin composition.

[Effects of the Disclosure]

The EVOH resin composition according to the present disclosure is excellent in thermal stability, and thus suppresses coloring change of an EVOH resin during heating in melt molding and the like and is excellent in long-run workability.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin as a main component, a styrene derivative, and a particular minute amount of a titanium compound.

Specifically, the present EVOH resin composition contains the EVOH resin as a base resin, where the amount of the EVOH resin in the present EVOH resin composition is typically 70% by mass or more, preferably 80% by mass or more, more preferably 90% by mass or more, and particularly preferably 95% by mass or more.

Each component will be described below.

[EVOH Resin]

The EVOH resin used in the present disclosure is a resin typically obtained by saponifying an ethylene-vinyl ester copolymer which is a copolymer of ethylene and a vinyl ester monomer, and the same as those described in the first aspect can be used as the EVOH resin.

[Styrene Derivative]

Examples of the styrene derivative used in the present disclosure include various styrene derivatives among aromatic compounds capable of resonance stabilizing and capturing a radical, such as styrene derivatives having a styrene molecular structure as a molecular skeleton and having a substituent at α-position or β-position.

Among the above styrene derivatives, preferred as the styrene derivatives having a substituent at α-position are styrene compounds having a substituent at α-position for stabilizing a radical at benzylic position by resonance. Examples thereof include 2,4-diphenyl-4-methyl-1-pentene and the like.

Furthermore, preferred as the styrene derivatives having a substituent at β-position are styrene compounds having a carbonyl group at β-position because they have an enone structure and stabilize a radical by resonance. Examples thereof include cinnamic acid derivatives such as cinnamic acid, cinnamic acid alcohol, cinnamic acid ester, and cinnamate.

Note that styrene derivatives having no substituent at α-position because of their excellent suppression effect on coloring, rather than the styrene derivatives having a substituent at α-position, are suitable for use as the styrene derivative in the present EVOH resin composition. Particularly, the styrene derivatives having a substituent at β-position are preferred, among which the cinnamic acid derivatives are preferred. Further, among the cinnamic acid derivatives, cinnamic acid is particularly suitable for use in terms of effectiveness.

The styrene derivative has a molecular weight of typically 100 to 100000, preferably 100 to 10000, particularly preferably 100 to 1000, and especially preferably 130 to 300. If the molecular weight falls within the above range, the effects of the present disclosure tend to be more efficiently achieved.

The amount of the styrene derivative is preferably 1 to 1000 ppm, more preferably 10 to 800 ppm, particularly preferably 50 to 700 ppm, and especially preferably 200 to 650 ppm per mass of the present EVOH resin composition. If the amount is too large, productivity tends to be reduced, whereas if the amount is too small, thermal stability tends to be reduced, resulting in reduced suppression effect on coloring.

Note that a content ratio of the styrene derivative is based on the EVOH resin composition as a final product, which contains the EVOH resin, the styrene derivative, the titanium compound, and various additives to be blended as necessary.

The amount of the styrene derivative in the present EVOH resin composition can be measured, for example, by using Liquid Chromatography-Mass Spectrometry (LC/MS/MS) in accordance with the following procedure. Note that while the following procedure is described by taking a case of using cinnamic acid as an example, the amount of other styrene derivatives also can be measured in accordance with a similar procedure.

<Method for Measuring Amount of Styrene Derivative>

[Preparation of Standard Solution]

Cinnamic acid (10.89 mg) is weighed in a 10 mL measuring flask and dissolved in methanol to prepare a 10 mL solution (standard stock solution; 1089 μg/mL). Next, the standard stock solution thus prepared is diluted with methanol to prepare mixed standard solutions each having a different concentration (0.109 μg/mL, 0.218 μg/mL, 0.545 μg/mL, 1.09 μg/mL, and 2.18 μg/mL). These mixed standard solutions are used for LC/MS/MS analysis to form a calibration curve.

[Preparation of Sample Solution]

(1) Pellets (1 g) obtained by pulverizing the present EVOH resin composition are weighed in a 10 mL measuring flask, and then 9 mL of methanol is added thereto.
(2) The resultant is subjected to ultrasonic processing for 120 minutes and then cooled at a room temperature (25°C).
(3) Methanol is added to adjust the volume of the solution to 10 mL (sample solution (I)).
(4) 1 mL of the sample solution (I) is taken in a 10 mL measuring flask, and then methanol is added thereto to adjust the volume of the solution to 10 mL (sample solution (II)).
(5) A liquid obtained by filtering the sample solution (I) or (II) through a PTFE filter (0.45 μm) is used as a measurement solution, which is subjected to LC/MS/MS analysis.

A detection concentration of the cinnamic acid is calculated from a peak area value detected by the LC/MS/MS analysis and the calibration curve based on the standard solution.

[LC/MS/MS Measurement Conditions]

LC system: LC-20A [available from Shimadzu Corporation]
Mass spectrometer: API4000 [AB/MDS Sciex]
Analytical column: Scherzo SM-C18 (3.0 × 75 mm, 3 $\mu$m)
Column temperature: 45°C
Mobile phase: A 10 mmol/L ammonium acetate aqueous solution
B methanol
Time program:

0.0 → 5.0 min B% = 30% → 95%
5.0 → 10.0 min B% = 95%
10.1 → 15.0 min B% = 30%

Flow rate: 0.4 mL/min
Switching valve: 2.0 to 6.0 min: to MS
Injection amount: 5 $\mu$L
Ionization: ESI method
Detection: negative ion detection (SRM method)
Monitoring ion: Q1 = 147.0 → Q3 = 102.9 (CE: -15 eV)

[Titanium Compound]

Examples of the titanium compound used in the present disclosure include inorganic titanium compounds and organic titanium compounds. Note that the same as those described in the first aspect can be used as the titanium compound.

The amount of the titanium compound on a metal basis is 0.001 ppm or more and less than 5 ppm per mass of the EVOH resin composition. It is preferably 0.01 to 3 ppm, more preferably 0.03 to 1 ppm, and particularly preferably 0.05 to 0.5 ppm. When the amount of the titanium compound on a metal basis is within the above range, thermal degradation during melt molding can be suppressed, thereby achieving excellent long-run workability. Additionally, if the amount of the titanium compound on a metal basis is too small, a suppression effect on thermal degradation is reduced, whereas if the amount on a metal basis is too large, thermal decomposition of the EVOH resin tends to occur to easily cause coloring.

The amount of the titanium compound on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

A mass ratio of the amount of the styrene derivative to the amount of the titanium compound on a metal basis is preferably 0.3 to 100000, more preferably 10 to 30000, particularly preferably 100 to 12000, especially preferably 300 to 10000, and the most preferably 600 to 8000.

If the value is too large, UV absorption ability of the present EVOH resin composition tends to be reduced, whereas if the value is too small, a molded article tends to be colored.

Here, it is generally known that an EVOH resin is degraded by heat to cause coloring. This is presumably because of the following. That is, the EVOH resin is degraded by heat to generate a radical, which causes a dehydration reaction of a hydroxyl group contained in the EVOH resin to generate a double bond structure in a main chain of the EVOH resin. Then, this site serves as a reaction starting point to further cause a dehydration reaction and the like to form a polyene structure in the main chain of the EVOH resin.

Further, it is generally considered that when an EVOH resin composition contains a titanium compound, the EVOH resin composition is colored due to titanium ions; therefore, avoiding the use of a titanium compound is common general technical knowledge for a person skilled in the art.

However, in the present disclosure, it has been found that when using the styrene derivative and a particular minute amount of the titanium compound in combination, it is possible to produce an EVOH resin composition which remarkably suppresses thermal degradation, thereby suppressing coloring, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents further formation of the polyene structure. Then, it is presumed that the stabilizing effect is more effectively exerted by the titanium compound due to the coexistence of the styrene derivative and the titanium compound.

On the other hand, if the amount of the titanium compound is too large, the titanium compound is considered to cause thermal decomposition of the EVOH resin, resulting in coloring; therefore, the amount of the titanium compound is limited to a particular minute amount in the present disclosure.

[Other Thermoplastic Resins]

The present EVOH resin composition can contain a thermoplastic resin(s) other than the EVOH resin in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. The same additives as described in the first aspect can be used as the additives.

[Method for Producing EVOH Resin Composition]

The present EVOH resin composition can be produced, for example, by mixing the EVOH resin, the styrene derivative, and the titanium compound by any known method, for example, a dry blending method, melt mixing method, solution mixing method, or impregnation method. Among these, it is preferable that the present EVOH resin composition is produced by a method including melt-mixing a composition raw material containing the EVOH resin and the titanium compound. Furthermore, these production methods can optionally be combined.

An example of the dry blending method is a method (i) in which the pelletized EVOH resin, the styrene derivative, and the titanium compound are dry-blended by using a tumbler or the like.

Examples of the melt mixing method include: a method (ii) in which the pelletized EVOH resin, the styrene derivative, and the titanium compound are dry-blended and the resulting dry blend is melt-kneaded to obtain pellets or a molded article; and a method (iii) in which the styrene derivative and/or the titanium compound is added to and melt-kneaded with the molten EVOH resin to obtain pellets or a molded article.

Examples of the solution mixing method include: a method (iv) in which the styrene derivative and/or the titanium compound is added to a solution prepared by using the pelletized EVOH resin, the resultant is solidified and formed into pellets, and thereafter the solids are separated from liquid in a known manner and dried; and a method (v) in which the styrene derivative and/or the titanium compound is incorporated into a homogeneous solution (water/alcohol solution or the like) of the EVOH resin before saponification in the production process of the EVOH resin, the resultant is solidified and formed into pellets, and thereafter the solids are separated from liquid in a known manner and dried.

An example of the impregnation method is a method (vi) in which the pelletized EVOH resin is brought into contact with an aqueous solution containing the styrene derivative and/or the titanium compound to incorporate the styrene derivative and/or the titanium compound into the EVOH resin, and then the resultant is dried.

Usable as the aqueous solution containing the titanium compound is an aqueous solution of the titanium compound or an elution of titanium ions obtained by immersing the titanium compound in water containing various chemicals. The same applies to the aqueous solution containing the styrene derivative.

Note that in the impregnation method, the amount (on a metal basis) of the styrene derivative or the titanium compound can be controlled by a concentration of the styrene derivative or the titanium compound in the aqueous solution in which the EVOH resin is immersed, immersion temperature, immersion time, and the like.

The immersion time is typically 0.5 to 48 hours, preferably 1 to 36 hours, and the immersion temperature is typically 10 to 40°C, preferably 20 to 35°C.

Furthermore, various drying methods can be employed as the drying method in the respective production methods, that may be either a stationary drying method or a fluidized drying method. These can also be used in combination.

As described above, these various methods can be combined to obtain the present EVOH resin composition. Among these, the melt mixing method, particularly the method (ii) is preferred in view of productivity and ability to obtain a resin composition with more remarkable effects of the present disclosure. Additionally, when the other thermoplastic resin(s) or other additives are used, they may be blended in a usual manner in accordance with the above production methods.

The present EVOH resin composition obtained in this manner is in any form, preferably in a form of pellets.

For example, the pellets each have spherical shape, oval shape, cylindrical shape, cubic shape, square prism shape, or the like, and typically have the oval shape or cylindrical shape. In view of convenience to subsequently use the pellets as a molding material, the oval shape has a minor diameter of typically 1 to 10 mm, preferably 2 to 6 mm, and even more preferably 2.5 to 5.5 mm; and a major diameter of typically 1.5 to 30 mm, preferably 3 to 20 mm, and even more preferably 3.5 to 10 mm. Additionally, the cylindrical shape has a bottom diameter of typically 1 to 6 mm, preferably 2 to 5 mm, and a length of typically 1 to 6 mm, preferably 2 to 5 mm.

Furthermore, the pelletized EVOH resin used in the respective production methods preferably has similar shape and size.

Note that when the present EVOH resin composition is in a form of pellets, a known lubricant is preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene biserucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

In the present EVOH resin composition obtained in this manner, coloring change is suppressed during heating in melt molding and the like, and the long-run workability is excellent. A ratio of a YI (yellowness index) value after heating to a YI value before heating (YI value after heating/YI value before heating) is typically less than 6.5, preferably 6.0 or less, and particularly preferably 5.5 or less. When the ratio of the YI value after heating to the YI value before heating is within the above range, an excellent suppression effect on coloring can be achieved. Furthermore, the lower limit of the ratio of the YI value after heating to the YI value before heating is typically 1.

Note that the difference of 0.1 in the YI value ratio is very large because it appears as a huge difference in a yield of actual production.

The YI value before heating can be determined by measuring the present EVOH resin composition pulverized into a 1 to 5 mm square and fully filled in a cylinder with an inner diameter of 32 mm and a height of 30 mm, by using a spectrocolorimeter SE6000 (available from Nippon Denshoku Industries Co., Ltd.).

Additionally, the YI value after heating can be determined by measuring the present EVOH resin composition pulverized into a 1 to 5 mm square and heated in an oven under the air atmosphere at 150°C for 5 hours in the same manner.

Furthermore, the present EVOH resin composition has a water content of typically 0.01 to 0.5% by mass, preferably 0.05 to 0.35% by mass, and particularly preferably 0.1 to 0.3% by mass.

Note that the water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression. <Expression>

$$\text{Water content (\% by mass)} = [(W_1 - W_2)/W_1] \times 100$$

The present EVOH resin composition is prepared in various forms such as powder and liquid as well as pellets, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic or aliphatic polyketones.

Among these, polyamide resins, polyolefin resins, polyester resins, and polystyrene resins are preferred, which are hydrophobic resins. Polyethylene resins, polypropylene resins, polycycloolefin resins, and unsaturated carboxyl-modified polyolefin resins obtained by modifying these polyolefins are more preferred, and particularly, the polycycloolefin resins are preferably used as hydrophobic resins.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the present multilayer structure. The total number of layers in the present multilayer structure is typically 2 to 15, preferably 3 to 10. In the layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these methods, preferred is a production method including melt-molding the present EVOH resin composition layer, specifically the coextrusion method, in consideration of costs and environmental concerns.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40 to 170°C, preferably about 60 to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottleshaped multilayer container (laminate structure) is produced from a multilayer parison (a hollow tubular preform before blowing), a blow molding process is employed. Specific examples thereof include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging materials for general foods, condiments such as mayonnaise and dressing, fermented foods such as miso, oil and fat foods such as salad oil, beverages, cosmetics, and pharmaceutical products.

<<Ninth Aspect>>

An EVOH resin is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, the EVOH resin has a hydroxyl group relatively active in a molecule and therefore tends to be easily degraded by heat, causing a problem of coloration during melt molding.

To address the above problem, for example, WO-A-2013-146961 discloses incorporation of a particular amount of unsaturated aldehyde into an EVOH resin to suppress oxidative degradation during melt molding, thereby suppressing coloring.

Molding apparatuses tend to have higher functionality in recent years, along with diversified feed block and die designs in the molding apparatuses and various demands for higher functionality such as thinner films and the increased number of layers in a multilayer structure in a final product. Meanwhile, a resin tends to be thermally degraded in a molding apparatus having a complicated structure due to the higher functionality, causing coloring and the like to reduce productivity of products.

While the unsaturated aldehyde is used for suppressing coloring during melt molding in WO-A-2013-146961, such aldehyde compound even in a very small amount may cause an offensive odor. Particularly, there is a concern that the aldehyde compound is exposed to high temperature during melt molding and evaporates, making working environment worse. Therefore, there is a demand for an EVOH resin composition which suppresses coloring in a melt molding process without using such volatile compound and is therefore excellent in long-run workability.

An object of the present disclosure is to provide an EVOH resin composition suppressing coloring change due to thermal degradation during melt molding.

[Means for Solving the Problems]

Meanwhile, in view of the circumstances, the inventors of the present disclosure have found that an EVOH resin composition suppressing coloring change due to thermal degradation during melt molding can be obtained by adding a particular minute amount of a titanium compound to the EVOH resin and adjusting a water content to a lower range.

Specifically, the present disclosure has the following aspects.

[9-1] An EVOH resin composition comprising an EVOH resin and a titanium compound, wherein the EVOH resin composition has a water content of 1% by mass or less, and the amount of the titanium compound on a metal basis is 0.001 ppm or more and less than 5 ppm per mass of the EVOH resin composition.

[9-2] Pellets comprising the EVOH resin composition according to [9-1].

[9-3] A multilayer structure comprising at least one layer comprising the EVOH resin composition according to [9-1].

[9-4] A method for producing the EVOH resin composition according to [9-1], comprising melt-mixing a composition raw material containing the EVOH resin and a titanium compound.

[9-5] A method for producing the multilayer structure according to [9-3], comprising melt-molding a layer comprising the EVOH resin composition.

[Effects of the Disclosure]

The EVOH resin composition according to the present disclosure suppresses coloring change of an EVOH resin during melt molding, and is excellent in long-run workability.

[Embodiments of the Disclosure]

Hereinafter the present disclosure will be described more specifically based on exemplary embodiments of the present disclosure. However, the present disclosure is not limited to these embodiments.

<EVOH Resin Composition>

An EVOH resin composition according to one embodiment of the present disclosure (hereinafter referred to as "the present EVOH resin composition") contains an EVOH resin as a main component and a particular minute amount of a titanium compound.

Specifically, the present EVOH resin composition contains the EVOH resin as a base resin, where the amount of the EVOH resin in the present EVOH resin composition is typically 70% by mass or more, preferably 80% by mass or more, more preferably 90% by mass or more, and particularly preferably 95% by mass or more.

Each component will be described below.

[EVOH Resin]

The EVOH resin used in the present disclosure is a resin typically obtained by saponifying an ethylene-vinyl ester copolymer which is a copolymer of ethylene and a vinyl ester monomer, and the same as those described in the first aspect can be used as the EVOH resin.

[Titanium Compound]

Examples of the titanium compound include inorganic titanium compounds and organic titanium compounds. Note that the same as those described in the first aspect can be used as the titanium compound.

The amount of the titanium compound on a metal basis is 0.001 ppm or more and less than 5 ppm per mass of the EVOH resin composition. It is preferably 0.01 to 3 ppm, more preferably 0.03 to 1 ppm, and particularly preferably 0.05 to 0.5 ppm. When the amount of the titanium compound on a metal basis is within the above range, coloring change due to thermal degradation during melt molding can be suppressed, thereby achieving excellent long-run workability. Additionally, if the amount of the titanium compound on a metal basis is too small, a suppression effect on coloring change is reduced, whereas if the amount on a metal basis is too large, thermal decomposition of the EVOH resin easily occurs to cause coloring.

The amount of the titanium compound on a metal basis can be determined by ICP mass spectrometry, in which the present EVOH resin composition is weighed into a platinum crucible and ashed sequentially in a burner and an electric furnace, the ash is decomposed by heating with nitric acid and hydrofluoric acid and then treated with a mixture of dilute nitric acid and dilute hydrofluoric acid, and titanium in a certain volume of the resulting solution is measured using an ICP mass spectrometer (Agilent 8800 available from Agilent Technologies, Inc.).

Generally, an EVOH resin is colored due to thermal degradation. This is presumably because the EVOH resin is degraded by heat to generate a radical, which dehydrates a hydroxyl group contained in the EVOH resin to generate a double bond in a main chain of the EVOH resin; then, this site serves as a reaction starting point to further promote dehydration to form a conjugated polyene structure in the main chain of the EVOH resin.

On the contrary, the present EVOH resin composition contains a particular minute amount of the titanium compound, such that coloring change due to thermal degradation of the EVOH resin is suppressed, achieving excellent long-run workability.

It is generally considered that when an EVOH resin composition contains a titanium compound, the EVOH resin composition is colored due to titanium ions; therefore, avoiding the use of a titanium compound is common general technical knowledge for a person skilled in the art. However, in the present disclosure, it has been found that when using a particular minute amount of the titanium compound, it is possible to produce an EVOH resin composition which suppresses coloring change due to thermal degradation, contrary to such common general technical knowledge.

In other words, titanium is stable as a tetravalent ion and, even in a minute amount, coordinates to the double bond in the main chain of the EVOH resin as described above to be chelated and stabilized. Presumably, this prevents formation of the polyene structure.

[Other Thermoplastic Resins]

The present EVOH resin composition can contain a thermoplastic resin(s) other than the EVOH resin in a range that does not impair the effects of the present disclosure (for example, typically 30% by mass or less, preferably 20% by mass or less, and particularly preferably 10% by mass or less of the present EVOH resin composition).

Known thermoplastic resins can be used as the other thermoplastic resin(s), and examples thereof include polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

Additionally, the present EVOH resin composition may contain additives that are generally blended with the EVOH resin in a range that does not impair the effects of the present disclosure. The same additives as described in the first aspect can be used as the above additives.

[Method for Producing EVOH Resin Composition]

The present EVOH resin composition can be produced, for example, by mixing the EVOH resin and the titanium compound by any known method, for example, a dry blending method, melt mixing method, solution mixing method, or impregnation method. Among these, it is preferable that the present EVOH resin composition is produced by a method including melt-mixing a composition raw material containing the EVOH resin and the titanium compound. Furthermore, these production methods can optionally be combined.

An example of the dry blending method is a method (i) in which the pelletized EVOH resin and the titanium compound are dry-blended by using a tumbler or the like.

Examples of the melt mixing method include: a method (ii) in which the pelletized EVOH resin is dry-blended with the titanium compound and the resulting dry blend is melt-kneaded; and a method (iii) in which the titanium compound is added to and melt-kneaded with the molten EVOH resin.

Examples of the solution mixing method include: a method (iv) in which the titanium compound is added to a solution prepared by using a commercially available EVOH resin, the resultant is solidified and molded, and thereafter the solids are separated from liquid in a known manner and dried; and a method (v) in which the titanium compound is incorporated into an ethylene-vinyl ester copolymer solution or a homogeneous solution (water/alcohol solution or the like) of the EVOH resin before saponification in the production process of the EVOH resin, the resultant is solidified and molded, and thereafter the solids are separated from liquid in a known manner and dried.

An example of the impregnation method is a method (vi) in which the pelletized EVOH resin is brought into contact with an aqueous solution containing the titanium compound to incorporate the titanium compound into the EVOH resin, and then the resultant is dried.

Usable as the aqueous solution containing the titanium compound is an aqueous solution of the titanium compound or an elution of titanium ions obtained by immersing the titanium compound in water containing various chemicals.

Note that in the impregnation method, the amount (on a metal basis) of the titanium compound can be controlled by a concentration of the titanium compound in the aqueous solution in which the EVOH resin is immersed, immersion temperature, immersion time, and the like.

The immersion time is typically 0.5 to 48 hours, preferably 1 to 36 hours, and the immersion temperature is typically 10 to 40°C, preferably 20 to 35°C.

Various drying methods can be employed as the drying method in the respective production methods, that may be either a stationary drying method or a fluidized drying method. These can also be used in combination.

As described above, the above different methods can be combined in the present disclosure. Among these, the melt mixing method, particularly the method (ii) is preferred in view of productivity and ability to obtain a resin composition with more remarkable effects of the present disclosure. Additionally, when the other thermoplastic resin(s) or other additives are used, they may be blended in a usual manner in accordance with the above production methods.

The present EVOH resin composition produced by the respective production methods is in any form, preferably in a form of pellets.

For example, the pellets each have spherical shape, oval shape, cylindrical shape, cubic shape, square prism shape, or the like, and typically have the oval shape or cylindrical shape. In view of convenience to subsequently use the pellets as a molding material, the oval shape has a minor diameter of typically 1 to 10 mm, preferably 2 to 6 mm, and even more preferably 2.5 to 5.5 mm; and a major diameter of typically 1.5 to 30 mm, preferably 3 to 20 mm, and even more preferably 3.5 to 10 mm. Additionally, the cylindrical shape has a bottom diameter of typically 1 to 6 mm, preferably 2 to 5 mm, and a length of typically 1 to 6 mm, preferably 2 to 5 mm.

Furthermore, the pelletized EVOH resin used in the respective production methods preferably has similar shape and size.

The present EVOH resin composition has a water content of 1% by mass or less, preferably 0.05 to 0.8% by mass, more preferably 0.1 to 0.5% by mass, and particularly preferably 0.15 to 0.3% by mass. The present EVOH resin composition contains a particular amount of the titanium compound and has the water content within a specific range, such that coloring change due to thermal degradation during melt molding can be suppressed. If the water content is too high, thermal conductivity of a water molecule itself reduces thermal stability of the EVOH resin composition at high temperature. Additionally, if the water content is too low, long-run workability of the EVOH resin composition tends to be reduced.

Note that the water content of the present EVOH resin composition is measured and calculated by the following method.

The mass before drying ($W_1$) of the present EVOH resin composition is measured by an electronic balance. The mass ($W_2$) after drying in a hot air dryer at 150°C for 5 hours and cooling in a desiccator for 30 minutes is measured, and the water content is calculated by the following expression.

$$\text{Water content (\% by mass)} = [(W_1 - W_2)/W_1] \times 100$$

In the aforementioned method for producing the EVOH resin composition, the water content of the present EVOH resin composition is adjusted, for example, by (1) applying higher drying temperature, (2) applying a longer drying time, (3) adjusting humidity of a drying gas to a low level, and (4) spraying water. In the present disclosure, these techniques can be used alone or in combination, thereby adjusting the water content of the EVOH resin composition to a specific range. Of these, (4) spraying water is preferred.

Even when the present EVOH resin composition is heated during melt molding, coloring change is suppressed and the long-run workability is excellent. A ratio of a YI (yellowness index) value after heating to a YI value before heating

(YI value after heating/YI value before heating) is typically 4.7 or less, preferably 4.6 or less, and more preferably 3.5 or less. When the ratio of the YI value after heating to the YI value before heating is within the above range, coloring can be further suppressed. Note that the lower limit of the ratio of the YI value after heating to the YI value before heating is typically 1.

The YI value before heating can be determined by measuring the present EVOH resin composition pulverized into a 1 to 5 mm square and fully filled in a cylinder with an inner diameter of 32 mm and a height of 30 mm, by using a spectrocolorimeter SE6000 (available from Nippon Denshoku Industries Co., Ltd.).

Additionally, the YI value after heating can be determined by measuring the present EVOH resin composition pulverized into a 1 to 5 mm square and heated in an oven under the air atmosphere at 150°C for 5 hours in the same manner.

Furthermore, when the present EVOH resin composition is in a form of pellets, a known lubricant is also preferably applied onto the surface of the pellets to stabilize a feed property during melt molding. Exemplary kinds of the lubricant include higher fatty acids having 12 or more carbon atoms (e.g., lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g., saturated higher fatty acid amides such as lauramide, myristamide, palmitamide, stearamide, and behenamide; unsaturated higher fatty acid amides such as oleamide and erucamide; and bis-higher fatty acid amides such as ethylene bis-stearamide, ethylene bis-oleamide, ethylene bis-erucamide, and ethylene bis-lauramide), low molecular weight polyolefins (e.g., low molecular weight polyethylene or low molecular weight polypropylene having a molecular weight of about 500 to 10000, or acid-modified products thereof), higher alcohols having 6 or more carbon atoms, ester oligomers, and fluoroethylene resins. These compounds can be used alone or in combination of two or more. Additionally, the lubricant content is typically 5% by mass or less, preferably 1% by mass or less of the present EVOH resin composition. Note that the lower limit is typically 0% by mass.

The present EVOH resin composition obtained in this manner is prepared in various forms such as pellets, powder, and liquid, and provided as a molding material for various molded articles. Particularly in the present disclosure, the present EVOH resin composition is preferably provided as a melt-forming material because in such a case, the effects of the present disclosure tend to be more efficiently achieved.

Note that the present EVOH resin composition also includes a resin composition obtained by mixing a resin other than the EVOH resin used in the present EVOH resin composition.

Examples of the molded article include a monolayer film formed of the present EVOH resin composition, a multilayer structure having a layer made of the present EVOH resin composition, and the like.

[Multilayer Structure]

A multilayer structure according to one embodiment of the present disclosure (hereinafter referred to as "the present multilayer structure") has a layer made of the present EVOH resin composition. The layer made of the present EVOH resin composition (hereinafter simply referred to as "the present EVOH resin composition layer") can be laminated with other base material(s) mainly composed of a thermoplastic resin other than the present EVOH resin composition (hereinafter the resin used in the base material may be shortly referred to as "base material resin") to further impart strength, protect the present EVOH resin composition layer from moisture or other effects, and impart other functions.

Examples of the base material resin include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin ($\alpha$-olefin having 4 to 20 carbon atoms) copolymers, polypropylene resins such as polypropylenes and propylene-$\alpha$-olefin ($\alpha$-olefin having 4 to 20 carbon atoms) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of these polyolefins with unsaturated carboxylic acid or an ester thereof, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic or aliphatic polyketones. These can be used alone or in combination of two or more.

Among these, polyamide resins, polyolefin resins, polyester resins, and polystyrene resins are preferred, which are hydrophobic resins. Polyethylene resins, polypropylene resins, polycycloolefin resins, and unsaturated carboxyl-modified polyolefin resins obtained by modifying these polyolefins are more preferred.

A layered configuration of the present multilayer structure can be in any combination, such as a/b, b/a/b, a/b/a, a1/a2/b, a/b1/b2, b2/b1/a/b1/b2, or b2/b1/a/b1/a/b1/b2, where "a" (a1, a2, ...) denotes the present EVOH resin composition layer and "b" (b1, b2, ...) denotes the base material resin layer. Additionally, the layered configuration can be in a combination of b/R/a, b/R/a/b, b/R/a/R/b, b/a/R/a/b, b/R/a/R/a/R/b, etc. where R denotes a recycle layer containing a mixture of the present EVOH resin composition and a thermoplastic resin other than the present EVOH resin composition, which is obtained by re-melt molding cutoff pieces, defective products, etc. generated in the course of producing the present multilayer structure. The total number of layers in the present multilayer structure is typically 2 to 15, preferably 3 to 10. In the above layered configuration, an adhesive resin layer containing an adhesive resin may be interposed between the respective layers as necessary.

A known adhesive resin can be used as the adhesive resin, which may appropriately be selected depending on the kind of the thermoplastic resin used in the base material resin layer "b". Representative examples thereof include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present EVOH resin composition layer and the base material resin layer, it is preferable to use an adhesive resin having excellent hydrophobicity because the adhesive resin layer is situated on both sides of the present EVOH resin composition layer.

The base material resin and the adhesive resin may contain a conventionally known plasticizer, filler, clay (such as montmorillonite), colorant, antioxidant, antistatic agent, lubricant, nucleating agent, antiblocking agent, wax, and the like, in a range that does not impair the spirit of the present disclosure (for example, 30% by mass or less, preferably 10% by mass or less of the entire resin). These can be used alone or in combination of two or more.

The present EVOH resin composition layer and the base material resin layer can be laminated by a known method (including the case where the adhesive resin layer is interposed). Examples thereof include: a method in which a film or a sheet of the present EVOH resin composition is laminated with the base material resin by melt extrusion; a method in which the base material resin layer is laminated with the present EVOH resin composition by melt extrusion; a method in which the present EVOH resin composition and the base material resin are co-extruded; a method in which the present EVOH resin composition (layer) and the base material resin (layer) are dry-laminated using a known adhesive such as an organic titanium compound, isocyanate compound, polyester compound, or polyurethane compound; and a method in which a solution of the present EVOH resin composition is applied onto the base material resin and thereafter the solvent is removed. Among these methods, preferred is a production method including melt-molding the present EVOH resin composition layer, specifically the coextrusion method, in consideration of costs and environmental concerns.

The present multilayer structure may be subjected to a (heat) stretching process as necessary. The stretching process may be either uniaxial stretching or biaxial stretching, and the biaxial stretching may be simultaneous stretching or sequential stretching. Furthermore, as a stretching method, a method with a high stretch ratio can be employed among roll stretching, tenter stretching, tubular stretching, stretch blow, and vacuum pressure forming methods. Stretching temperature is selected from a range of typically about 40 to 170°C, preferably about 60 to 160°C, which is a temperature near the melting point of the multilayer structure. If the stretching temperature is too low, stretchability is poor, whereas if the stretching temperature is too high, it is difficult to maintain a stable stretch state.

Further, the present multilayer structure after the stretching process may be subjected to heat setting for the purpose of imparting dimension stability. The heat setting can be performed in a well-known manner, for example, by performing heat treatment of the stretched present multilayer structure typically at 80 to 180°C, preferably at 100 to 165°C for typically about 2 to 600 seconds while keeping it tense.

When the stretched present multilayer structure is used as a shrinkable film, for example, a cold-setting process for imparting a heat-shrinkable property may be performed by applying cold air to the present multilayer structure after the stretching process, without performing the above heat setting.

The thickness of the present multilayer structure (including the stretched one) and the thickness of the present EVOH resin composition layer, the base material resin layer, and the adhesive resin layer that constitute the multilayer structure may vary depending on the layered configuration, the kind of the base material resin, the kind of the adhesive resin, intended use, packaging form, required physical properties, and the like, but the thickness of the present multilayer structure (including the stretched one) is typically 10 to 5000 $\mu$m, preferably 30 to 3000 $\mu$m, and particularly preferably 50 to 2000 $\mu$m. The thickness of the present EVOH resin composition layer is typically 1 to 500 $\mu$m, preferably 3 to 300 $\mu$m, and particularly preferably 5 to 200 $\mu$m. The thickness of the base material resin layer is typically 5 to 3000 $\mu$m, preferably 10 to 2000 $\mu$m, and particularly preferably 20 to 1000 $\mu$m. The thickness of the adhesive resin layer is typically 0.5 to 250 $\mu$m, preferably 1 to 150 $\mu$m, and particularly preferably 3 to 100 $\mu$m.

Furthermore, in the present multilayer structure, a thickness ratio of the present EVOH resin composition layer to the base material resin layer (the present EVOH resin composition layer/base material resin layer) is typically 1/99 to 50/50, preferably 5/95 to 45/55, and particularly preferably 10/90 to 40/60, where if the respective layers each include a plurality of layers, the thickness ratio is the ratio between the thickest ones of the respective layers. Additionally, in the present multilayer structure, a thickness ratio of the present EVOH resin composition layer to the adhesive resin layer (the present EVOH resin composition layer/adhesive resin layer) is typically 10/90 to 99/1, preferably 20/80 to 95/5, and particularly preferably 50/50 to 90/10, where if the respective layers each include a plurality of layers, the thickness ratio is the ratio between the thickest ones of the respective layers.

Furthermore, a cup-shaped or tray-shaped multilayer container can be produced using the present multilayer structure. In this case, a drawing process is typically employed, and the specific examples thereof include a vacuum forming method, pressure forming method, vacuum pressure forming method, and plug-assisted vacuum pressure forming method. Further, when a tube-shaped or bottle-shaped multilayer container (laminate structure) is produced from a multilayer parison (a hollow tubular preform before blowing), a blow molding process is employed. Specific examples thereof include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, in-line injection type biaxial stretching blow molding method, etc.). The obtained laminate can be subjected to heating process, cooling process, rolling process, printing process, dry lamination process, solution or melt coating process, bag forming process, deep drawing process, box forming process, tube forming process, splitting process, or the like as necessary.

Monolayer films formed of the present EVOH resin composition, and bags, cups, trays, tubes, bottles and other containers as well as caps produced from the present multilayer structure are useful as various packaging containers for general foods, condiments such as mayonnaise and dressing, fermented foods such as miso, oil and fat foods such as salad oil, beverages, cosmetics, and pharmaceutical products.

EXAMPLES

Hereinafter, the present disclosure will be described more specifically with reference to examples. However, the present disclosure is not limited to the following examples.

In the examples, "parts" means parts on a mass basis unless otherwise specified.

<<First Aspect>>

<Example 1-1>

Pellets of an EVOH resin having an ethylene structural unit content of 29 mol%, a saponification degree of 99.6 mol%, and a MFR of 4 g/10 min (at 210°C with a load of 2160 g) were used as the EVOH resin.

Additionally, titanium oxide (available from FUJIFILM Wako Pure Chemical Corporation) was used as the titanium compound.

A mixture was prepared by dry-blending the titanium oxide in the amount of 0.1 ppm on a metal basis per mass of the EVOH resin composition with the pellets of the EVOH resin.

The mixture was fed to a twin-screw extruder (20 mm in diameter) equipped with a two-hole die, and a strand extruded and ejected under the following extrusion conditions was cooled and solidified on a conveyor belt. Next, the solidified strand was cut to produce pellets of the EVOH resin composition.

[Extrusion Conditions]

Extruder temperature setting (°C): C1/C2/C3/C4/C5/C6 =150/200/210/210/210/210

<Example 1-2>

Pellets of an EVOH resin composition were obtained in the same manner as in Example 1-1 except that the blending amount of the titanium oxide on a metal basis in Example 1-1 was changed to 1 ppm per mass of the EVOH resin composition.

<Comparative Example 1-1>

Pellets of an EVOH resin composition were obtained in the same manner as in Example 1-1 except that the titanium oxide in Example 1-1 was not used.

<Comparative Example 1-2>

Pellets of an EVOH resin composition were obtained in the same manner as in Example 1-1 except that the blending amount of the titanium oxide on a metal basis in Example 1-1 was changed to 10 ppm per mass of the EVOH resin composition.

The pellets of the EVOH resin composition obtained in Examples 1-1 and 1-2 and Comparative Examples 1-1 and 1-2 were evaluated for long-run workability as described below. The results are listed in Table 1-1 below.

[Long-Run Workability Evaluation]

The pellets of the EVOH resin composition thus obtained were pulverized into a 1 to 5 mm square by a pulverizer (SKR16-240 available from Sometani Sangyo Company Limited.) at 650 rpm.

The pulverized pellets thus obtained was fully filled in a cylinder with an inner diameter of 32 mm and a height of 30 mm, and a YI value was measured using a spectrocolorimeter SE6000 (available from Nippon Denshoku Industries Co., Ltd.).

Furthermore, the YI value was measured in the same manner for the pulverized pellets subjected to a heating process in an oven at 150°C for 5 hours.

Thereafter, the ratio of the YI value after heating to the YI value before heating was calculated.

A larger ratio of the YI value after heating to the YI value before heating indicates that the EVOH resin composition has changed in color to be yellowish after the heating.

Table 1-1

| | Amount of titanium compound on metal basis (ppm) | Long-run workability evaluation |
|---|---|---|
| | | Ratio of YI values (after heating/before heating) |
| Example 1 | 0.1 | 3.8 |
| Example 2 | 1 | 4.0 |
| Comparative example 1 | 0 | 7.9 |
| Comparative example 2 | 10 | 4.9 |

As shown in Table 1-1 above, the EVOH resin compositions each containing a particular minute amount of the titanium compound in Examples 1-1 and 1-2 have the smaller ratio of the YI values, indicating that coloring change due to heating was suppressed and thus excellent long-run workability was achieved, as compared to the EVOH resin composition containing no titanium compound in Comparative Example 1-1 and the EVOH resin composition containing the titanium compound in an amount that exceeds a specific range in Comparative Example 1-2. Also in a multilayer structure having a layer made of the EVOH resin composition of Example 1-1 or 1-2, a suppression effect on coloring change and thus excellent long-run workability can be achieved.

<<Second Aspect>>

<Example 2-1>

Pellets of an EVOH resin having an ethylene structural unit content of 29 mol%, a saponification degree of 99.6 mol%, and a MFR of 4 g/10 min (at 210°C with a load of 2160 g) were used as the EVOH resin.

Additionally, magnesium oxide (available from FUJIFILM Wako Pure Chemical Corporation) was used as the alkaline earth metal compound, and titanium oxide (available from FUJIFILM Wako Pure Chemical Corporation) was used as the titanium compound.

A mixture was prepared by dry-blending the magnesium oxide in the amount of 10 ppm on a metal basis per mass of the EVOH resin composition and the titanium oxide in the amount of 0.1 ppm on a metal basis per mass of the EVOH resin composition with the pellets of the EVOH resin.

The mixture was fed to a twin-screw extruder (20 mm in diameter) equipped with a two-hole die, and a strand extruded and ejected under the following extrusion conditions was cooled and solidified on a conveyor belt. Next, the solidified strand was cut to produce pellets of the EVOH resin composition.

[Extrusion Conditions]

Extruder temperature setting (°C): C1/C2/C3/C4/C5/C6

=150/200/210/210/210/210

<Example 2-2>

Pellets of an EVOH resin composition were obtained in the same manner as in Example 2-1 except that the blending amount of the titanium oxide on a metal basis in Example 2-1 was changed to 1 ppm per mass of the EVOH resin composition.

<Comparative Example 2-1>

Pellets of an EVOH resin composition were obtained in the same manner as in Example 2-1 except that the titanium oxide in Example 2-1 was not used.

<Comparative Example 2-2>

Pellets of an EVOH resin composition were obtained in the same manner as in Example 2-1 except that the blending amount of the titanium oxide on a metal basis in Example 2-1 was changed to 10 ppm per mass of the EVOH resin composition.

The pellets of the EVOH resin composition obtained in Examples 2-1 and 2-2 and Comparative Examples 2-1 and 2-2 were evaluated for long-run workability as described below. The results are listed in Table 2-1 below.

[Long-Run Workability Evaluation]

The pellets of the EVOH resin composition thus obtained were pulverized into a 1 to 5 mm square by a pulverizer (SKR16-240 available from Sometani Sangyo Company Limited.) at 650 rpm.

The pulverized pellets thus obtained was fully filled in a cylinder with an inner diameter of 32 mm and a height of 30 mm, and a YI value was measured using a spectrocolorimeter SE6000 (available from Nippon Denshoku Industries Co., Ltd.).

Furthermore, the YI value was measured in the same manner for the pulverized pellets subjected to a heating process in an oven at 150°C for 5 hours.

Thereafter, the ratio of the YI value after heating to the YI value before heating was calculated.

A larger ratio of the YI value after heating to the YI value before heating indicates that the EVOH resin composition has changed in color to be yellowish after the heating.

Table 2-1

| | Amount of alkaline earth metal compound on metal basis (ppm) | Amount of titanium compound on metal basis (ppm) | Amount of alkaline earth metal compound on metal basis/ Amount of titanium compound on metal basis | Long-run workability evaluation |
|---|---|---|---|---|
| | | | | Ratio of YI values (after heating/before heating) |
| Example 2-1 | 10 | 0.1 | 100 | 2.4 |
| Example 2-2 | 10 | 1 | 10 | 3.1 |
| Comparative example 2-1 | 10 | 0 | - | 3.2 |
| Comparative example 2-2 | 10 | 10 | 1 | 3.4 |

As shown in Table 2-1 above, the EVOH resin compositions each containing a particular minute amount of the titanium compound in Examples 2-1 and 2-2 have the smaller ratio of the YI values, indicating that coloring due to heating was suppressed and thus excellent long-run workability was achieved, as compared to the EVOH resin composition containing no titanium compound in Comparative Example 2-1 and the EVOH resin composition containing the titanium compound in an amount that exceeds a specific range in Comparative Example 2-2.

Note that there is a difference of only 0.1 between the ratios of the YI values of Example 2-2 and Comparative Example 2-1, but this difference is significant because it results in a huge difference in a yield on actual production floors. Also in a multilayer structure having a layer made of the EVOH resin composition of Example 2-1 or 2-2, a suppression effect on coloring change and thus excellent long-run workability can be achieved.

<<Third Aspect>>

<Example 3-1>

Pellets of an EVOH resin having an ethylene structural unit content of 29 mol%, a saponification degree of 99.6 mol%, and a MFR of 4 g/10 min (at 210°C with a load of 2160 g) were used as the EVOH resin.

Additionally, sodium acetate (available from FUJIFILM Wako Pure Chemical Corporation) was used as the alkali metal compound, and titanium oxide (available from FUJIFILM Wako Pure Chemical Corporation) was used as the titanium compound.

A mixture was prepared by dry-blending the sodium acetate in the amount of 200 ppm on a metal basis per mass of the EVOH resin composition and the titanium oxide in the amount of 0.1 ppm on a metal basis per mass of the EVOH resin composition with the pellets of the EVOH resin.

The mixture was fed to a twin-screw extruder (20 mm in diameter) equipped with a two-hole die, and a strand extruded and ejected under the following extrusion conditions was cooled and solidified on a conveyor belt. Next, the solidified strand was cut to produce pellets of the EVOH resin composition.

[Extrusion Conditions]

Extruder temperature setting (°C): C1/C2/C3/C4/C5/C6

=150/200/210/210/210/210

<Example 3-2>

Pellets of an EVOH resin composition were obtained in the same manner as in Example 3-1 except that the blending amount of the titanium oxide on a metal basis in Example 3-1 was changed to 1 ppm per mass of the EVOH resin composition.

<Comparative Example 3-1>

Pellets of an EVOH resin composition were obtained in the same manner as in Example 3-1 except that the titanium oxide in Example 3-1 was not used.

<Comparative Example 3-2>

Pellets of an EVOH resin composition were obtained in the same manner as in Example 3-1 except that the blending amount of the titanium oxide on a metal basis in Example 3-1 was changed to 10 ppm per mass of the EVOH resin composition.

The pellets of the EVOH resin composition obtained in Examples 3-1 and 3-2 and Comparative Examples 3-1 and 3-2 were evaluated for long-run workability as described below. The results are listed in Table 3-1 below.

[Long-Run Workability Evaluation]

The pellets of the EVOH resin composition thus obtained were pulverized into a 1 to 5 mm square by a pulverizer (SKR16-240 available from Sometani Sangyo Company Limited.) at 650 rpm.

The pulverized pellets thus obtained was fully filled in a cylinder with an inner diameter of 32 mm and a height of 30 mm, and a YI value was measured using a spectrocolorimeter SE6000 (available from Nippon Denshoku Industries Co., Ltd.).

Furthermore, the YI value was measured in the same manner for the pulverized pellets subjected to a heating process in an oven at 150°C for 5 hours.

Thereafter, the ratio of the YI value after heating to the YI value before heating was calculated.

A larger ratio of the YI value after heating to the YI value before heating indicates that the EVOH resin composition has changed in color to be yellowish after the heating.

Table 3-1

| | Amount of alkali metal compound on metal basis (ppm) | Amount of titanium compound on metal basis (ppm) | Amount of alkali metal compound on metal basis/ Amount of titanium compound on metal basis | Long-run workability evaluation |
|---|---|---|---|---|
| | | | | Ratio of YI values (after heating/before heating) |
| Example 3-1 | 200 | 0.1 | 2000 | 3.1 |
| Example 3-2 | 200 | 1 | 200 | 3.5 |
| Comparative example 3-1 | 200 | 0 | - | 4.1 |
| Comparative example 3-2 | 200 | 10 | 20 | 4.0 |

As shown in Table 3-1 above, the EVOH resin compositions each containing a particular minute amount of the titanium compound in Examples 3-1 and 3-2 have the smaller ratio of the YI values, indicating that coloring due to heating was suppressed and thus excellent long-run workability was achieved, as compared to the EVOH resin composition containing no titanium compound in Comparative Example 3-1 and the EVOH resin composition containing the titanium compound in an amount that exceeds a specific range in Comparative Example 3-2. Also in a multilayer structure having a layer made of the EVOH resin composition of Example 3-1 or 3-2, a suppression effect on coloring change and thus excellent long-run workability can be achieved.

<<Fourth Aspect>>

<Example 4-1>

Pellets of an EVOH resin having an ethylene structural unit content of 29 mol%, a saponification degree of 99.6 mol%, and a MFR of 4 g/10 min (at 210°C with a load of 2160 g) were used as the EVOH resin.

Additionally, ethylene bis-stearamide (ALFLOW H50-FP available from NOF CORPORATION) was used as the lubricant, and titanium oxide (available from FUJIFILM Wako Pure Chemical Corporation) was used as the titanium compound.

A mixture was prepared by dry-blending the ethylene bis-stearamide in the amount of 180 ppm per mass of the EVOH resin composition and the titanium oxide in the amount of 0.1 ppm on a metal basis per mass of the EVOH resin composition with the pellets of the EVOH resin.

The mixture was fed to a twin-screw extruder (20 mm in diameter) equipped with a two-hole die, and a strand extruded and ejected under the following extrusion conditions was cooled and solidified on a conveyor belt. Next, the solidified strand was cut to produce pellets of the EVOH resin composition.

[Extrusion Conditions]

Extruder temperature setting (°C): C1/C2/C3/C4/C5/C6

=150/200/210/210/210/210

<Example 4-2>

Pellets of an EVOH resin composition were obtained in the same manner as in Example 4-1 except that the blending amount of the titanium oxide on a metal basis in Example 4-1 was changed to 1 ppm per mass of the EVOH resin composition.

<Comparative Example 4-1>

Pellets of an EVOH resin composition were obtained in the same manner as in Example 4-1 except that the titanium oxide in Example 4-1 was not used.

<Comparative Example 4-2>

Pellets of an EVOH resin composition were obtained in the same manner as in Example 4-1 except that the blending amount of the titanium oxide on a metal basis in Example 4-1 was changed to 10 ppm per mass of the EVOH resin composition.

The pellets of the EVOH resin composition obtained in Examples 4-1 and 4-2 and Comparative Examples 4-1 and 4-2 were evaluated for long-run workability as described below. The results are listed in Table 4-1 below.

[Long-Run Workability Evaluation]

The pellets of the EVOH resin composition thus obtained were pulverized into a 1 to 5 mm square by a pulverizer (SKR16-240 available from Sometani Sangyo Company Limited.) at 650 rpm.

The pulverized pellets thus obtained was fully filled in a cylinder with an inner diameter of 32 mm and a height of 30 mm, and a YI value was measured using a spectrocolorimeter SE6000 (available from Nippon Denshoku Industries Co., Ltd.).

Furthermore, the YI value was measured in the same manner for the pulverized pellets subjected to a heating process in an oven at 150°C for 5 hours.

Thereafter, the ratio of the YI value after heating to the YI value before heating was calculated.

A larger ratio of the YI value after heating to the YI value before heating indicates that the EVOH resin composition has changed in color to be yellowish after the heating.

Table 4-1

| | Lubricant content (ppm) | Amount of titanium compound on metal basis (ppm) | Lubricant content/ Amount of titanium compound on metal basis | Long-run workability evaluation |
|---|---|---|---|---|
| | | | | Ratio of YI values (after heating/before heating) |
| Example 4-1 | 180 | 0.1 | 1800 | 2.7 |
| Example 4-2 | 180 | 1 | 180 | 3.5 |
| Comparative example 4-1 | 180 | 0 | - | 4.0 |
| Comparative example 4-2 | 180 | 10 | 18 | 4.1 |

As shown in Table 4-1 above, the EVOH resin compositions each containing a particular minute amount of the titanium compound in Examples 4-1 and 4-2 have the smaller ratio of the YI values, indicating that coloring change due to heating was suppressed and thus excellent long-run workability was achieved, as compared to the EVOH resin composition containing no titanium compound in Comparative Example 4-1 and the EVOH resin composition containing the titanium compound in an amount that exceeds a specific range in Comparative Example 4-2. Also in a multilayer structure having a layer made of the EVOH resin composition of Example 4-1 or 4-2, a suppression effect on coloring change and thus excellent long-run workability can be achieved.

<<Fifth Aspect>>

<Example 5-1>

Pellets of an EVOH resin having an ethylene structural unit content of 29 mol%, a saponification degree of 99.6 mol%, and a MFR of 4 g/10 min (at 210°C with a load of 2160 g) were used as the EVOH resin.

Additionally, sorbic acid (available from FUJIFILM Wako Pure Chemical Corporation) was used as the compound having a conjugated polyene structure, and titanium oxide (available from FUJIFILM Wako Pure Chemical Corporation) was used as the titanium compound.

A mixture was prepared by dry-blending the sorbic acid in the amount of 100 ppm per mass of the EVOH resin composition and the titanium oxide in the amount of 0.1 ppm on a metal basis per mass of the EVOH resin composition with the pellets of the EVOH resin.

The mixture was fed to a twin-screw extruder (20 mm in diameter) equipped with a two-hole die, and a strand extruded and ejected under the following extrusion conditions was cooled and solidified on a conveyor belt. Next, the solidified strand was cut to produce pellets of the EVOH resin composition.

[Extrusion Conditions]

Extruder temperature setting (°C): C1/C2/C3/C4/C5/C6

=150/200/210/210/210/210

<Example 5-2>

Pellets of an EVOH resin composition were obtained in the same manner as in Example 5-1 except that the blending amount of the titanium oxide on a metal basis in Example 5-1 was changed to 1 ppm per mass of the EVOH resin composition.

<Comparative Example 5-1>

Pellets of an EVOH resin composition were obtained in the same manner as in Example 5-1 except that the titanium oxide in Example 5-1 was not used.

<Comparative Example 5-2>

Pellets of an EVOH resin composition were obtained in the same manner as in Example 5-1 except that the blending amount of the titanium oxide on a metal basis in Example 5-1 was changed to 10 ppm per mass of the EVOH resin composition.

<Example 5-3>

Pellets of an EVOH resin having an ethylene structural unit content of 29 mol%, a saponification degree of 99.6 mol%, and a MFR of 4 g/10 min (at 210°C with a load of 2160 g) were used as the EVOH resin.

Additionally, sorbic acid (available from FUJIFILM Wako Pure Chemical Corporation) was used as the compound having a conjugated polyene structure, and titanium oxide (available from FUJIFILM Wako Pure Chemical Corporation) was used as the titanium compound.

A mixture was prepared by dry-blending the sorbic acid in the amount of 100 ppm per mass of the EVOH resin composition and the titanium oxide in the amount of 0.1 ppm on a metal basis per mass of the EVOH resin composition with the pellets of the EVOH resin.

The mixture was fed to a twin-screw extruder (20 mm in diameter) equipped with a two-hole die, and a strand extruded and ejected under the following extrusion conditions was cooled and solidified on a conveyor belt. Next, the solidified strand was cut to produce pellets of the EVOH resin composition.

[Extrusion Conditions]

Extruder temperature setting (°C): C1/C2/C3/C4/C5/C6

=150/200/210/210/210/210

<Comparative Example 5-3>

Pellets of an EVOH resin composition were obtained in the same manner as in Example 5-3 except that the sorbic acid in Example 5-3 was not used.

The pellets of the EVOH resin composition obtained in Examples 5-1 and 5-2 and Comparative Examples 5-1 and 5-2 were evaluated for long-run workability as described below. The results are listed in Table 5-1 below. Additionally, the pellets of the EVOH resin composition obtained in Example 5-3 and Comparative Example 5-3 were evaluated for coloring suppression as described below. The results are listed in Table 5-2 below.

[Long-Run Workability Evaluation]

The pellets of the EVOH resin composition thus obtained were pulverized into a 1 to 5 mm square by a pulverizer (SKR16-240 available from Sometani Sangyo Company Limited.) at 650 rpm.

The pulverized pellets thus obtained was fully filled in a cylinder with an inner diameter of 32 mm and a height of 30 mm, and a YI value was measured using a spectrocolorimeter SE6000 (available from Nippon Denshoku Industries Co., Ltd.).

Furthermore, the YI value was measured in the same manner for the pulverized pellets subjected to a heating process in an oven at 150°C for 5 hours.

Thereafter, the ratio of the YI value after heating to the YI value before heating was calculated.

A larger ratio of the YI value after heating to the YI value before heating indicates that the EVOH resin composition has changed in color to be yellowish after the heating.

[Coloring Suppression Evaluation]

The pellets of the EVOH resin composition obtained in Example 5-3 and Comparative Example 5-3 were pulverized into a 1 to 5 mm square by a pulverizer (SKR16-240 available from Sometani Sangyo Company Limited.) at 650 rpm.

The above pulverized pellets were each used as a sample and evaluated for coloring using a visual analyzer IRIS VA400 (available from Alpha MOS) based on a ratio ("2984"/"3273"), which is a ratio of the area of a colored region having a color number "2984" (R:41, G:132, B:0) to the area of a colored region having a color number "3273" (R:50, G:115, B:0). The color number "2984" represents a dark yellow color and the color number "3273" represents a light yellow color. A larger value of this ratio indicates that the sample has changed in color to be yellowish.

Table 5-1

| | Amount of compound having conjugated polyene structure (ppm) | Amount of titanium compound on metal basis (ppm) | Amount of compound having conjugated polyene structure/ Amount of titanium compound on metal basis | Long-run workability evaluation |
| --- | --- | --- | --- | --- |
| | | | | Ratio of YI values (after heating/before heating) |
| Example 5-1 | 100 | 0.1 | 1000 | 4.0 |
| Example 5-2 | 100 | 1 | 100 | 4.9 |
| Comparative example 5-1 | 100 | 0 | - | 5.0 |
| Comparative example 5-2 | 100 | 10 | 10 | 5.7 |

Table 5-2

| | Amount of compound having conjugated polyene structure (ppm) | Amount of titanium compound on metal basis (ppm) | Amount of compound having conjugated polyene structure/ Amount of titanium compound on metal basis | Coloring suppression evaluation |
| --- | --- | --- | --- | --- |
| | | | | "2984"/"3273" |
| Example 5-3 | 100 | 0.1 | 1000 | 4.8 |
| Comparative example 5-3 | 0 | 0.1 | - | 5.1 |

As shown in Table 5-1 above, the EVOH resin compositions each containing a particular minute amount of the titanium compound in Examples 5-1 and 5-2 have the smaller ratio of the YI values, indicating that coloring change due to heating was suppressed and thus excellent long-run workability was achieved, as compared to the EVOH resin composition containing no titanium compound in Comparative Example 5-1 and the EVOH resin composition containing the titanium compound in an amount that exceeds a specific range in Comparative Example 5-2.

Note that there is a difference of only 0.1 between the ratios of the YI values of Example 5-2 and Comparative Example 5-1, but this difference is significant because it results in a huge difference in a yield on actual production floors.

Furthermore, as shown in Table 5-2 above, the EVOH resin composition in Example 5-3 has the smaller value of "2984"/"3273", indicating that coloring was suppressed, as compared to the EVOH resin composition in Comparative Example 5-3.

Also in a multilayer structure having a layer made of any EVOH resin composition in Examples 5-1 to 5-3, a suppression effect on coloring change and thus excellent long-run workability can be achieved.

<<Sixth Aspect>>

<Example 6-1>

Pellets of an EVOH resin having an ethylene structural unit content of 29 mol%, a saponification degree of 99.6 mol%, and a MFR of 4 g/10 min (at 210°C with a load of 2160 g) were used as the EVOH resin.

Additionally, boric acid (available from FUJIFILM Wako Pure Chemical Corporation) was used as the boron compound, and titanium oxide (available from FUJIFILM Wako Pure Chemical Corporation) was used as the titanium compound.

A mixture was prepared by dry-blending the boric acid in the amount of 100 ppm in terms of boron equivalents per mass of the EVOH resin composition and the titanium oxide in the amount of 0.1 ppm on a metal basis per mass of the EVOH resin composition with the pellets of the EVOH resin.

The mixture was fed to a twin-screw extruder (20 mm in diameter) equipped with a two-hole die, and a strand extruded and ejected under the following extrusion conditions was cooled and solidified on a conveyor belt. Next, the solidified strand was cut to produce pellets of the EVOH resin composition.

[Extrusion Conditions]

Extruder temperature setting (°C): C1/C2/C3/C4/C5/C6

=150/200/210/210/210/210

<Example 6-2>

Pellets of an EVOH resin composition were obtained in the same manner as in Example 6-1 except that the blending amount of the titanium oxide on a metal basis in Example 6-1 was changed to 1 ppm per mass of the EVOH resin composition.

<Comparative Example 6-1>

Pellets of an EVOH resin composition were obtained in the same manner as in Example 6-1 except that the titanium oxide in Example 6-1 was not used.

<Comparative Example 6-2>

Pellets of an EVOH resin composition were obtained in the same manner as in Example 6-1 except that the blending amount of the titanium oxide on a metal basis in Example 6-1 was changed to 10 ppm per mass of the EVOH resin composition.

<Example 6-3>

Pellets of an EVOH resin having an ethylene structural unit content of 29 mol%, a saponification degree of 99.6 mol%, and a MFR of 4 g/10 min (at 210°C with a load of 2160 g) were used as the EVOH resin.

Additionally, boric acid (available from FUJIFILM Wako Pure Chemical Corporation) was used as the boron compound, and titanium oxide (available from FUJIFILM Wako Pure Chemical Corporation) was used as the titanium compound.

A mixture was prepared by dry-blending the boric acid in the amount of 100 ppm in terms of boron equivalents per mass of the EVOH resin composition and the titanium oxide in the amount of 0.1 ppm on a metal basis per mass of the EVOH resin composition with the pellets of the EVOH resin.

The mixture was fed to a twin-screw extruder (20 mm in diameter) equipped with a two-hole die, and a strand extruded and ejected under the following extrusion conditions was cooled and solidified on a conveyor belt. Next, the solidified strand was cut to produce pellets of the EVOH resin composition.

[Extrusion Conditions]

Extruder temperature setting (°C): C1/C2/C3/C4/C5/C6

=150/200/210/210/210/210

<Comparative Example 6-3>

Pellets of an EVOH resin composition were obtained in the same manner as in Example 6-3 except that the boric acid in Example 6-3 was not used.

The pellets of the EVOH resin composition obtained in Examples 6-1 and 6-2 and Comparative Examples 6-1 and 6-2 were evaluated for long-run workability as described below. The results are listed in Table 6-1 below. Additionally, the pellets of the EVOH resin composition obtained in Example 6-3 and Comparative Example 6-3 were evaluated for coloring suppression as described below. The results are listed in Table 6-2 below.

[Long-Run Workability Evaluation]

The pellets of the EVOH resin composition thus obtained were pulverized into a 1 to 5 mm square by a pulverizer (SKR16-240 available from Sometani Sangyo Company Limited.) at 650 rpm.

The pulverized pellets thus obtained was fully filled in a cylinder with an inner diameter of 32 mm and a height of 30 mm, and a YI value was measured using a spectrocolorimeter SE6000 (available from Nippon Denshoku Industries Co., Ltd.).

Furthermore, the YI value was measured in the same manner for the pulverized pellets subjected to a heating process in an oven at 150°C for 5 hours.

Thereafter, the ratio of the YI value after heating to the YI value before heating was calculated.

A larger ratio of the YI value after heating to the YI value before heating indicates that the EVOH resin composition has changed in color to be yellowish after the heating.

[Coloring Suppression Evaluation]

The pellets of the EVOH resin composition obtained in Example 6-3 and Comparative Example 6-3 were pulverized into a 1 to 5 mm square by a pulverizer (SKR16-240 available from Sometani Sangyo Company Limited.) at 650 rpm.

The above pulverized pellets were each used as a sample and the maximum color number was measured using a visual analyzer IRIS VA400 (available from Alpha MOS). The smaller color number represents a darker yellow color, while the larger number represents a lighter yellow color. That is, the smaller color number indicates that the sample has changed in color to be yellowish.

Table 6-1

| | Amount of boron compound in terms of boron equivalents (ppm) | Amount of titanium compound on metal basis (ppm) | Amount of boron compound in terms of boron equivalents/ Amount of titanium compound on metal basis | Long-run workability evaluation |
|---|---|---|---|---|
| | | | | Ratio of YI values (after heating/before heating) |
| Example 6-1 | 100 | 0.1 | 1000 | 5.3 |
| Example 6-2 | 100 | 1 | 100 | 4.8 |
| Comparative example 6-1 | 100 | 0 | - | 6.0 |
| Comparative example 6-2 | 100 | 10 | 10 | 5.9 |

Table 6-2

| | Amount of boron compound in terms of boron equivalents (ppm) | Amount of titanium compound on metal basis (ppm) | Amount of boron compound in terms of boron equivalents/ Amount of titanium compound on metal basis | Coloring suppression evaluation |
|---|---|---|---|---|
| | | | | Maximum color number |
| Example 6-3 | 100 | 0.1 | 1000 | 3530 |
| Comparative example 6-3 | 0 | 0.1 | - | 3274 |

As shown in Table 6-1 above, the EVOH resin compositions each containing the boron compound and a particular minute amount of the titanium compound in Examples 6-1 and 6-2 have the smaller ratio of the YI values, indicating that coloring change due to heating was suppressed and thus excellent long-run workability was achieved, as compared to the EVOH resin composition containing no titanium compound in Comparative Example 6-1 and the EVOH resin composition containing the titanium compound in an amount that exceeds a specific range in Comparative Example 6-2.

Furthermore, as shown in Table 6-2 above, the EVOH resin composition in Example 6-3 has the larger value of the maximum color number, indicating that coloring was suppressed, as compared to the EVOH resin composition in Comparative Example 6-3.

Also in a multilayer structure having a layer made of any EVOH resin composition in Examples 6-1 to 6-3, a suppression effect on coloring change and thus excellent long-run workability can be achieved.

<<Seventh Aspect>>

<Example 7-1>

An EVOH resin having an ethylene structural unit content of 29 mol%, a saponification degree of 99.6 mol%, and a MFR of 4 g/10 min (at 210°C with a load of 2160 g) was used as the EVOH resin.

Additionally, pentaerythritol tetrakis[3-(3,5-di-tert-butyl-4-hydroxyphenyl)propionate] (Irganox 1010 available from BASF Japan Ltd.) was used as the antioxidant, and titanium oxide (available from FUJIFILM Wako Pure Chemical Corporation) was used as the titanium compound.

A mixture was prepared by dry-blending the pentaerythritol tetrakis[3-(3,5-di-tert-butyl-4-hydroxyphenyl)propionate] in the amount of 3000 ppm per mass of the EVOH resin composition and the titanium oxide in the amount of 0.1 ppm on a metal basis relative to the amount of the EVOH resin composition with the pellets of the EVOH resin.

The mixture was fed to a twin-screw extruder (20 mm in diameter) equipped with a two-hole die, and a strand extruded and ejected under the following extrusion conditions was cooled and solidified on a conveyor belt. Next, the solidified strand was cut to produce pellets of the EVOH resin composition.

[Extrusion Conditions]

Extruder temperature setting (°C): C1/C2/C3/C4/C5/C6

=150/200/210/210/210/210

<Example 7-2>

Pellets of an EVOH resin composition were obtained in the same manner as in Example 7-1 except that the blending amount of the titanium oxide on a metal basis in Example 7-1 was changed to 1 ppm per mass of the EVOH resin composition.

<Comparative Example 7-1>

Pellets of an EVOH resin composition were obtained in the same manner as in Example 7-1 except that the titanium oxide in Example 7-1 was not used.

<Comparative Example 7-2>

Pellets of an EVOH resin composition were obtained in the same manner as in Example 7-1 except that the blending amount of the titanium oxide on a metal basis in Example 7-1 was changed to 10 ppm per mass of the EVOH resin composition.
The pellets of the EVOH resin composition obtained in Examples 7-1 and 7-2 and Comparative Examples 7-1 and 7-2 were evaluated for long-run workability as described below. The results are listed in Table 7-1 below.

[Long-Run Workability Evaluation]

The pellets of the EVOH resin composition thus obtained were pulverized into a 1 to 5 mm square by a pulverizer (SKR16-240 available from Sometani Sangyo Company Limited.) at 650 rpm.
The pulverized pellets thus obtained was fully filled in a cylinder with an inner diameter of 32 mm and a height of 30 mm, and a YI value was measured using a spectrocolorimeter SE6000 (available from Nippon Denshoku Industries Co., Ltd.).
Furthermore, the YI value was measured in the same manner for the pulverized pellets subjected to a heating process in an oven at 150°C for 5 hours.
Thereafter, the ratio of the YI value after heating to the YI value before heating was calculated.
A larger ratio of the YI value after heating to the YI value before heating indicates that the EVOH resin composition has changed in color to be yellowish after the heating.

Table 7-1

|  | Antioxidant content (ppm) | Amount of titanium compound on metal basis (ppm) | Antioxidant content/ Amount of titanium compound on metal basis | Long-run workability evaluation |
|---|---|---|---|---|
|  |  |  |  | Ratio of YI values (after heating/before heating) |
| Example 7-1 | 3000 | 0.1 | 30000 | 3.6 |
| Example 7-2 | 3000 | 1 | 3000 | 3.9 |
| Comparative example 7-1 | 3000 | 0 | - | 4.2 |
| Comparative example 7-2 | 3000 | 10 | 300 | 4.4 |

As shown in Table 7-1 above, the EVOH resin compositions each containing the antioxidant and a particular minute amount of the titanium compound in Examples 7-1 and 7-2 have the smaller ratio of the YI values, indicating that coloring change due to heating was suppressed and thus excellent long-run workability was achieved, as compared to the EVOH resin composition containing no titanium compound in Comparative Example 7-1 and the EVOH resin composition containing the titanium compound in an amount that exceeds a specific range in Comparative Example 7-2. Also in a multilayer structure having a layer made of the EVOH resin composition of Example 7-1 or 7-2, a suppression effect on coloring change and thus excellent long-run workability can be achieved. Furthermore, a multilayer pipe having a layer made of the EVOH resin composition has excellent barrier properties, and achieves a prevention effect on a crack due to oxidative degradation.

<<Eighth Aspect>>

<Example 8-1>

Pellets of an EVOH resin having an ethylene structural unit content of 29 mol%, a saponification degree of 99.6 mol%, and a MFR of 4 g/10 min (at 210°C with a load of 2160 g) were used as the EVOH resin.

Additionally, trans-cinnamic acid (available from Tokyo Chemical Industry Co., Ltd.) was used as the styrene derivative, and titanium oxide (available from FUJIFILM Wako Pure Chemical Corporation) was used as the titanium compound.

A mixture was prepared by dry-blending the styrene derivative in the amount of 500 ppm per mass of the EVOH resin composition and the titanium oxide in the amount of 0.1 ppm on a metal basis per mass of the EVOH resin composition with the pellets of the EVOH resin. Then, the mixture was fed to a twin-screw extruder (20 mm in diameter) equipped with a two-hole die, and a strand extruded and ejected under the following extrusion conditions was cooled in a water tank and solidified. Next, the air was blown to the solidified strand to remove water droplets on the surface of the strand, and thereafter the strand was cut into pellets of the EVOH resin composition.

[Extrusion Conditions]

$$\text{Extruder temperature setting (°C): C1/C2/C3/C4/C5/C6}$$

$$=150/200/210/210/210/210$$

<Example 8-2>

Pellets of an EVOH resin composition were obtained in the same manner as in Example 8-1 except that the blending amount of the titanium oxide on a metal basis in Example 8-1 was changed to 1 ppm per mass of the EVOH resin composition.

<Comparative Example 8-1>

Pellets of an EVOH resin composition were obtained in the same manner as in Example 8-1 except that the titanium oxide in Example 8-1 was not used.

<Comparative Example 8-2>

Pellets of an EVOH resin composition were obtained in the same manner as in Example 8-1 except that the blending amount of the titanium oxide on a metal basis in Example 8-1 was changed to 10 ppm per mass of the EVOH resin composition.

<Example 8-3>

Pellets of an EVOH resin having an ethylene structural unit content of 29 mol%, a saponification degree of 99.6 mol%, and a MFR of 4 g/10 min (at 210°C with a load of 2160 g) were used as the EVOH resin.

Additionally, trans-cinnamic acid (available from Tokyo Chemical Industry Co., Ltd.) was used as the styrene derivative, and titanium oxide (available from FUJIFILM Wako Pure Chemical Corporation) was used as the titanium compound.

A mixture was prepared by dry-blending the styrene derivative in the amount of 500 ppm per mass of the EVOH resin composition and the titanium oxide in the amount of 0.1 ppm on a metal basis per mass of the EVOH resin composition with the pellets of the EVOH resin. Then, the mixture was fed to a twin-screw extruder (20 mm in diameter) equipped with a two-hole die, and a strand extruded and ejected under the following extrusion conditions was cooled in a water tank and solidified. Next, the air was blown to the solidified strand to remove water droplets on the surface of the strand, and thereafter the strand was cut into pellets of the EVOH resin composition.

[Extrusion Conditions]

Extruder temperature setting (°C): C1/C2/C3/C4/C5/C6

=150/200/210/210/210/210

<Comparative Example 8-3>

Pellets of an EVOH resin composition were obtained in the same manner as in Example 8-3 except that the trans-cinnamic acid in Example 8-3 was not used.

The pellets of the EVOH resin composition obtained in Examples 8-1 and 8-2 and Comparative Examples 8-1 and 8-2 were evaluated for coloring as described below. The results are listed in Table 8-1 below. Additionally, the pellets of the EVOH resin composition obtained in Example 8-3 and Comparative Example 8-3 were evaluated for coloring suppression as described below. The results are listed in Table 8-2 below.

[Long-Run Workability Evaluation]

The pellets of the EVOH resin composition thus obtained were pulverized into a 1 to 5 mm square by a pulverizer (SKR16-240 available from Sometani Sangyo Company Limited.) at 650 rpm.

The pulverized pellets thus obtained was fully filled in a cylinder with an inner diameter of 32 mm and a height of 30 mm, and a YI value was measured using a spectrocolorimeter SE6000 (available from Nippon Denshoku Industries Co., Ltd.).

Furthermore, the YI value was measured in the same manner for the pulverized pellets subjected to a heating process in an oven at 150°C for 5 hours.

Thereafter, the ratio of the YI value after heating to the YI value before heating was calculated.

A larger ratio of the YI value after heating to the YI value before heating indicates that the EVOH resin composition has changed in color to be yellowish after the heating.

[Coloring Suppression Evaluation]

The pellets of the EVOH resin composition obtained in Example 8-3 and Comparative Example 8-3 were pulverized into a 1 to 5 mm square by a pulverizer (SKR16-240 available from Sometani Sangyo Company Limited.) at 650 rpm.

The above pulverized pellets were each used as a sample and evaluated for coloring using a visual analyzer IRIS VA400 (available from Alpha MOS) based on a ratio ("2984"/"3273"), which is a ratio of the area of a colored region having a color number "2984" (R:41, G:132, B:0) to the area of a colored region having a color number "3273" (R:50, G:115, B:0). The color number "2984" represents a dark yellow color and the color number "3273" represents a light yellow color. A larger value of this ratio indicates that the sample has changed in color to be yellowish.

Table 8-1

| | Amount of styrene derivative (ppm) | Amount of titanium compound on metal basis (ppm) | Amount of styrene derivative/ Amount of titanium compound on metal basis | Long-run workability evaluation |
| --- | --- | --- | --- | --- |
| | | | | Ratio of YI values (after heating/before heating) |
| Example 8-1 | 500 | 0.1 | 5000 | 5.3 |
| Example 8-2 | 500 | 1 | 500 | 6.0 |
| Comparative example 8-1 | 500 | 0 | - | 6.7 |
| Comparative example 8-2 | 500 | 10 | 50 | 6.4 |

Table 8-2

| | Amount of styrene derivative (ppm) | Amount of titanium compound on metal basis (ppm) | Amount of styrene derivative/ Amount of titanium compound on metal basis | Coloring suppression evaluation "2984"/"3273" |
|---|---|---|---|---|
| Example 8-3 | 500 | 0.1 | 5000 | 4.0 |
| Comparative example 8-3 | 0 | 0.1 | - | 6.3 |

As shown in Table 8-1 above, the EVOH resin compositions each containing the styrene derivative and a particular minute amount of the titanium compound in Examples 8-1 and 8-2 have the smaller ratio of the YI values, indicating that coloring due to heating was suppressed and thus excellent long-run workability was achieved, as compared to the EVOH resin composition containing no titanium compound in Comparative Example 8-1 and the EVOH resin composition containing the titanium compound in an amount that exceeds a specific range in Comparative Example 8-2.

Furthermore, as shown in Table 8-2 above, the EVOH resin composition in Example 8-3 has the smaller value of "2984"/"3273", indicating that coloring was suppressed, as compared to the EVOH resin composition in Comparative Example 8-3.

Also in a multilayer structure having a layer made of any EVOH resin composition in Examples 8-1 to 8-3, coloring due to thermal degradation is suppressed, thereby achieving excellent thermal stability.

<<Ninth Aspect>>

<Example 9-1>

Pellets of an EVOH resin having an ethylene structural unit content of 29 mol%, a saponification degree of 99.6 mol%, and a MFR of 4 g/10 min (at 210°C with a load of 2160 g) were used as the EVOH resin.

Additionally, titanium oxide (available from FUJIFILM Wako Pure Chemical Corporation) was used as the titanium compound.

An EVOH resin composition was prepared by dry-blending the titanium oxide in the amount of 0.1 ppm on a metal basis per mass of the EVOH resin composition with the pellets of the EVOH resin, and thereafter spraying water with a sprayer to adjust the water content to 0.16%.

The EVOH resin composition was fed to a twin-screw extruder (20 mm in diameter) equipped with a two-hole die, and a strand extruded and ejected under the following extrusion conditions was cooled and solidified on a conveyor belt. Next, the solidified strand was cut to produce pellets of the EVOH resin composition.

[Extrusion Conditions]

Extruder temperature setting (°C): C1/C2/C3/C4/C5/C6

=150/200/210/210/210/210

<Example 9-2>

Pellets of an EVOH resin composition were obtained in the same manner as in Example 9-1 except that the blending amount of the titanium oxide on a metal basis in Example 9-1 was changed to 1 ppm per mass of the EVOH resin composition.

<Comparative Example 9-1>

Pellets of an EVOH resin composition were obtained in the same manner as in Example 9-1 except that the titanium oxide in Example 9-1 was not used.

<Comparative Example 9-2>

Pellets of an EVOH resin composition were obtained in the same manner as in Example 9-1 except that the blending amount of the titanium oxide on a metal basis in Example 9-1 was changed to 10 ppm per mass of the EVOH resin composition.

The pellets of the EVOH resin composition obtained in Examples 9-1 and 9-2 and Comparative Examples 9-1 and 9-2 were evaluated for long-run workability as described below. The results are listed in Table 9-1 below.

[Long-Run Workability Evaluation]

The pellets of the EVOH resin composition thus obtained were pulverized into a 1 to 5 mm square by a pulverizer (SKR16-240 available from Sometani Sangyo Company Limited.) at 650 rpm.

The pulverized pellets thus obtained was fully filled in a cylinder with an inner diameter of 32 mm and a height of 30 mm, and a YI value was measured using a spectrocolorimeter SE6000 (available from Nippon Denshoku Industries Co., Ltd.).

Furthermore, the YI value was measured in the same manner for the pulverized pellets subjected to a heating process in an oven at 150°C for 5 hours.

Thereafter, the ratio of the YI value after heating to the YI value before heating was calculated.

A larger ratio of the YI value after heating to the YI value before heating indicates that the EVOH resin composition has changed in color to be yellowish after the heating.

Table 9-1

| | Water content (%) | Amount of titanium compound on metal basis (ppm) | Long-run workability evaluation |
|---|---|---|---|
| | | | Ratio of YI values (after heating/before heating) |
| Example 9-1 | 0.16 | 0.1 | 3.2 |
| Example 9-2 | 0.16 | 1 | 4.5 |
| Comparative example 9-1 | 0.16 | 0 | 4.8 |
| Comparative example 9-2 | 0.16 | 10 | 4.8 |

As shown in Table 9-1 above, the EVOH resin compositions each containing a particular minute amount of the titanium compound in Examples 9-1 and 9-2 have the smaller ratio of the YI values, indicating that coloring change due to heating was suppressed and thus excellent long-run workability was achieved, as compared to the EVOH resin composition containing no titanium compound in Comparative Example 9-1 and the EVOH resin composition containing the titanium compound in an amount that exceeds a specific range in Comparative Example 9-2. Also in a multilayer structure having a layer made of the EVOH resin composition of Example 9-1 or 9-2, a suppression effect on coloring change and thus excellent long-run workability can be achieved.

Note that Comparative Examples in the above first to ninth aspects are comparative examples of the respective aspects, and not necessarily comparative examples of the present disclosure.

While specific forms of the embodiments of the present disclosure have been shown in the above examples, the examples are merely illustrative but not limitative. It is contemplated that various modifications apparent to those skilled in the art could be made within the scope of the present disclosure.

INDUSTRIAL APPLICABILITY

Since the present EVOH resin composition allows suppression of coloring change due to thermal degradation during melt molding and is excellent in long-run workability, it is useful for various packaging materials for various foods, condiments such as mayonnaise and dressing, fermented foods such as miso, fat and oil foods such as salad oil, beverages, cosmetics, and pharmaceutical products.

**Claims**

1. An ethylene-vinyl alcohol copolymer composition comprising an ethylene-vinyl alcohol copolymer and a titanium compound, wherein an ethylene structural unit content of the ethylene-vinyl alcohol copolymer is 20 to 60 mol%, and the amount of the titanium compound on a metal basis is 0.001 ppm or more and less than 5 ppm per mass of the ethylene-vinyl alcohol copolymer composition.

2. The ethylene-vinyl alcohol copolymer composition according to claim 1, further comprising at least one selected from the group consisting of an alkaline earth metal compound, an alkali metal compound, a lubricant, a compound having a conjugated polyene structure, a boron compound, an antioxidant, and a styrene derivative.

3. The ethylene-vinyl alcohol copolymer composition according to claim 1, wherein the ethylene-vinyl alcohol copolymer composition has a water content of 1% by mass or less.

4. The ethylene-vinyl alcohol copolymer composition according to claim 2, wherein the amount of the alkaline earth metal compound on a metal basis is 0.1 to 500 ppm per mass of the ethylene-vinyl alcohol copolymer composition.

5. The ethylene-vinyl alcohol copolymer composition according to claim 2, wherein the amount of the alkali metal compound on a metal basis is 1 to 1000 ppm per mass of the ethylene-vinyl alcohol copolymer composition.

6. The ethylene-vinyl alcohol copolymer composition according to claim 2, wherein the lubricant content is 500 ppm or less per mass of the ethylene-vinyl alcohol copolymer composition.

7. The ethylene-vinyl alcohol copolymer composition according to claim 2, wherein the amount of the compound having a conjugated polyene structure is 1 to 1000 ppm per mass of the ethylene-vinyl alcohol copolymer composition.

8. The ethylene-vinyl alcohol copolymer composition according to claim 2, wherein the amount of the boron compound in terms of boron equivalents is 5 to 400 ppm per mass of the ethylene-vinyl alcohol copolymer composition.

9. The ethylene-vinyl alcohol copolymer composition according to claim 2, wherein the antioxidant content is 1 to 30000 ppm per mass of the ethylene-vinyl alcohol copolymer composition.

10. The ethylene-vinyl alcohol copolymer composition according to claim 2, wherein the amount of the styrene derivative is 1 to 1000 ppm per mass of the ethylene-vinyl alcohol copolymer composition.

11. A method for producing the ethylene-vinyl alcohol copolymer composition according to any one of claims 1 to 10, comprising melt-mixing a raw material of the ethylene-vinyl alcohol copolymer composition.

12. Pellets comprising the ethylene-vinyl alcohol copolymer composition according to any one of claims 1 to 10.

13. A multilayer structure comprising at least one layer comprising the ethylene-vinyl alcohol copolymer composition according to any one of claims 1 to 10.

14. A method for producing the multilayer structure according to claim 13, comprising melt-molding a layer comprising the ethylene-vinyl alcohol copolymer composition.

<div align="center">

**INTERNATIONAL SEARCH REPORT**

</div>

| | International application No. |
|---|---|
| | **PCT/JP2023/013062** |

**A. CLASSIFICATION OF SUBJECT MATTER**

*C08L 23/08*(2006.01)i; *B32B 27/28*(2006.01)i; *C08K 3/11*(2018.01)i; *C08L 29/04*(2006.01)i
FI: C08L23/08; C08K3/11; B32B27/28 102; C08L29/04 S

According to International Patent Classification (IPC) or to both national classification and IPC

**B. FIELDS SEARCHED**

Minimum documentation searched (classification system followed by classification symbols)

C08L23/08; B32B27/28; C08K3/11; C08L29/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-163378 A (MITSUBISHI CHEMICAL HOLDINGS CORP.) 26 September 2019 (2019-09-26)<br>claim 1, paragraphs [0007], [0034], [0044]-[0045], [0054], [0070], [0081], [0083]-[0084], [0086], [0088], [0094]-[0095], examples 2, 3, table 1 | 1-6, 8, 9, 11-14 |
| Y | | 1-14 |
| Y | JP 9-87549 A (DAICEL CHEM. IND., LTD.) 31 March 1997 (1997-03-31)<br>paragraphs [0015]-[0017] | 1-14 |
| Y | JP 9-71620 A (KURARAY CO., LTD.) 18 March 1997 (1997-03-18)<br>paragraphs [0001], [0013], [0020], [0029], examples | 7 |
| Y | JP 2022-7785 A (KURARAY CO., LTD.) 13 January 2022 (2022-01-13)<br>claim 4, paragraphs [0055], [0175], table 13 | 10 |
| Y | JP 2020-105317 A (KURARAY CO., LTD.) 09 July 2020 (2020-07-09)<br>claim 1, paragraph [0033], table 1 | 10 |

☑ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/013062**

### C. DOCUMENTS CONSIDERED TO BE RELEVANT

| Category* | Citation of document, with indication, where appropriate, of the relevant passages | Relevant to claim No. |
|---|---|---|
| Y | WO 2018/116765 A1 (THE NIPPON SYNTHETIC CHEMICAL INDUSTRY CO., LTD.) 28 June 2018 (2018-06-28) <br> claim 1, paragraphs [0019], [0079], table 1 | 10 |
| Y | JP 6-155665 A (MITSUBISHI KASEI CORP.) 03 June 1994 (1994-06-03) <br> claim 1, paragraph [0001], examples | 1-14 |

Form PCT/ISA/210 (second sheet) (January 2015)

| INTERNATIONAL SEARCH REPORT Information on patent family members | | | | International application No. PCT/JP2023/013062 | |
|---|---|---|---|---|---|
| Patent document cited in search report | | | Publication date (day/month/year) | Patent family member(s) | Publication date (day/month/year) |
| JP | 2019-163378 | A | 26 September 2019 | (Family: none) | |
| JP | 9-87549 | A | 31 March 1997 | (Family: none) | |
| JP | 9-71620 | A | 18 March 1997 | US 5744547 A column 1, lines 8-14, column 2, lines 17-23, column 3, lines 48-52, column 5, lines 19-22, column 7, lines 18-22, examples EP 751153 A1 | |
| JP | 2022-7785 | A | 13 January 2022 | (Family: none) | |
| JP | 2020-105317 | A | 09 July 2020 | (Family: none) | |
| WO | 2018/116765 | A1 | 28 June 2018 | US 2019/0292359 A1 claim 1, paragraphs [0024], [0086], table 1 EP 3560994 A1 CN 109996843 A TW 201831533 A | |
| JP | 6-155665 | A | 03 June 1994 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013146961 A
- JP H11106592 A
- JP S63286459 A
- WO 2011125736 A
- JP 2014172928 A